# EUROPÄISCHE PATENTANMELDUNG

(11) **EP 4 389 577 A2**
(43) Veröffentlichungstag der Anmeldung: **26.06.2024**
(21) Anmeldenummer: 23020556.9
(22) Anmeldetag: 18.12.2023
(51) Int. Cl.: B62M 9/12, B62M 9/121

(54) **MEHRFACH-RITZELANORDNUNG UND BAUKASTENSYSTEM FÜR MEHRFACH-RITZELANORDNUNGEN**

(30) Priorität: 23.12.2022 DE 102022134676; 15.12.2023 DE 102023135307
(71) Anmelder: SRAM Deutschland GmbH, 97424 Schweinfurt (DE)
(72) Erfinder: Prinz, Alexander, 97437 Haßfurt (DE); Rohmer, Jakob, 97072 Würzburg (DE); Heigl, Sebastian, 97072 Würzburg (DE); Büchner, Sven, 97493 Bergheinfeld (DE); Vonend, Andreas, 97422 Schweinfurt (DE)

(57) **Zusammenfassung**

Offenbart wird eine Mehrfach-Ritzelanordnung (Ap) zur in Bezug auf eine Fahrrad-Hinterachse (Ar) drehmomentübertragenden Montage auf einer Fahrrad-Hinterrad-Antreibereinrichtung (Dd), sowie ein Baukastensystem zur Erzeugung von Mehrfach-Ritzelanordnungen (Ap).

Die Ritzelanordnung (Ap) umfasst eine inboardseitige Abschlussritzeleinrichtung (Pti), ein in einem Verbindungsbereich (Ca) der inboardseitigen Abschlussritzeleinrichtung (Pti) mit der inboardseitigen Abschlussritzeleinrichtung (Pti) verbindbares erstes Ritzelcluster (Sc1) und eine outboardseitige Abschlussritzeleinrichtung (Pto).

Das erste Ritzelcluster (Sc1) ist outboardseitig mittels einer rotatorischen Lagereinrichtung (Db) der Mehrfach-Ritzelanordnung (Ap) gegenüber der Antreibereinrichtung (Dd) drehbar gelagert.

## Beschreibung

### Gebiet der Erfindung

Die vorliegende Offenbarung betrifft eine Mehrfach-Ritzelanordnung nach dem Oberbegriff von Anspruch 1 sowie ein Baukastensystem zur Erzeugung von Mehrfach-Ritzelanordnungen nach dem Oberbegriff von Anspruch 18.

Gattungsgemäße Mehrfach-Ritzelanordnungen, in der Fahrradbranche und in der nachfolgenden Beschreibung synonym auch bezeichnet als Ritzelkassette oder Kassette, bilden am Fahrrad einen Bestandteil des Antriebsstrangs, welcher der Übertragung der Antriebskraft vom Kettenblatt am Fahrrad-Tretlager zum Hinterrad dient.

Sofern nicht ausdrücklich anders angegeben, entsprechen in der vorliegenden Offenbarung verwendete Orts- bzw. Richtungsangaben wie "links", "rechts", "vorne", "hinten", "oben", "unten" usw. der Perspektive des Fahrers eines Fahrrads. Entsprechendes gilt für branchenübliche Richtungsangaben wie "inboard" (links bzw. nach links bzw. in Richtung zu einem größeren Ritzel einer Ritzelkassette) und "outboard" (rechts bzw. nach rechts bzw. in Richtung zu einem kleineren Ritzel einer Ritzelkassette), welche sich auf Schaltvorgänge bzw. Richtungen oder Ritzelpositionen an einer Ritzelkassette eines Fahrrad-Hinterrads beziehen.

### Technischer Hintergrund

Ein Fahrrad ist üblicherweise mit einem Antriebsstrang ausgestattet, beispielsweise mit einem Ketten-Antriebsstrang. Derartige Fahrrad-Antriebsstränge dienen dazu, ein Antriebsdrehmoment von einem Fahrer auf ein hinteres Laufrad des Fahrrads zu übertragen, um das Fahrrad auf diese Weise anzutreiben. Ein solcher Fahrrad-Antriebsstrang kann zum Beispiel das Drehmoment von einer vorderen Kettenradanordnung über eine Kette auf ein hinteres Ritzel übertragen, etwa ein Ritzel einer Mehrgang-Ritzelkassette, um das hintere Laufrad anzutreiben.

Vordere Kettenradanordnungen für Fahrrad-Antriebsstränge können eines oder mehrere vordere Kettenräder aufweisen, die in der Branche auch als Kettenblätter bezeichnet werden.

Die hinteren Kettenräder am Fahrrad werden üblicherweise als Ritzel bezeichnet. Eine Mehrzahl von hinteren Kettenrädern oder Ritzeln kann als Kassette, Ritzelkassette oder Ritzelpaket bezeichnet werden. Eine solche Ritzelkassette ist typischerweise so konfiguriert, dass sie an einem Freilaufteil eines hinteren Laufrades befestigt werden kann. Eine Ritzelkassette kann hierzu an einem Freilaufkörper eines hinteren Laufrad beispielsweise mit Hilfe einer Mehrfach-Nutverbindung bzw. eines Mitnahmeprofils und/oder mit Hilfe einer Gewindeverbindung befestigt werden.

Fahrrad-Ritzelkassetten umfassen eine Mehrzahl an hinterachs-axial beabstandeten Ritzeln mit gestuft unterschiedlicher Zähnezahl. Die Fahrradkette wird je nach der vom Fahrer gewählten Übersetzung mittels eines Schaltwerks auf eines der Ritzel gelegt, und bestimmt somit im Zusammenwirken mit der Zähnezahl eines Kettenblatts am Tretlager die Übersetzung und die vom Fahrer ausgeübten Parameter wie Drehmoment und Trittfrequenz.

In den letzten Jahren ist die Fahrradbranche vor allem im Bereich der Mountainbikes dazu übergegangen, die Anzahl der Tretlager-Kettenblätter von traditionell drei unterschiedlich großen Kettenblättern zunächst auf zwei, und zwischenzeitlich auf zumeist nur noch ein einziges Kettenblatt zu reduzieren, zumindest im gehobenen Marktsegment. Mit solchen in der Branche auch als "1-fach" oder "1x" bekannten Fahrradantrieben lässt sich der Antriebsstrang erheblich vereinfachen und dessen Zuverlässigkeit und Wartungsarmut erhöhen. Außerdem wird für den Fahrer die dann auf nur noch einen Schalthebel reduzierte Schaltbetätigung und Schaltlogik deutlich vereinfacht.

Weiterhin entfallen hierdurch auch der vordere Kettenwerfer im Bereich des Tretlagers ebenso wie dessen Ansteuerung und die zu deren Befestigung notwendigen Einrichtungen am Fahrradrahmen und Fahrradlenker. Mit dem Entfall von Kettenwerfer, zusätzlichen Kettenblättern sowie Schalthebel und Zubehör ist auch eine nennenswerte Gewichtsreduktion des Fahrrads verbunden.

Auch bei Fahrrädern mit elektrischem Zusatzantrieb wird u.a. aus Bauraumgründen sowie zur Vereinfachung des Antriebsstrangs in den meisten Fällen auf mehrere schaltbare Kettenblätter verzichtet, und auf nur noch ein Kettenblatt gesetzt.

Mit dem Entfall desjenigen Teilfaktors des Übersetzungsbereichs am Fahrrad, welcher zuvor durch mehrere Kettenblätter am Tretlager bereitgestellt wurde, und der typischerweise im Bereich von 180 bis 200 % lag, wurde es jedoch erforderlich, den von der Ritzelkassette bereitgestellten Übersetzungsbereich wesentlich zu vergrößern.

Diese Notwendigkeit hat zur Entwicklung von Ritzelkassetten geführt, die sowohl outboardseitig sehr kleine Ritzel bis herab zu 11 Zähnen und weniger, insbesondere bis herab zu 9 Zähnen, als auch inboardseitig sehr große Ritzel bis hinauf zu 50 Zähnen und mehr aufweisen. Damit kommen diese Kassetten auf Übersetzungsbereiche in der Größenordnung von bis zu oder über 500 %, und stellen somit in nahezu allen Fahrsituationen eine geeignete Übersetzung bereit.

Ritzelkassetten mit inboardseitig derart großen Ritzeln führen jedoch unter anderen zu Gewichtsproblemen, insbesondere wenn die Ritzelkassette sich in traditioneller Weise zum großen Teil aus einzelnen scheibenförmigen Ritzeln zusammensetzt, wobei jedes Ritzel eine direkte Verbindung mit dem Freilauf-Antreiber der Hinterradnabe aufweist.

Um insbesondere der Gewichtsproblematik solcher Ritzelkassetten zu begegnen, wurden bisher zwei grundlegende Haupt-Konzepte verfolgt. Eines dieser Konzepte liegt im Einsatz von sogenannten Ritzel-Spidern, bei denen mehrere benachbarte Ritzelringe auf einem gemeinsamen Träger angeordnet sind.

Ein Ritzelring definiert sich dabei dadurch, dass dieser, anders als ein scheibenförmiges Kassettenritzel bzw. Steckritzel, nicht direkt auf dem Antreiber der Hinterradnabe angeordnet und mit diesem drehmomentübertragend verbunden, sondern als radial vergleichsweise schmaler Ring ausgebildet ist.

Die Verbindung mit dem Antreiber sowie die Drehmomentübertragung von der Ritzelverzahnung auf den Antreiber erfolgt bei Ritzelkassetten mit Spider-Aufbau somit jeweils gebündelt für zumeist zwei oder mehrere benachbarte Ritzelringe, welche jeweils zusammen auf einem Ritzelspider befestigt sind.

Die große Anzahl an Ritzeln von aktuellen Kassetten im Bereich von typischerweise zehn und mehr Ritzeln führt jedoch zu der Notwendigkeit, entweder eine Mehrzahl relativ flacher Spider vorzusehen und jeweils typischerweise 2 bis 4 Ritzel an jedem der flachen Spider zu befestigen, oder einen einzelnen Ritzelspider dreidimensional mit in Axialrichtung erheblicher Dicke bzw. Ausdehnung auszuführen, um so eine Vielzahl an Ritzelringen nebeneinander auf dem Spider unterbringen zu können.

Diese beiden bekannten Ansätze für Spider-Ritzelkassetten sind damit nicht optimal im Hinblick auf die gewünschte Gewichtsreduzierung, und führen zudem zu einem komplizierten Aufbau der Kassette mit zahlreichen aufwändig zu fertigenden und zu montierenden Baugruppen.

Ein weiteres bekanntes Konzept zur Gewichtsreduktion von Ritzelkassetten mit sehr hohem Übersetzungsbereich liegt darin, die Ritzelkassette zumindest teilweise als selbsttragendes Ritzelcluster, in der Branche auch bezeichnet als Dom-Kassette, auszubilden.

Hierbei werden häufig alle Ritzel außer dem inboardseitig größten Ritzel entweder aus einem Stück Vollmaterial gefräst, oder es werden möglichst viele der zwischen dem größten und dem kleinsten Ritzel befindlichen Zwischenritzel als Ritzelringe ausgebildet, welche typischerweise durch Verbindungselemente wie Niete oder Stifte miteinander zu einer kegel- oder kegelstumpfförmigen, selbsttragenden dreidimensionalen Tragstruktur verbunden werden. Die letztgenannte Variante wird in der Branche auch als gepinntes Ritzelcluster bezeichnet.

Allgemein und unabhängig von der Fertigungstechnologie lässt sich ein selbsttragendes Ritzelcluster definieren als bestehend aus drei oder mehr Ritzeln mit einem inboardseitigen Abschlussritzel und einem outboardseitigen Abschlussritzel, wobei inboardseitiges und outboardseitiges Abschlussritzel jeweils mit Anschlussbauteilen wie Spider, Trägerritzel, Minicluster bzw. Antreiber verbindbar sind. Hingegen ist das dritte Ritzel, bzw. sind üblicherweise mehrere zwischen inboardseitigem und outboardseitigem Abschlussritzel des Ritzelclusters angeordnete Zwischenritzel freitragend angeordnet, besitzen also keine eigene bzw. direkte Verbindung mit Spider, Trägerritzel oder Antreiber. Stattdessen sind diese Zwischenritzel lediglich direkt, oder ggf. indirekt über weitere benachbarte Ritzel, mit dem inboardseitigen und/oder dem outboardseitigen Abschlussritzel verbunden.

Auch das Konzept des Ritzelclusters stößt mit den immer größeren Gangzahlen und Ritzelgrößen jedoch an Grenzen. Aus dem Vollen gefräste Ritzelcluster benötigen immer größere Rohlinge und aufwändigere und damit teurere Herstellungsschritte, während gepinnte Ritzelcluster aufgrund der Vielzahl von in Reihe angeordneten Pin- bzw. Nietstrukturen einen immer höheren Fertigungsaufwand vor allem durch die damit verbundenen Toleranzketten verursachen.

### Stand der Technik

Mit diesem Hintergrund sind Ritzelkassetten mit verkleinertem selbsttragendem Ritzelcluster entwickelt worden, bei denen sich outboardseitig an das Ritzelcluster eines oder mehrere weitere Ritzel anschließen, die beispielsweise in Form eines mehrteiligen oder einstückigen Miniclusters ausgebildet sind. Derartige Ritzelkassetten sind beispielsweise aus der Veröffentlichung DE 10 2010 027 228 A1 bekannt.

Bei derartigen Ritzelkassetten ist das outboardseitige Abschlussritzel des Ritzelclusters axial fest zwischen benachbarten Baugruppen der Ritzelkassette geklemmt, beispielsweise zwischen einem Minicluster und einem rohrförmigen Distanzstück.

Diese Klemmung kann jedoch bei stärkerer Drehmomentbeaufschlagung insbesondere der kleineren Ritzel des Ritzelclusters aufgrund der torsionalen Elastizität des Ritzelclusters zu unkontrollierten Mikrorotationen des geklemmten outboardseitigen Abschlussritzels führen. Diese Mikrorotationen können wiederum zu Schwingungen und damit zu unerwünschten Knack- bzw. Quietschgeräuschen führen. Bei häufigem Auftreten derartiger Mikrorotationen kann außerdem die Dauerfestigkeit des Ritzelclusters beeinträchtigt werden.

### Aufgabe der Erfindung

Ausgehend von dem vorstehend beschriebenen Stand der Technik ist es die Aufgabe der vorliegenden Erfindung, eine Ritzelkassette bzw. Mehr-fach-Ritzelanordnung sowie ein Baukastensystem zur Erzeugung von Ritzelkassetten bzw. Mehrfach-Ritzelanordnungen bereitzustellen, mit der bzw. dem sich die vorstehend beschriebenen Nachteile überwinden lassen.

### Erfindungsbeschreibung

Diese Aufgabe wird durch eine Mehrfach-Ritzelanordnung bzw. durch ein Baukastensystem zur Erzeugung von Mehrfach-Ritzelanordnungen gemäß der vorliegenden Offenbarung gelöst.

Gattungsgemäß ist die Mehrfach-Ritzelanordnung zur in Bezug auf eine Fahrrad-Hinterachse drehmomentübertragenden Montage auf einer Fahrrad-Hinterrad-Antreibereinrichtung vorgesehen. Typischerweise weist eine passende Antreibereinrichtung zur Aufnahme der Ritzelanordnung ein am Außenumfang der Antreibereinrichtung angeordnetes Verzahnungs-Mitnahmeprofil auf, während die Ritzelanordnung an einem Innenumfang ein zum Mitnahmeprofil der Antreibereinrichtung formkorrespondierendes Eingriffsprofil zum formschlüssig drehmomentübertragenden Eingriff in das Mitnahmeprofil der Antreibereinrichtung besitzt.

Die Ritzelanordnung umfasst eine Mehrzahl von Ritzeleinrichtungen, wobei jede Ritzeleinrichtung zumindest ein zum drehmomentübertragenden Eingriff mit einer Fahrradkette vorgesehenes Ritzel mit entsprechenden Ritzelzähnen aufweist. Unter den Ritzeleinrichtungen der Ritzelanordnung ist eine inboardseitige Abschlussritzeleinrichtung, ein mit der inboardseitigen Abschlussritzeleinrichtung in einem Verbindungsbereich der inboardseitigen Abschlussritzeleinrichtung verbindbares bzw. verbundenes erstes Ritzelcluster, insbesondere selbsttragendes Ritzelcluster, mit einer Mehrzahl von Ritzeln, und eine outboardseitige Abschlussritzeleinrichtung.

Die Ritzelanordnung gemäß der vorliegenden Offenbarung zeichnet sich durch eine rotatorische Lagereinrichtung aus, mittels der das erste Ritzelcluster im Bereich seiner Outboardseite gegenüber der Antreibereinrichtung drehbar gelagert ist.

Wie eingangs beschrieben, ist im Gegensatz hierzu das erste Ritzelcluster beim Stand der Technik outboardseitig typischerweise in einem in hinterachs-axialer Richtung verlaufenden Kraftfluss zwischen benachbarten Ritzeln, Ritzeleinrichtungen bzw. Abstandselementen der Ritzelanordnung klemmend aufgenommen, und damit nicht drehbar gelagert.

Bei antreibender Drehmomentbeaufschlagung der Ritzel des ersten Ritzelclusters einer solchen Ritzelanordnung gemäß dem Stand der Technik, insbesondere bei Drehmomentbeaufschlagung der kleineren, outboardseitigen Ritzel des ersten Ritzelclusters, versucht sich das erste Ritzelcluster elastisch in sich zu verdrehen. Beim Überschreiten eines bestimmten Grenzdrehmoments führt dies dazu, dass in der outboardseitigen Klemmung des ersten Ritzelclusters das Losbrechmoment dieser Klemmung überschritten wird, wodurch sich das erste Ritzelcluster in der outboardseitigen Klemmung schlagartig um einen geringen Winkelbetrag zu drehen beginnt.

Das Losbrechen dieser outboardseitigen Klemmung des ersten Ritzelclusters und die anschließende Rotation des ersten Ritzelclusters in der outboardseitigen Klemmung führt dabei häufig zu unerwünschten Geräuschen wie Knacken und Quietschen. Aufgrund des unkontrollierten Auftretens dieses Losbrech-Effekts und den damit verbundenen schlagartigen Änderung der Kraftflüsse im ersten Ritzelcluster sowie aufgrund der dabei auftretenden Vibrationen kann dies auch die Dauerfestigkeit des ersten Ritzelclusters beeinträchtigen.

Dank der outboardseitig auf einer rotatorischen Lagereinrichtung drehbaren Lagerung des ersten Ritzelclusters gegenüber der Antreibereinrichtung gemäß der vorliegenden Offenbarung werden diese unerwünschten Effekte vermieden. Die outboardseitig drehbare Lagerung des ersten Ritzelclusters führt bei antreibender Drehmomentbeaufschlagung der Ritzel des ersten Ritzelclusters, insbesondere der outboardseitigen, kleineren Ritzel des ersten Ritzelclusters dazu, dass sich das erste Ritzelcluster outboardseitig kontrolliert drehen und somit elastisch in sich verformen kann, ohne dass hierbei starke Losbrecheffekte oder Schwingungen im ersten Ritzelcluster auftreten. Dies verbessert die Dauerfestigkeit des ersten Ritzelclusters und verhindert unerwünschte Geräuschentwicklung wie Knacken und Quietschen. Aufgrund der damit verbesserten Dauerfestigkeit kann das erste Ritzelcluster auch tendenziell dünnwandiger und damit leichter ausgeführt werden.

Nach einer bevorzugten Ausführungsform ist die Lagereinrichtung durch eine Abstandseinheit gebildet, welche in einem auf der Antreibereinrichtung montierten Zustand der Ritzelanordnung zugleich zur Festlegung eines Relativabstands zwischen zumindest zwei Ritzeleinrichtungen der Ritzelanordnung in hinterachs-axialer Richtung eingerichtet ist.

Dabei ist die Lagereinrichtung vorzugsweise zur Übertragung einer Montagespannkraft in hinterachs-axialer Richtung zwischen zumindest zwei Ritzeleinrichtungen der Ritzelanordnung ausgebildet, wobei die Montagespannkraft in einem auf der Antreibereinrichtung montierten Zustand der Ritzelanordnung Teil eines geschlossenen, im Wesentlichen hinterachs-parallel verlaufenden Kraftflusses durch die Antreibereinrichtung und die Ritzelanordnung ist.

Besonders bevorzugt ist die Lagereinrichtung sowohl zur Festlegung des Relativabstands in hinterachs-axialer Richtung zwischen der inboardseitigen und der outboardseitigen Abschlussritzeleinrichtung als auch zur Übertragung der Montagespannkraft zwischen der inboardseitigen und der outboardseitigen Abschlussritzeleinrichtung ausgebildet.

Mit den vorgenannten Ausführungsformen ergibt sich eine vorteilhafte Mehrfachfunktion der Lagereinrichtung nicht nur zur outboardseitig drehbaren Lagerung des ersten Ritzelclusters, sondern auch als axiales Spannelement zur Montage der Ritzelanordnung auf der Antreibereinrichtung, und ebenso als Abstandselement zur Festlegung des Relativabstands zwischen zumindest zwei Ritzeleinrichtungen der Ritzelanordnung.

Vorzugsweise ist die Lagereinrichtung zur Festlegung des axialen Relativabstands zwischen der inboardseitigen Abschlussritzeleinrichtung und einem outboardseitigen Ritzel des ersten Ritzelclusters ausgebildet. Damit sorgt die Lagereinrichtung in Doppelfunktion als Abstandseinrichtung für die Festlegung der korrekten Breite des ersten Ritzelclusters.

Besonders bevorzugt ist die Lagereinrichtung in Mehrfachfunktion zur Festlegung der Relativabstände in hinterachs-axialer Richtung und zur Übertragung der Montagespannkräfte in hinterachs-axialer Richtung zwischen der inboardseitigen und der outboardseitigen Abschlussritzeleinrichtung sowie dem outboardseitigen Ritzel des ersten Ritzelclusters ausgebildet, mit anderen Worten zur Festlegung aller relevanten Relativabstände und zur Übertragung aller wesentlichen Montagespannkräfte zwischen der inboardseitigen und der der outboardseitiger Abschlussritzeleinrichtung sowie dem outboardseitigen Ritzel des ersten Ritzelclusters.

Ebenso vorzugsweise besteht die Lagereinrichtung aus einem nichtmetallischen Werkstoff, beispielsweise aus einem organischen Polymer. Hierdurch lassen sich Herstellungskosten einsparen, Korrosion wird vermieden, und die Mikrobewegungen der Ritzeleinrichtungen der Ritzelanordnung, insbesondere die elastische Rotation des outboardseitigen Abschlussritzels des ersten Ritzelclusters werden erleichtert, ohne dass hierdurch unerwünschte Geräusche oder Vibrationen entstehen.

Nach einer bevorzugten Ausführungsform ist vorgesehen, dass die outboardseitige Abschlussritzeleinrichtung ein weiteres Ritzelcluster umfasst, welches vorzugsweise als im Wesentlichen einstückiges Modul ausgebildet ist. Unter einem in wesentlichen einstückigen Modul sollen hierbei Ritzelcluster verstanden werden, die entweder stofflich einstückig sind, beispielsweise aus Vollmaterial gefräst, oder solche Ritzelcluster, die aus mehreren Ritzeleinrichtungen oder Ritzeln zusammengesetzt sind, beispielsweise durch Schweißen, Laserschweißen oder durch Verpinnen bzw. Vernieten o.dgl.

Vorzugsweise weist das weitere Ritzelcluster an einem Innenumfang ein Eingriffsprofil zum drehmomentübertragenden Eingriff des Ritzelclusters in das Mitnahmeprofil der Antreibereinrichtung auf, wobei das Eingriffsprofil des weiteren Ritzelclusters formkorrespondierend zum Mitnahmeprofil der Antreibereinrichtung ausgebildet ist.

Nach einer weiteren bevorzugten Ausführungsform umfasst die Ritzelanordnung eine zum Eingriff in ein outboardseitiges Innengewinde der Antreibereinrichtung eingerichtete Verschlussschraubeneinrichtung zur Montage und Befestigung der Ritzelanordnung auf der Antreibereinrichtung. Mittels der Verschlussschraubeneinrichtung lässt sich das weitere Ritzelcluster entlang einer hinterachs-axialen Richtung gegenüber der Lagereinrichtung auf die Antreibereinrichtung aufschieben bzw. aufpressen. Dabei wird ein geschlossener, im Wesentlichen hinterachs-parallel verlaufender Kraftfluss durch die Antreibereinrichtung und durch die Ritzelanordnung hergestellt, welcher die Ritzelanordnung mit der Antreibereinrichtung verbindet.

Eine weitere bevorzugte Ausführungsform sieht vor, dass das weitere Ritzelcluster zumindest ein Ritzel umfasst, dessen Fußkreisdurchmesser kleiner ist als der Außendurchmesser der Antreibereinrichtung im Bereich des Mitnahmeprofils. Dabei verläuft eine Ritzelmittelebene dieses zumindest einen Ritzels, vorzugsweise Ritzelmittelebenen zweier Ritzel des weiteren Ritzelclusters, in einem auf der Antreibereinrichtung montierten Zustand der Ritzelanordnung outboardseitig außerhalb einer axialen Endstirnfläche der Antreibereinrichtung.

Dies ermöglicht den Einschluss von Ritzeln mit besonders kleiner Zähnezahl in die Ritzelanordnung und damit die vorteilhafte Vergrößerung des Übersetzungsbereichs der Ritzelanordnung. Insbesondere kann das weitere Ritzelcluster auf diese Weise eines oder mehrere Ritzel umfassen, deren Fußkreisdurchmesser, und damit deren maximal möglicher Innendurchmesser, kleiner ist als der Außendurchmesser der Antreibereinrichtung im Bereich des Mitnahmeprofils der Antreibereinrichtung.

Dennoch ist die Befestigung solcher besonders kleinen Ritzel und die Drehmomentübertragung von diesen Ritzeln auf die Antreibereinrichtung dadurch gewährleistet, dass das weitere Ritzelcluster, insbesondere inboardseitig und insbesondere im Bereich zumindest eines Ritzels des Ritzelclusters, dessen Fußkreisdurchmesser größer als der Außendurchmesser der Antreibereinrichtung ist, an einem Innenumfang ein zum Mitnahmeprofil der Antreibereinrichtung formkorrespondierendes Eingriffsprofil aufweist.

Die vorstehend auf das weitere Ritzelcluster bezogenen Ausführungsformen lassen sich auch unabhängig vom Vorhandensein der weiter oben beschriebenen rotatorischen Lagereinrichtung bzw. Abstandseinheit verwirklichen.

Nach einer weiteren bevorzugten Ausführungsform ist vorgesehen, dass die Ritzelanordnung in einem auf der Antreibereinrichtung montierten Zustand zumindest drei in hinterachs-axialer Richtung voneinander beabstandete axiale Abschnitte aufweist, die jeweils an einem Innenumfang ein zum Mitnahmeprofil der Antreibereinrichtung formkorrespondierendes Eingriffsprofil zum formschlüssig drehmomentübertragenden Eingriff in das Mitnahmeprofil aufweisen.

Bevorzugt ist hierzu in axialer Richtung zwischen dem ersten Ritzelcluster und dem weitere Ritzelcluster zumindest eine weitere Ritzeleinrichtung angeordnet. Die weitere Ritzeleinrichtung weist an einem Innenumfang ein zum Mitnahmeprofil der Antreibereinrichtung formkorrespondierendes Eingriffsprofil zum formschlüssig drehmomentübertragenden Eingriff in das Mitnahmeprofil der Antreibereinrichtung auf.

Auf diese Weise ergibt sich eine dreifach, nämlich an drei verschiedenen hinterachs-axial voneinander beabstandeten Stellen, drehmomentübertragende Verbindung zwischen der Ritzelanordnung und der Antreibereinrichtung. Die dreifach drehmomentübertragende Verbindung findet vorzugsweise an der inboardseitigen Abschlussritzeleinrichtung, an der weiteren, zwischen dem ersten Ritzelcluster und dem weiteren Ritzelcluster angeordneten Ritzeleinrichtung sowie an dem weiteren Ritzelcluster statt. Die dreifach drehmomentübertragende Verbindung ist eine bevorzugte Ausführungsform. Es können auch mehr als eine weitere Ritzeleinrichtung vorgesehen sein, beispielsweise zwei oder mehr weitere Ritzeleinrichtungen, wodurch sich eine vier- oder mehr-fach drehmomentübertragende Verbindung zwischen der Ritzelanordnung und der Antreibereinrichtung ergibt.

Dies dient der Schaffung modulbezogen optimierter Lastpfade zwischen der inboardseitigen Abschlussritzeleinrichtung und der Antreibereinrichtung, zwischen der weiteren Ritzeleinrichtung und der Antreibereinrichtung sowie zwischen dem weiteren Ritzelcluster und der Antreibereinrichtung. Durch die somit für jedes dieser Module und dessen Lastsituation, insbesondere deren jeweils typische Drehmomentbelastung, optimierbaren Lastpfade lässt sich die Dauerfestigkeit und Betriebssicherheit der Ritzelanordnung erhöhen bzw. deren Masse entsprechend reduzieren.

Gemäß einer weiteren bevorzugten Ausführungsform sind die Zähne zumindest eines geradzahligen Ritzels, vorzugsweise mehrerer bzw. aller geradzahligen Ritzel der Ritzelanordnung in Umfangsrichtung alternierend entweder einer schmalen oder einer breiten Zahngruppe zugeordnet, wobei die Zähne der schmalen Zahngruppe schmale Zähne sind und wobei die breite Zahngruppe zumindest einen breiten Zahn, vorzugsweise mehrere breite Zähne umfasst.

Schmale Zähne sind solche Zähne, die schmäler sind als die lichte Weite bzw. der Innenlaschenzwischenraum eines Innenlaschen-Kettenglieds einer der Ritzelanordnung zugeordneten, also zum Betrieb mit der Ritzelanordnung vorgesehenen Fahrradkette, so dass derartige schmale Zähne also in den Laschenzwischenraum der Innenlaschen-Kettenglieder der Fahrradkette vollständig eintauchen bzw. eingreifen können. Breite Zähne sind Zähne, die breiter sind als die lichte Weite bzw. der Innenlaschenzwischenraum der Innenlaschen-Kettenglieder einer der Ritzelanordnung zugeordneten Fahrradkette dergestalt, dass die breiten Zähne zwar in den Außenlaschenzwischenraum der Außenlaschen-Kettenglieder der Fahrradkette, jedoch nicht in den Innenlaschenzwischenraum der Innenlaschen-Kettenglieder der Fahrradkette eintauchen können.

Die Gestaltung geradzahliger Ritzel alternierend mit schmalen und breiten Zähnen, in der Branche auch als Dick-Dünn-Kettenräder oder Kettenräder bzw. Ritzel mit Dick-Dünn-Zähnen bekannt, verbessert erheblich die Stabilität des normalen Kettenlaufs auf dem jeweiligen Ritzel, also des im Wesentlichen geraden Kettenlaufs, solange kein Schaltvorgang stattfindet.

Diese Verbesserung der Stabilität des Kettenlaufs durch alternierend angeordnete breite und schmale Ritzelzähne geht vor allem darauf zurück, dass die Kette nicht wie bei üblichen Kettenrädern oder Ritzeln, die lediglich schmale Zähne aufweisen, nur im Bereich der Innenlaschen-Kettenglieder auf dem Kettenrad bzw. Ritzel seitlich geführt wird, sondern durch das Vorhandensein des zumindest einen, bzw. der vorzugsweise mehreren breiten Zähne auch im Bereich der Außenlaschen-Kettenglieder eine seitliche Führung erfährt.

Mit der Ritzelanordnung gemäß der vorliegenden Offenbarung wird es möglich, die aktuellste Ritzeltechnologie der Dick-Dünn-Ritzel mit den seit Jahrzehnten bekannten Standard-Antreibereinrichtungen bzw. Standard-Kassettennaben zu kombinieren, und somit auf nahezu jedes Fahrrad bzw. hinteres Laufrad zu adaptieren, welches eine derartige Standard-Antreibereinrichtung bzw. Standard-Kassettennabe aufweist.

Die vorstehend auf die Dick-Dünn-Ritzel bezogene Ausführungsform lässt sich auch unabhängig vom Vorhandensein der weiter oben beschriebenen rotatorischen Lagereinrichtung bzw. Abstandseinheit verwirklichen.

Eine weitere bevorzugte Ausführungsform der Ritzelanordnung gemäß der vorliegenden Offenbarung zeichnet sich dadurch aus, dass zumindest ein Ritzel der Ritzelanordnung im Bereich zumindest einer Outboard-Schaltgasse des Ritzels und/oder in einem der zumindest einen Outboard-Schaltgasse benachbarten Bereich, vorzugsweise in einem Bereich einer der Outboard-Schaltgasse benachbarten Inboard-Schaltgasse des Ritzels, zumindest einen der schmalen Zahngruppe zugeordneten Stabilisierungszahn und/oder zumindest einen der breiten Zahngruppe zugeordneten Stabilisierungszahn aufweist. Die inboardseitige Kettenführungsfläche des zumindest einen Stabilisierungszahns steht gegenüber der inboardseitigen Kettenführungsfläche eines breitesten Zahns derselben Zahngruppe in Inboardrichtung über dergestalt, dass die Kette beim Lauf auf dem Ritzel durch die inboardseitig überstehende inboardseitige Kettenführungsfläche des zumindest einen Stabilisierungszahns, insbesondere beim normalen Kettenlauf, nach inboard ausgelenkt wird.

Der normale Lauf der Kette oder normale Kettenlauf ist derjenige Kettenlauf, bei dem die Kette sowie die Ritzelanordnung in Antriebsrichtung, oder entgegengesetzt zur Antriebsrichtung eines Antriebsstrangs des Fahrrads bewegt wird, ohne dass dabei aktuell ein Schaltvorgang bzw. Gangwechsel stattfindet, also ein Wechsel der Kette von einem Ritzel der Ritzelanordnung auf ein anderes, benachbartes Ritzel der Ritzelanordnung.

Die Auslenkung der Kette nach inboard beim normalen Kettenlauf auf dem Ritzel findet somit aufgrund der Wirkung des zumindest einen Stabilisierungszahns statt, wobei der Stabilisierungszahn vorzugsweise im Bereich einer Outboard-Schaltgasse des Ritzels der Ritzelanordnung angeordnet ist. Alternativ oder zusätzlich kann die Auslenkung der Kette nach inboard beim normalen Kettenlauf auch in einem der Outboard-Schaltgasse benachbarten Bereich des Ritzels stattfinden, insbesondere in einem Bereich einer der Outboard-Schaltgasse benachbarten Inboard-Schaltgasse, indem alternativ oder zusätzlich zu dem vorgenannten Stabilisierungszahn ein Stabilisierungszahn in diesem Bereich angeordnet ist.

Die durch den zumindest einen Stabilisierungszahn bewirkte Auslenkung der Kette nach inboard beim normalen Kettenlauf stabilisiert und verbessert den Geradeauslauf der Kette auf dem Ritzel der Ritzelanordnung insbesondere im Bereich der Inboard-Schaltgasse. Mit anderen Worten wird durch die Wirkung des Stabilisierungszahns die Kette im Bereich der Inboard-Schaltgasse geringfügig nach inboard ausgelenkt, wodurch verhindert wird, dass die Kette im Bereich der Inboard-Schaltgasse, welche ebenso wie eine Outboard-Schaltgasse insbesondere outboardseitige Ausnehmungen im Bereich der Ritzelzähne aufweist, unerwünscht nach outboard schaltet, was die Gleichmäßigkeit und Ruckfreiheit des Schaltvorgangs beeinträchtigen, den synchronen Lauf der Kette auf den Dick-Dünn-Zähnen der Ritzelanordnung stören und, zumindest beim Schalten unter Last, auch zu Beschädigungen der Ritzelanordnung und/oder der Kette führen könnte.

Ein weiterer Vorteil der nach inboard verschobenen inboardseitigen Kettenführungsfläche des Stabilisierungszahns besteht darin, dass der Stabilisierungszahn damit eine größere Zahnbreite erhält, welche die Verformungs- und Verschleißbeständigkeit des Stabilisierungszahns erhöht. Dies ist insbesondere dann von Vorteil, wenn sich der Stabilisierungszahn, wie dies bevorzugt der Fall ist, im Bereich einer Schaltgasse befindet und somit eine outboardseitige Ausnehmung bzw. eine outboardseitig reduzierte Zahnbreite aufweist, welche andernfalls die Stabilität des Zahnes beeinträchtigen könnte.

Ein Stabilisierungszahn mit derselben Charakteristik einer inboardseitigen Kettenführungsfläche, welche gegenüber der inboardseitigen Kettenführungsfläche eines breitesten Zahns derselben Zahngruppe nach inboard verschoben ist, und welcher somit ebenfalls zu einer Auslenkung der Kette durch seine inboardseitig überstehende inboardseitige Kettenführungsfläche beim normalen Kettenlauf nach inboard führt, kann zusätzlich oder alternativ auch durch eine vergrößerte zahnübergreifende Kettenführungsabmessung charakterisiert werden, wie nachfolgend ausgeführt.

Bei den dünnen bzw. schmalen Zähnen eines Dick-Dünn-Ritzels entspricht eine zahnübergreifende Kettenführungsabmessung dem Abstand zwischen einer inboardseitigen Kettenführungsfläche eines ersten schmalen Zahns und einer outboardseitigen Kettenführungsfläche eines dem ersten schmalen Zahn benachbarten weiteren schmalen Zahns, also des dem ersten schmalen Zahn vorangehenden oder nachfolgenden nächsten schmalen Zahns des Dick-Dünn-Ritzels.

Die Breite und insbesondere die (hinterachs-axiale) Position der zahnübergreifenden Kettenführungsabmessung benachbarter schmaler Zähne bestimmt zumindest im Bereich dieser Zähne die hinterachs-axiale Relativposition der Kette auf dem Ritzel, da die outboardseitige Innenfläche einer Ketteninnenlasche durch die outboardseitige Kettenführungsfläche des ersten schmalen Zahns geführt wird, und gleichzeitig die inboardseitige Innenfläche einer benachbarten Ketteninnenlasche durch die inboardseitige Kettenführungsfläche des dem ersten schmalen Zahn benachbarten weiteren schmalen Zahns geführt wird.

Wenn also die Lage der zahnübergreifenden Kettenführungsabmessung zweier schmaler Zähne entlang der hinterachs-axialen Richtung relativ zu einer Ritzelmittelebene verändert wird, so ändert sich dementsprechend auch die hinterachs-axiale Relativposition der Kette gegenüber der Ritzelmittelebene.

Da der Stabilisierungszahn dadurch charakterisiert ist, dass seine inboardseitige Kettenführungsfläche gegenüber der inboardseitigen Kettenführungsfläche eines der derselben Zahngruppe zugehörigen, breitesten Zahns nach inboard verschoben ist, ändert sich damit auch die Lage einer dem Stabilisierungszahn zugeordneten zahnübergreifenden Kettenführungsabmessung, also einer zahnübergreifenden Kettenführungsabmessung in hinterachs-axialer Richtung, die der Stabilisierungszahn zusammen mit einem entlang einer Umfangsrichtung des Ritzels nachfolgenden Zahn für die Kette bildet.

Insbesondere wird hierdurch die Lage der zahnübergreifenden Kettenführungsabmessung im Bereich des Stabilisierungszahns ebenfalls nach inboard verschoben. Außerdem ist die dem Stabilisierungszahn zugeordnete zahnübergreifende Kettenführungsabmessung hierdurch ggf. auch vergrößert gegenüber den zahnübergreifenden Kettenführungsabmessungen der restlichen Zähne der Zahngruppe des Stabilisierungszahns, was zu einem leichten Schräglauf der Kette im Bereich der zahnübergreifenden Kettenführungsabmessung führt, und damit zu der gewünschten Inboard-Verlagerung der Kette beiträgt
Der Fachmann erkennt, dass das vorstehende Beispiel eines schmalen Stabilisierungszahns, welcher also der schmalen Zahngruppe der Dick-Dünn-Zähne zugeordnet ist, sich unter Beibehaltung desselben Prinzips analog auf breite Stabilisierungszähne anwenden lässt. Dabei kann im Hinblick auf einen breiten Stabilisierungszahn ebenso analog eine zahnübergreifende Kettenführungsabmessung definiert werden, welche im Bereich eines breiten Stabilisierungszahns gegenüber den zahnübergreifenden Kettenführungsabmessungen anderer breiter Zähne nach inboard verschoben ist. Auch kann die zahnübergreifende Kettenführungsabmessung eines breiten Zahns ggf. breiter ausgebildet sein als die zahnübergreifenden Kettenführungsabmessungen anderer breiter Zähne, was ebenfalls wieder zu einem leichten Schräglauf der Kette im Bereich der zahnübergreifenden Kettenführungsabmessung des Stabilisierungszahns führt, und somit zu der gewünschten Inboard-Verlagerung der Kette im Bereich des Stabilisierungszahns beiträgt.

Auch hierdurch wird der Kettenlauf im Bereich des breiten Stabilisierungszahns nach inboard ausgelenkt, mit denselben Wirkungen und Vorteilen wie oben hinsichtlich des schmalen Stabilisierungszahns beschrieben.

Der Fachmann versteht auch, dass sich die schmalen und breiten Stabilisierungszähne gemäß der vorliegenden Offenbarung miteinander kombinieren lassen, so dass im Bereich einer Outboard-Schaltgasse und/oder in einem der Outboard-Schaltgasse benachbarten Bereich eines Dick-Dünn-Ritzels, insbesondere in einem Bereich einer der Outboard-Schaltgasse benachbarten Inboard-Schaltgasse, sowohl zumindest ein schmaler als auch zumindest ein breiter Stabilisierungszahn befinden kann, die beide zusammen den gewünschten nach inboard versetzten Kettenlauf bewirken und so unerwünschtes Outboard-Schalten im Bereich der Inboard-Schaltgasse verhindern.

Weiterhin erkennt der Fachmann, dass sich das Prinzip der breiten oder schmalen Stabilisierungszähne, die den Kettenlauf im Bereich einer Outboard-Schaltgasse nach inboard verschieben, um unerwünschtes Inboard-Schalten der Kette im Bereich der Outboard-Schaltgasse zu verhindern, analog auch auf breite oder schmale Stabilisierungszähne übertragen lässt, welche den Kettenlauf im Bereich einer Inboard-Schaltgasse nach outboard verschieben, um unerwünschtes Outboard-Schalten der Kette im Bereich der Inboard-Schaltgasse zu verhindern.

Hierzu wird eine outboardseitige Kettenführungsfläche des Stabilisierungszahns gegenüber der outboardseitigen Kettenführungsfläche der restlichen Zähne derselben Zahngruppe nach outboard verschoben, so dass eine dem Stabilisierungszahn zugeordnete zahnübergreifende Kettenführungsabmessung ebenfalls nach outboard verschoben, und ggf. auch verbreitert wird. Auf diese Weise wird der Kettenlauf im Bereich des Stabilisierungszahns nach Outboard verlagert, wodurch das unerwünschte Inboard-Schalten im Bereich der Outboard-Schaltgasse verhindert werden kann.

Schließlich ist es für den Fachmann auch ersichtlich, dass sich das Prinzip des Stabilisierungszahns, der den normalen Lauf der Kette je nach Positionierung der verschobenen Kettenführungsfläche des Stabilisierungszahns in bestimmten Bereichen des Ritzels nach inboard oder nach outboard verschiebt, auch unabhängig von dem Vorhandensein von Dick-Dünn-Zähnen verwirklichen lässt. Mit anderen Worten können Stabilisierungszähne mit nach inboard verschobener inboardseitiger Kettenführungsfläche oder nach outboard verschobener outboardseitiger Kettenführungsfläche auch bei standardmäßigen Ritzeln ohne Dick-Dünn-Technologie eingesetzt werden, also bei Ritzeln, bei denen im wesentlichen alle Zähne dünne Ritzelzähne sind, die also in den Innenlaschenzwischenraum der Innenlaschen-Kettenglieder der Fahrradkette eingreifen können.

Mit diesem Hintergrund des Einsatzes von Stabilisierungszähnen an einem Ritzel ohne Dick-Dünn-Zähne und/oder an einem ungeradzahligen Ritzel bestehen weitere bevorzugte Ausführungsformen (nachstehend genannte Varianten 1 und 2) der Ritzelanordnung darin, dass zumindest ein Ritzel der Ritzelanordnung im Bereich zumindest einer Outboard-Schaltgasse des Ritzels und/oder in einem der zumindest einen Outboard-Schaltgasse benachbarten Bereich, vorzugsweise in einem Bereich einer der Outboard-Schaltgasse benachbarten Inboard-Schaltgasse des Ritzels (Variante 1: zur Verhinderung des Outboard-Schaltens an unerwünschter Stelle), alternativ im Bereich zumindest einer Inboard-Schaltgasse des Ritzels und/oder in einem der zumindest einen Inboard-Schaltgasse benachbarten Bereich, vorzugsweise in einem Bereich einer der Inboard-Schaltgasse benachbarten Outboard-Schaltgasse des Ritzels (Variante 2: zur Verhinderung des Inboard-Schaltens an unerwünschter Stelle) zumindest einen Stabilisierungszahn aufweist. Dabei steht die inboardseitige Kettenführungsfläche (Variante 1), bzw. die outboardseitige Kettenführungsfläche (Variante 2) des zumindest einen Stabilisierungszahns gegenüber der inboardseitigen Kettenführungsfläche (Variante 1) bzw. gegenüber der outboardseitigen Kettenführungsfläche (Variante 2) der anderen Zähne des Ritzels, oder gegenüber einem breitesten Zahn des Ritzels, in Inboardrichtung (Variante 1) bzw. Outboardrichtung (Variante 2) über dergestalt, dass die Kette beim Lauf auf dem Ritzel durch die inboardseitig überstehende inboardseitige Kettenführungsfläche (Variante 1) bzw. durch die outboardseitig überstehende outboardseitige Kettenführungsfläche (Variante 2) des zumindest einen Stabilisierungszahns insbesondere beim normalen Kettenlauf nach inboard (Variante 1) bzw. nach Outboard (Variante 2) ausgelenkt wird.

Alternativ zum Überstehen einer inboardseitige Kettenführungsfläche (Variante 1) bzw. outboardseitigen Kettenführungsfläche (Variante 2) des zumindest einen Stabilisierungszahns kann sich der Stabilisierungszahn auch dadurch auszeichnen, dass er zusammen mit einem benachbarten Zahn eine zahnübergreifende Kettenführungsabmessung bildet, welche größer ist als die Breite der anderen Zähne des Ritzels, oder größer als der breiteste Zahn des Ritzels, und/oder welche gegenüber der zahnübergreifenden Kettenführungsabmessung der anderen Zähne des Ritzels oder des breitesten Ritzelzahns nach inboard (Variante 1) bzw. nach Outboard (Variante 2) verschoben ist.

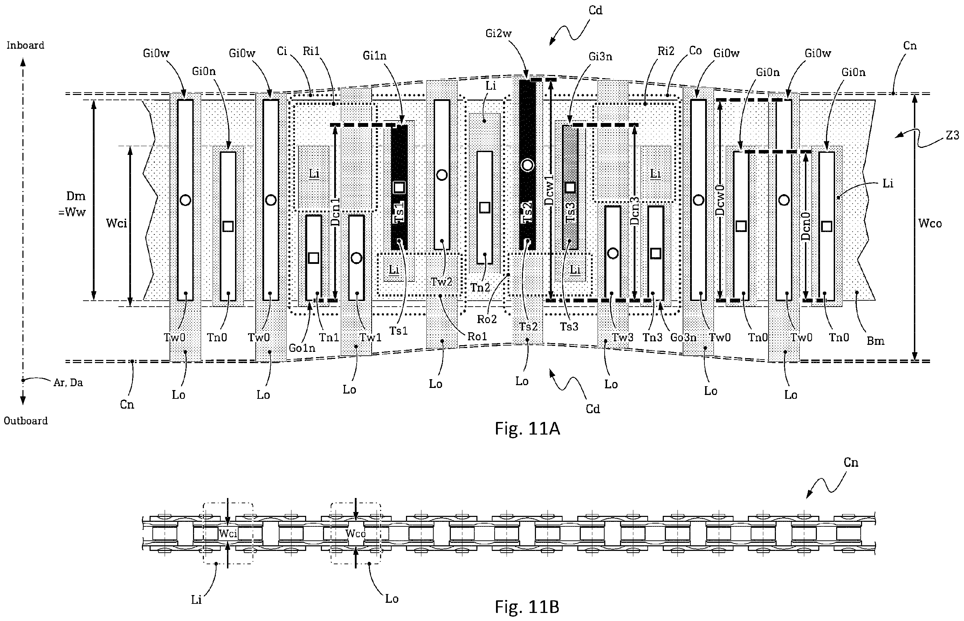

Hinsichtlich der Definition und Erläuterung der zahnübergreifenden Kettenführungsabmessung wird auf die Beschreibungseinleitung sowie auf die Beschreibung zu Fig. 11A verwiesen.

Die vorstehend auf den zumindest einen Stabilisierungszahn bezogenen Ausführungsformen lassen sich auch unabhängig vom Vorhandensein der weiter oben beschriebenen rotatorischen Lagereinrichtung bzw. Abstandseinheit der Ritzelkassette verwirklichen.

Weiterhin betrifft die vorliegende Offenbarung ein Baukastensystem zur Erzeugung von Mehrfach-Ritzelanordnungen. Das Baukastensystem umfasst zumindest die modular austauschbaren Baugruppen "inboardseitige Abschlussritzeleinrichtung", "erstes Ritzelcluster" und "outboardseitige Abschlussritzeleinrichtung". Zumindest eine der modular austauschbaren Baugruppen gehört dabei zu einer Baugruppenfamilie mit zumindest zwei Familienmitgliedern, oder ist einer solchen Baugruppenfamilie zuordenbar, und ist unter Beibehaltung der übrigen Baugruppen gegen ein anderes Mitglied der Baugruppenfamilie austauschbar, welches beispielsweise aus einem anderem Material besteht oder eine andere Fertigungsqualität aufweist als das zumindest eine andere Mitglied derselben Baugruppenfamilie.

Dies bedeutet, dass für die zumindest eine Baugruppe eine Baugruppenfamilie definiert ist bzw. definiert werden kann, welche zumindest zwei Familienmitglieder im Sinne von zumindest zwei unterschiedlich ausgebildeten Varianten der zumindest einen Baugruppe umfasst, die gegeneinander austauschbar sind.

Am Beispiel der outboardseitigen Abschlussritzeleinrichtung, die beispielsweise durch ein weiteres Ritzelcluster gebildet werden kann, kann unter einer Baugruppenfamilie eine Familie bzw. Reihe von weiteren Ritzelclustern mit unterschiedlichem Aufbau, aus unterschiedlichen Materialien oder von unterschiedlicher Fertigungsqualität verstanden werden. Beispielsweise können ein aus Einzelritzeln per Laserschweißung zusammengesetztes weiteres Ritzelcluster und ein aus Einzelritzeln durch Verpinnen oder Vernieten hergestelltes weiteres Ritzelcluster eine Baugruppenfamilie für die outboardseitige Abschlussritzeleinrichtung begründen.

Am Beispiel der inboardseitigen Abschlussritzeleinrichtung der Ritzelanordnung gemäß der vorliegenden Offenbarung können beispielsweise ein Trägerritzel aus Stahl und ein Trägerritzel aus Aluminium eine Baugruppenfamilie für die inboardseitige Abschlussritzeleinrichtung begründen.

Beispielsweise ist vorgesehen, innerhalb einer Baugruppenfamilie für die inboardseitige Abschlussritzeleinrichtung verschiedene Spiderritzel, Ritzelspider, Ringritzel oder Trägerritzel aus unterschiedlichen Materialien bereitzustellen, beispielsweise aus Stahl, Aluminium und Titan, und/oder Ritzelspider, Ringritzel oder Trägerritzel mit unterschiedlicher Oberflächenbehandlung. Ebenfalls ist die Begründung einer Baugruppenfamilie möglich durch beispielsweise einen Ritzelspider mit daran befestigbaren Ritzelringen und durch ein Spiderritzel mit zumindest einem daran befestigbaren Ritzelring, solange die Verbindungsschnittstellen zur benachbarten modularen Baugruppe, vorliegend also zum ersten Ritzelcluster, sowohl an dem Ritzelspider und an dem Spiderritzel identisch sind, so dass das erste Ritzelcluster wahlweise mit dem Ritzelspider oder mit dem Spiderritzel verbunden werden kann.

Unter Beibehaltung der übrigen Baugruppen, beim vorstehend betrachteten Beispielfall also unter Beibehaltung des ersten Ritzelclusters und der outboardseitigen Abschlussritzeleinrichtung, lässt sich auf diese Weise mit geringem Entwicklungs- sowie Herstellungsaufwand eine Mehrzahl von Ritzelanordnungen für unterschiedliche Einsatzzwecke und von unterschiedlicher Qualität bereitstellen.

Analog gilt dies entsprechend für die anderen Baugruppen der Ritzelanordnung, also beispielsweise für eine modular austauschbare outboardseitige Abschlussritzeleinrichtung oder für ein modular austauschbares erstes Ritzelcluster.

Dank des modularen Baukastensystems lassen sich somit auf einfache Weise Ritzelanordnungen mit unterschiedlicher Funktionalität oder Wertigkeit für unterschiedliche Zielgruppen oder Ziel-Märkte darstellen, indem für die verschiedenen modularen Baugruppen des Baukastensystems Werkstoffe unterschiedlicher Dichte und Festigkeit bzw. eine unterschiedliche Herstellungsweise oder Oberflächenqualität gewählt werden.

Insgesamt ergibt sich mit dem Baukastensystem eine Vielzahl an Varianten für die Ritzelanordnung gemäß der vorliegenden Offenbarung, die jeweils für unterschiedliche Preis- oder Marktsegmente und für damit verbundene Einsatzzwecke geeignet bzw. optimiert werden können, beispielsweise für den gelegentlichen Freizeiteinsatz in einem Marktbereich bis hin zum sportlichen Extremeinsatz in einem anderen Marktbereich.

Dies ist möglich, ohne dass von dem modularen Grundaufbau der Ritzelanordnung abgewichen werden muss, und ohne, dass jeweils die gesamte Ritzelanordnung neu entwickelt und in sämtlichen Einzelteilen eigens separat hergestellt werden muss.

### Kurze Beschreibung der Zeichnungen

Nachfolgend werden Ausführungsformen der Erfindung anhand der Figuren beispielhaft beschrieben.

Es zeigt:
- Fig. 1:: ein Fahrrad mit einem Ketten-Antriebsstrang und einer Ritzelanordnung;
- Fig. 2:: eine Ritzelanordnung mit einem outboardseitig auf einer Lagereinrichtung drehbar gelagerten ersten Ritzelcluster in einer isometrischen, teilweise geschnittenen Explosionsdarstellung, zusammen mit einer zugehörigen Antreibereinrichtung;
- Fig. 3:: Ritzelanordnung und Antreibereinrichtung gemäß Fig. 2 mit einer als Abstandseinheit ausgebildeten Lagereinrichtung im axialen Längsschnitt;
- Fig. 4:: Antreibereinrichtung und Teile der Ritzelanordnung gemäß Fig. 2 und 3 mit Darstellung der als axiales Spannelement ausgebildeten Lagereinrichtung, in einer vergrößerten axialen Längsschnittdarstellung;
- Fig. 5:: Antreibereinrichtung und Ritzelanordnung gemäß Fig. 2 bis 4 im axialen Längsschnitt;
- Fig. 6:: Antreibereinrichtung und Ritzelanordnung gemäß Fig. 2 bis 5 in teilweise geschnittener Längsschnittdarstellung mit abgenommenem weiterem Ritzelcluster;
- Fig. 7:: Antreibereinrichtung und weiteres Ritzelcluster gemäß Fig. 6 in perspektivisch-isometrischer Darstellung zur Verdeutlichung der Durchmesserverhältnisse;
- Fig. 8:: Antreibereinrichtung und weiteres Ritzelcluster gemäß Fig. 6 und 7 zur Verdeutlichung der axialen Position bestimmter Ritzel gegenüber der Antreibereinrichtung;
- Fig. 9:: Antreibereinrichtung und Ritzelanordnung in isometrischer, teilweise geschnittener Explosionsdarstellung zusammen mit einer zugehörigen Antreibereinrichtung, zur Verdeutlichung der Drehmomentübertragung zwischen Ritzelanordnung und Antreibereinrichtung;
- Fig. 10:: eine Anzahl outboardseitiger Ritzel einer Ritzelanordnung gemäß Fig. 2 bis 9 in einer perspektivischen, teilweise geschnittenen Darstellung;
- Fig. 11A:: einen Ausschnitt aus einer schematisierten, flachen Abwicklung eines Ritzels der Ritzelanordnung gemäß Fig. 2 bis 11 mit darauf laufende Fahrradkette;
- Fig. 11B:: eine Fahrradkette eines Antriebsstrangs gemäß Fig. 1 in schematisierter Darstellung;
- Fig. 12A:: das Ritzel gemäß Fig. 11A in einer rückseitigen Schrägansicht;
- Fig. 12B:: das Ritzel gemäß Fig. 11A und Fig. 12A in einer vorderseitigen Ansicht;
- Fig. 13:: eine Übersichtsdarstellung eines Baukastensystems zur Erzeugung von Mehrfach-Ritzelanordnungen gemäß Fig. 2 bis 10 oder 14;
- Fig. 14A:: eine weitere Ausführungsform einer Ritzelanordnung mit einem outboardseitig auf einer Lagereinrichtung drehbar gelagerten ersten Ritzelcluster, zusammen mit einer zugehörigen Antreibereinrichtung;
- Fig. 14B:: eine alternative Ausführungsform einer Lagereinrichtung für die Ritzelanordnung gemäß Fig. 14A;
- Fig. 15A-C:: eine alternative Ausführungsform eines ersten Ritzelclusters einer Ritzelanordnung gemäß Fig. 2 bis 14;
- Fig. 16:: Antreibereinrichtung und weitere Ausführungsform einer Ritzelanordnung in isometrischer, teilweise geschnittener Explosionsdarstellung ähnlich Fig. 9;
- Fig. 17A:: die Ritzelanordnung gemäß Fig. 16 in einem axialen Längsschnitt;
- Fig. 17B:: ein multifunktionales Abstandselement der Ritzelanordnung gemäß Fig. 16 und 17A;
- Fig. 17C:: Anordnung aus multifunktionalem Abstandselement, Zwischenritzel, outboardseitigem Abschlussritzel des ersten Ritzelclusters und Lagereinrichtung in stark perspektivischer Schnittdarstellung;
- Fig. 18A-C:: schematische Schnitt- bzw. Detailansichten von Ritzelzähnen einer Ritzelanordnung gemäß Fig. 2 bis 17C;
- Fig. 19A:: ein Ritzel einer weiteren Ausführungsform einer Ritzelanordnung ähnlich Fig. 2 bis 17C;
- Fig. 19B:: einen Zahnkopf eines Zahns des Ritzels gemäß Fig. 19A in schematischer Schnittdarstellung;
- Fig. 20A+B:: eine schematische Vergleichsdarstellung der Zahnkopf-Form eines Ritzels gemäß Fig. 19A+B mit der Zahnkopf-Form eines Ritzelzahns gemäß Fig. 18A bzw. Fig. 10;
- Fig. 21A+B:: schematische Vergleichsdarstellungen der Zahnkopf-Form eines Ritzels gemäß Fig. 19A+B mit der Zahnkopf-Form eines Ritzelzahns gemäß Fig. 18A oder gemäß Fig. 10, bzw. gemäß Fig. 18B;

### Ausführliche Beschreibung bevorzugter Ausführungsformen

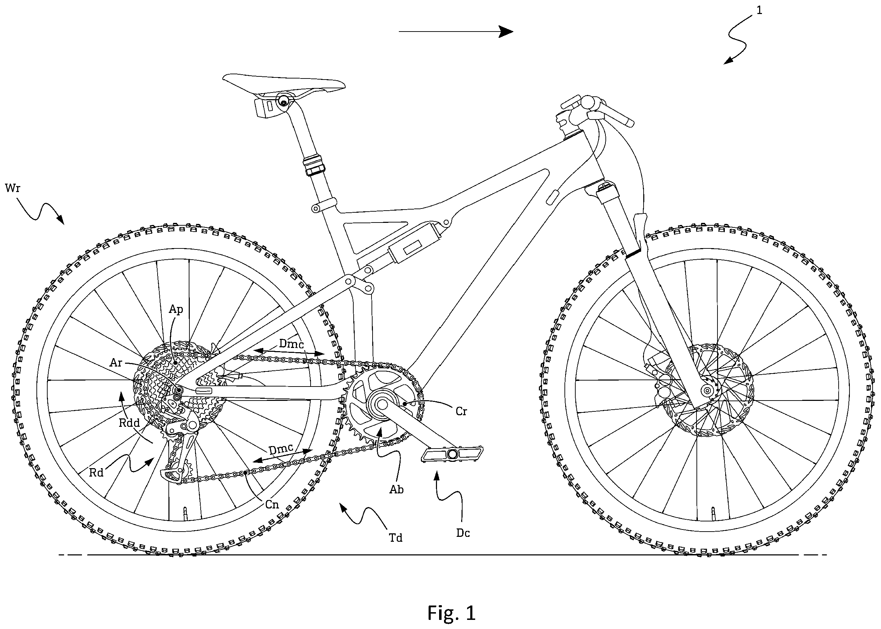

Fig. 1 zeigt ein Fahrrad 1 mit einem Antriebsstrang Td, wobei der Antriebsstrang Td eine auf einer Tretlagereinrichtung Ab drehbar gelagerte Kurbelanordnung Dc mit einem Kettenrad Cr, eine auf einer Hinterradachse Ar zusammen mit einem Hinterrad Wr drehbar gelagerte Ritzelanordnung Ap, eine Antriebskette Cn sowie ein Schaltwerk Rd zum Gangwechsel umfasst. Der Pfeil Rdd steht für die Antriebsdrehrichtung des Hinterrads Wr bzw. der Ritzelanordnung Ap bei antreibender Belastung durch die Fahrradkette Cn.

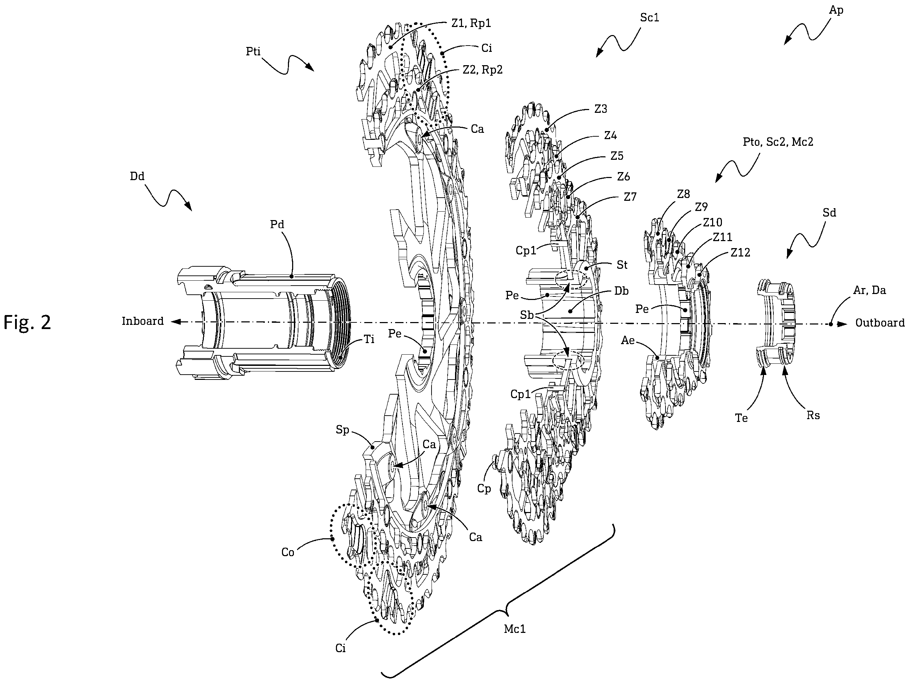

Fig. 2 zeigt eine Ritzelanordnung Ap gemäß der vorliegenden Offenbarung, zusammen mit einer Antreibereinrichtung Dd. Die Antreibereinrichtung Dd ist in der üblichen Weise zusammen mit einer (nicht dargestellten) Freilaufeinrichtung zur in Antriebsrichtung drehmomentübertragenden Montage auf einer Hinterradnabe des Fahrrads 1 vorgesehen. Insbesondere umfasst die Antreibereinrichtung Dd ein übliches, an einem Außenumfang angeordnetes Verzahnungs-Mitnahmeprofil Pd. Bei der Antreibereinrichtung Dd kann es sich insbesondere um eine Standard-Antreibereinrichtung Dd handeln, wie diese im Fahrradmarkt seit Jahrzehnten in weiter Verbreitung bei sog. Standard-Kassettennaben verwendet wird.

Die Ritzelanordnung Ap umfasst zumindest ein zum Mitnahmeprofil Pd der Antreibereinrichtung Dd formkorrespondierend ausgebildetes Eingriffsprofil Pe zum drehmomentübertragenden Eingriff der Ritzelanordnung Ap mit der Antreibereinrichtung Dd.

Man erkennt den modularen Aufbau der Ritzelanordnung Ap, welcher eine inboardseitige Abschlussritzeleinrichtung Pti, ein freitragendes erstes Ritzelcluster Sc1 sowie eine outboardseitige Abschlussritzeleinrichtung Pto umfasst. Die inboardseitige Abschlussritzeleinrichtung Pti und das erste Ritzelcluster Sc1 definieren zusammen ein Kassettenmodul Mc1.

Das Ritzelcluster Sc1 kann in einem Verbindungsbereich Ca der inboardseitigen Abschlussritzeleinrichtung Pti mit der inboardseitigen Abschlussritzeleinrichtung Pti verbunden werden bzw. sein, beispielsweise mittels Pins oder Nieten Cp. Die Verbindung zwischen der inboardseitigen Abschlussritzeleinrichtung Pti und dem Ritzelcluster Sc1 kann alternativ auch durch eine Verschraubung und/oder eine Verklebung in dem Verbindungsbereich Ca erfolgen.

Weiter erkennbar ist eine Verschlussschraubeneinrichtung Sd, welche zur Montage und Befestigung der Ritzelanordnung Ap auf der Antreibereinrichtung Dd dient, sowie eine Lagereinrichtung Db, auf welcher das erste Ritzelcluster Sc1 auf seiner Outboardseite gegenüber der Antreibereinrichtung Dd auf einem im wesentlichen zylinderoberflächenförmig ausgebildeten Lagerungsbereich Sb der Lagereinrichtung Db drehbar gelagert ist.

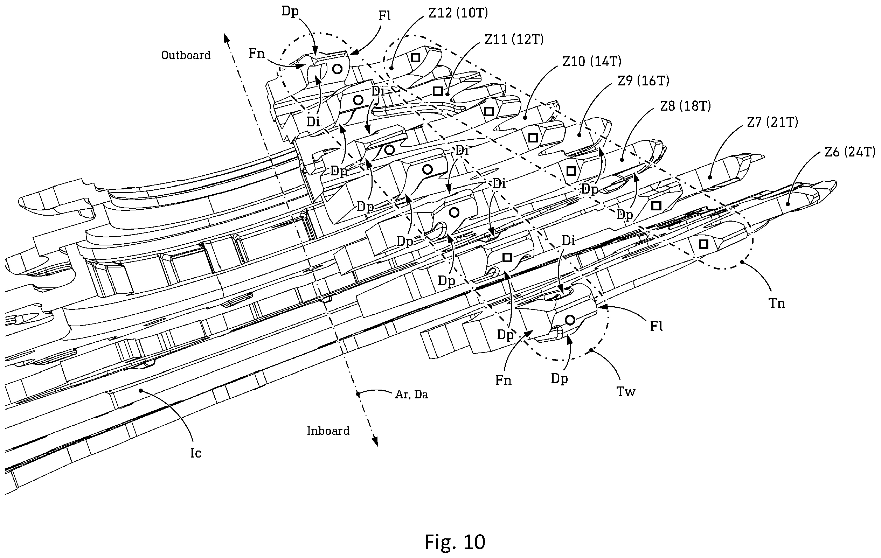

Die zur drehbaren Lagerung auf der Lagereinrichtung Db eingerichtete Outboardseite des ersten Ritzelclusters Sc1 ist bei dieser Ausführungsform das outboardseitige Abschlussritzel Z7. Zur outboardseitig drehbaren Lagerung des ersten Ritzelclusters Sc1 weist das outboardseitige Ritzel Z7 des ersten Ritzelclusters Sc1 an seinem Innenumfang eine zu dem Lagerungsbereich Sb der Lagereinrichtung Db formkorrespondierend ausgebildeten, hier also ebenfalls zylinderoberflächenförmig ausgebildeten Innenumfangsbereich Ic auf (vgl. Fig. 10, Fig. 13 und Fig. 15A).

Die Vorteile insbesondere hinsichtlich Geräuschreduktion und Erhöhung der Dauerfestigkeit aufgrund der outboardseitig drehbaren Lagerung des ersten Ritzelclusters Sc1 auf einer Lagereinrichtung Db sind weiter oben in der Beschreibungseinleitung ausführlich dargestellt.

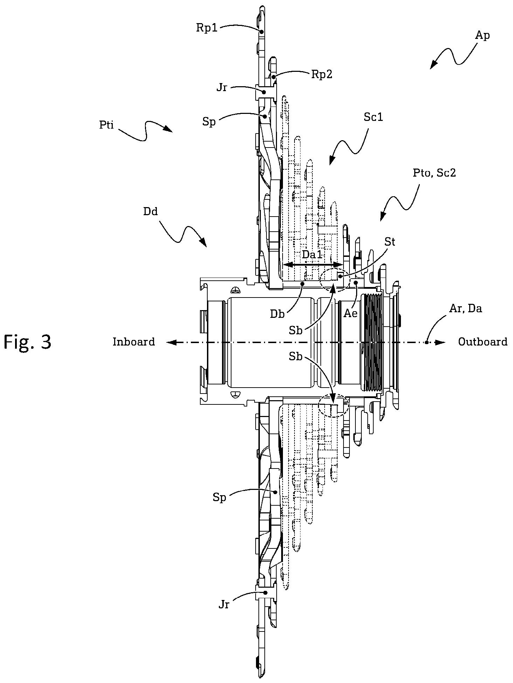

Fig. 3 zeigt die auf der Antreibereinrichtung montierte Ritzelanordnung Ap. Klarheitshalber ist in Fig. 3 die Verschlussschraubeneinrichtung Sd weggelassen.

Man erkennt eine inboardseitige Abschlussritzeleinrichtung Pti, ein selbsttragendes erstes Ritzelcluster Sc1 sowie eine outboardseitige Abschlussritzeleinrichtung Pto. Die inboardseitige Abschlussritzeleinrichtung Pti umfasst bei der dargestellten Ausführungsform einen Ritzelspider Sp, auf welchem zwei Ritzelringe Rp1 und Rp2 angeordnet und mittels einer Vernietung Jr mit dem Ritzelspider Sp verbunden sind.

In Fig. 3 ist das erste Ritzelcluster Sc1 lediglich strichliert dargestellt, um die Lagereinrichtung Db zu verdeutlichen. Man erkennt wieder den hier zylinderoberflächenförmig ausgebildeten Lagerungsbereich Sb der Lagereinrichtung Db, der zur outboardseitig drehbaren Lagerung des ersten Ritzelclusters Sc1 dient, mit den weiter oben beschriebenen Vorteilen.

Die Lagereinrichtung Db bildet hier gleichzeitig eine Abstandseinheit, welche in einem auf der Antreibereinrichtung Dd montierten Zustand der Ritzelanordnung Ap zur Festlegung eines Relativabstands Da1 in hinterachs-axialer Richtung Da zwischen zumindest zwei Ritzeleinrichtungen der Ritzelanordnung eingerichtet ist.

Bei der dargestellten Ausführungsform ist die Lagereinrichtung Db zur Festlegung des Relativabstands Da1 zwischen dem Ritzelspider Sp und einer outboardseitigen Abschlussritzeleinrichtung Pto eingerichtet. Dies bedeutet, dass die Lagereinrichtung Db hier eine Doppelfunktion ausübt, indem sie einerseits zur outboardseitig drehbaren Lagerung des ersten Ritzelclusters Sc1 dient wie vorstehend beschrieben, und andererseits zur Einstellung und Aufrechterhaltung des Relativabstands Da1 zwischen dem Ritzelspider Sp und der outboardseitigen Abschlussritzeleinrichtung Pto. Die exakte Aufrechterhaltung axialer Relativabstände wie des Relativabstands Da1 ist von Bedeutung für die dauerhafte Zuverlässigkeit und Genauigkeit beim Gangwechsel mittels des Schaltwerks Rd gemäß Fig. 1.

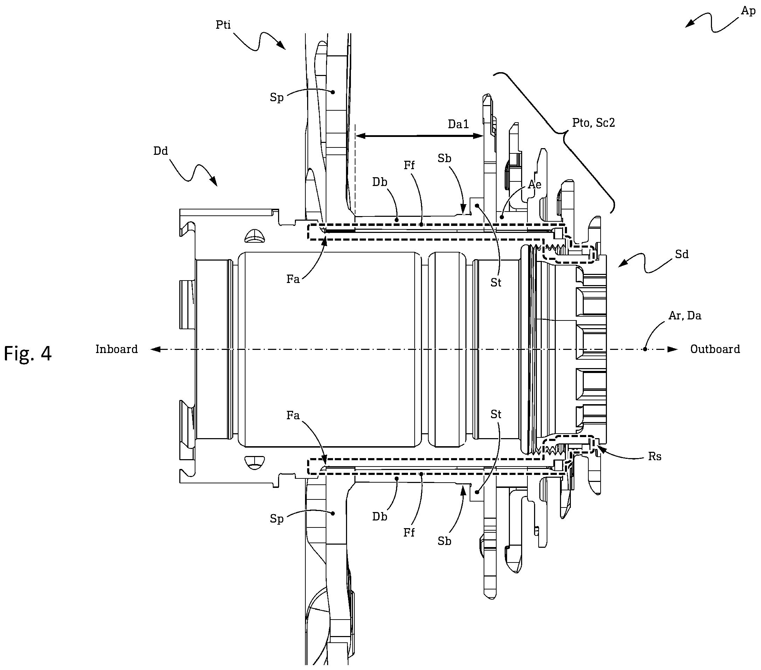

Fig. 4 zeigt die Antreibereinrichtung Dd und Teile der auf der Antreibereinrichtung Dd montierten Ritzelanordnung Ap gemäß Fig. 2 und 3.

Man erkennt, dass die Lagereinrichtung Db hier zusätzlich zu den beiden vorgenannten Funktionen der outboardseitig drehbaren Lagerung Sb des ersten Ritzelclusters Sc1 (vgl. Fig. 2) und der Einstellung und Aufrechterhaltung des Relativabstands Da1 zwischen dem Ritzelspider Sp und der outboardseitigen Abschlussritzeleinrichtung Pto auch die Funktion eines axialen Spannelements zur Montage der Ritzelanordnung Ap auf der Antreibereinrichtung Dd erfüllt.

Insbesondere dient die Lagereinrichtung Db bei dieser Ausführungsform zur Übertragung einer Montagespannkraft in hinterachs-axialer Richtung Da zwischen der inboardseitigen Abschlussritzeleinrichtung Pti und der outboardseitigen Abschlussritzeleinrichtung Pto. Dabei ist die Montagespannkraft in einem auf der Antreibereinrichtung Dd montierten Zustand der Ritzelanordnung Ap Teil eines geschlossenen, im Wesentlichen hinterachs-parallel verlaufenden Befestigungs-Kraftflusses Ff durch die Antreibereinrichtung Dd und die Ritzelanordnung Ap.

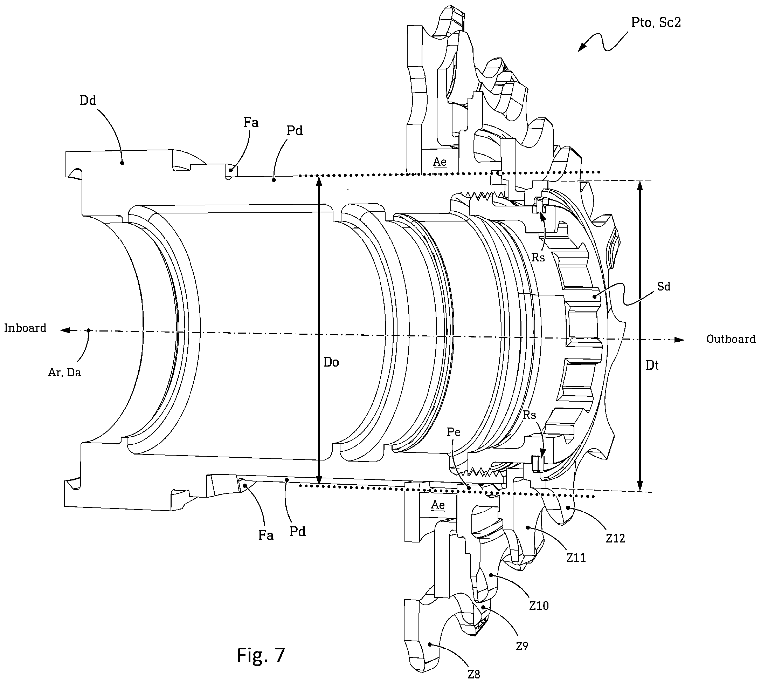

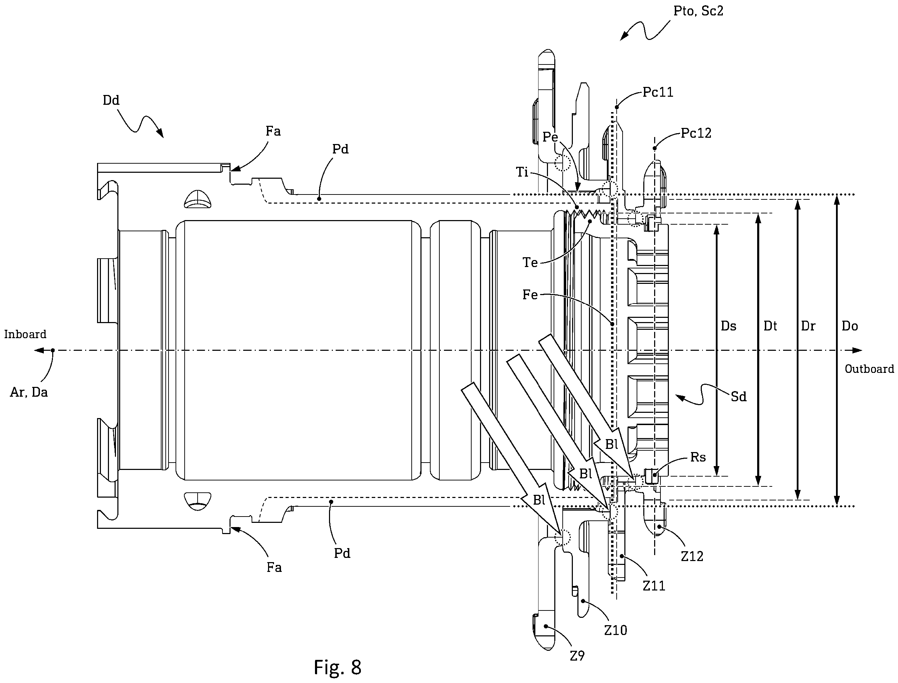

Der Befestigungs-Kraftfluss Ff wird durch die Verschlussschraubeneinrichtung Sd erzeugt (vgl. Fig. 2), indem die Verschlussschraubeneinrichtung Sd, welche hierzu ein Außengewinde Te aufweist, in ein Innengewinde Ti der Antreibereinrichtung Dd eingeschraubt wird. Hierdurch wird über einen beispielsweise als Sprengring Rs ausgebildeten, umlaufenden Vorsprung der Verschlussschraubeneinrichtung Sd die outboardseitige Abschlussritzeleinrichtung Pto auf die Antreibereinrichtung Dd aufgeschoben bzw. aufgepresst, und drückt dementsprechend auf die Lagereinrichtung Db, welche hier gleichzeitig eine Abstandseinheit bildet wie vorstehend beschrieben. Die Lagereinrichtung Db wiederum drückt gegen einen entsprechenden Axialanschlag an der inboardseitigen Abschlussritzeleinrichtung Pti, in Fig. 4 somit gegen den Ritzelspider Sp, welcher hierdurch wiederum gegen einen entsprechenden Axialanschlag Fa der Antreibereinrichtung Db gepresst wird, vgl. auch Fig. 7 und 8.

Insgesamt entsteht so ein geschlossener, im Wesentlichen hinterachs-parallel verlaufender Kraftfluss Ff durch die Ritzelanordnung Ap und durch die Antreibereinrichtung Dd, welcher die Ritzelanordnung Ap einerseits axial zusammenpresst, und andererseits für die Befestigung der Ritzelanordnung Ap auf der Antreibereinrichtung Dd sorgt.

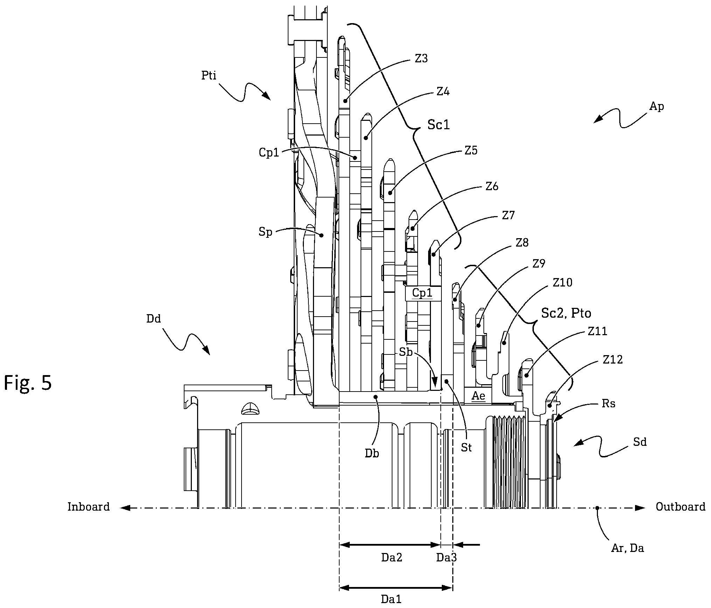

Fig. 5 verdeutlicht eine weitere Mehrfachfunktion der Lagereinrichtung Db.

Man erkennt, dass die Lagereinrichtung Db nicht nur zur Festlegung und Aufrechterhaltung des Relativabstands Da1 zwischen der inboardseitigen Abschlussritzeleinrichtung, hier also dem Ritzelspider Sp, und der outboardseitigen Abschlussritzeleinrichtung Pto eingerichtet ist, sondern auch zur Festlegung und Aufrechterhaltung des Relativabstands Da2 zwischen der inboardseitigen Abschlussritzeleinrichtung (hier Ritzelspider Sp) und dem outboardseitigen Abschlussritzel Z7 des ersten Ritzelclusters Sc1.

Dies bedeutet, dass die Lagereinrichtung Db auch die Aufgabe der Festlegung und Aufrechterhaltung der Breite Da2 des ersten Ritzelclusters Sc1 übernimmt. Hierzu wird das erste Ritzelcluster Sc1 bevorzugt mit einem geringfügigen Breitenübermaß gefertigt, bezogen auf die Breite Da2. Hierdurch wird das Ritzelcluster Sc1 bei der Montage der Ritzelanordnung Ap auf der Antreibereinrichtung Dd in hinterachs-axialer Richtung Da aufgrund des Kraftflusses Ff (vgl. Fig. 4) axial zumindest geringfügig elastisch zusammengepresst und somit in Axialrichtung Da spielfrei in der Ritzelanordnung Ap sowie auf der Antreibereinrichtung Dd fixiert.

Zusätzlich ist die Lagereinrichtung Db gemäß Fig. 5 weiterhin zur Festlegung und Aufrechterhaltung des Relativabstands Da3 zwischen der Outboardseite des ersten Ritzelclusters Sc1 und der Inboardseite der outboardseitigen Abschlussritzeleinrichtung eingerichtet, welche hier durch das zweite Ritzelcluster Sc2 gebildet ist (vgl. auch Fig. 2 bis 4). Der Relativabstand Da3 wird durch die Wirkung und Breite eines kragenförmigen Anschlags St gewährleistet, welcher bei dieser Ausführungsform einstückig an der Lagereinrichtung Db angeformt ist.

Mit anderen Worten ist die Lagereinrichtung Db bei der dargestellten Ausführungsform in einer vorteilhaften Mehrfachfunktion zur Festlegung aller Relativabstände Da1, Da2, Da3 in hinterachs-axialer Richtung Da, und zudem auch zur Übertragung aller Spannkräfte entlang der hinterachs-axialen Richtung Da zwischen der inboardseitigen Abschlussritzeleinrichtung Pti, der outboardseitigen Abschlusseinrichtung Pto, dem outboardseitigen Abschlussritzel Z7 des ersten Ritzelclusters Sc1 sowie der Antreibereinrichtung Dd ausgebildet.

Im Unterschied zu dem eingangs genannten Stand der Technik wird dabei das outboardseitige Abschlussritzel Z7 des ersten Ritzelclusters Sc1 jedoch nicht in dem axialen Kraftfluss Ff gemäß Fig. 4 geklemmt, was beim Stand der Technik zu den eingangs beschriebenen Nachteilen insbesondere hinsichtlich Geräuschentwicklung und Dauerfestigkeit der Ritzelanordnung führt, sondern bleibt gegenüber der Antreibereinrichtung Dd nahezu kräftefrei elastisch drehbar.

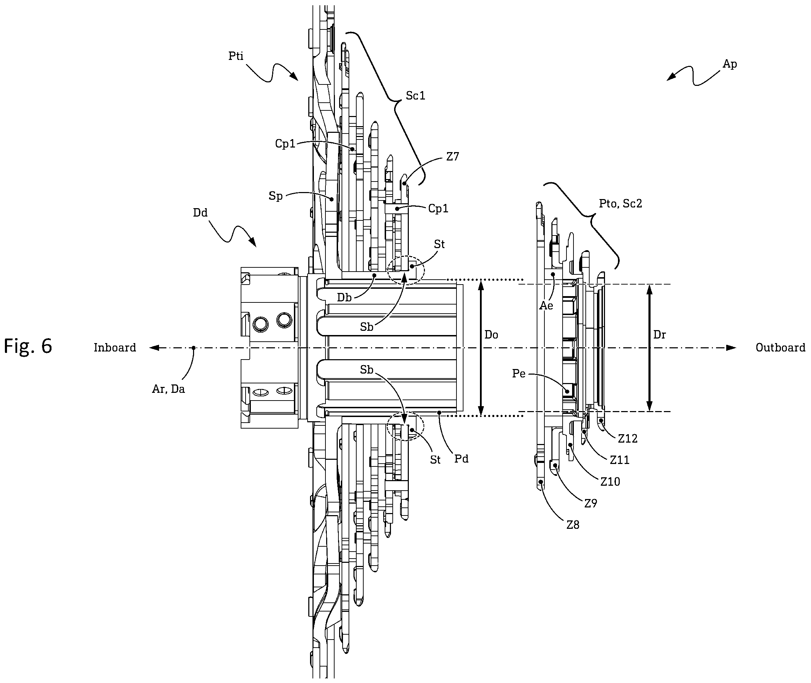

Fig. 6 zeigt die Ritzelanordnung gemäß Fig. 2 bis 5 in einem teilweise zerlegten Zustand, bei dem insbesondere die outboardseitige Abschlussritzeleinrichtung Pto von der Antreibereinrichtung Dd abgezogen ist. Man erkennt, dass die outboardseitige Abschlussritzeleinrichtung Pto hier als weiteres Ritzelcluster Sc2 ausgebildet ist.

Das weitere Ritzelcluster Sc2 kann dabei als im Wesentlichen einstückiges Modul ausgebildet, beispielsweise aus einem Stück gefräst sein. Alternativ kann das weitere Ritzelcluster Sc2 aus einer Mehrzahl von Ritzeleinrichtungen bzw. Ritzeln Z8 - Z12 zusammengesetzt sein, wobei die Mehrzahl von Ritzeleinrichtungen oder Ritzeln vorzugsweise miteinander verschweißt sind, beispielsweise durch Laserschweißen. Ebenso möglich und vorgesehen sind Ausführungsformen des weiteren Ritzelclusters Sc2, bei dem die Mehrzahl von Ritzeleinrichtungen oder Ritzeln Z8 - Z12 des weiteren Ritzelclusters Sc2 miteinander durch Vernieten oder Verpinnen verbunden sind.

Ferner erkennt man in Fig. 6 ein an einem Innenumfang des weiteren Ritzelclusters Sc2 angeordnetes Eingriffsprofil Pe. Das Eingriffsprofil Pe ist zum Mitnahmeprofil Pd der Antreibereinrichtung Dd formkorrespondierend ausgebildet, und in einem axialen Bereich zumindest eines Ritzels des weiteren Ritzelclusters Sc2 angeordnet, hier im axialen Bereich des Ritzels Z10 des weiteren Ritzelclusters Sc2. Im axialen Bereich des Ritzels Z10 steht an einem Innenumfang des Ritzels Z10 genügend radialer Bauraum zur Verfügung, um dort das Eingriffsprofil Pe anzuordnen.

Die Ausbildung des weiteren Ritzelclusters Sc2 als im wesentlichen einstückiges Modul führt in diesem Zusammenhang zu dem Vorteil, dass das weitere Ritzelcluster Sc2 Ritzel aufweisen kann, bei denen ein Innendurchmesser, insbesondere ein Zahn-Fußkreisdurchmesser Dr, kleiner bzw. erheblich kleiner ist als der Außendurchmesser Do der Antreibereinrichtung Dd. Auf diese Weise lassen sich Ritzelanordnungen Ap mit besonders kleinen outboardseitigen Ritzeln verwirklichen, hier beispielsweise mit den Ritzeln Z11 und Z12, dabei insbesondere mit Ritzeln, die eine Zähnezahl gleich oder kleiner 10 aufweisen.

Dies ermöglicht die Erzeugung von Ritzelanordnungen Ap mit besonders großem Übersetzungsbereich, die sich insbesondere für die eingangs erwähnten 1x-Antriebsstränge am Fahrrad eignen, bei denen nur noch ein Kettenrad Cr im Bereich der Tretlagereinrichtung Ab vorhanden ist, vgl. Fig. 1.

Die Anordnung von besonders kleinen Ritzeln mit einer Zähnezahl von 10 oder kleiner auf einer Standard-Antreibereinrichtung Dd ist nochmals in Fig. 7 dargestellt. Man erkennt, dass insbesondere das 10-zähnige Ritzel Z12 einen Fußkreisdurchmesser Dr aufweist, welcher deutlich kleiner ist als der Außendurchmesser Do der Antreibereinrichtung Dd im Bereich des Mitnahmeprofils Pd der Antreibereinrichtung Dd. Aufgrund der im Wesentlichen einstückigen Ausbildung des weiteren Ritzelclusters Sc2 kann das Antriebsdrehmoment dennoch auch von den kleinsten Ritzeln, insbesondere von dem 10-zähnigen Ritzel Z12, entlang der Axialrichtung Da nach inboard über das Ritzel Z11 und von dort auf das Ritzel Z10 übertragen werden. Vom Ritzel Z10 kann das Antriebsdrehmoment des Ritzels Z12 schließlich mittels des Eingriffsprofils Pe auf das Mitnahmeprofil Pd der Antreibereinrichtung Dd übertragen werden.

Die vorstehend beschriebene Ausgestaltung des weiteren Ritzelclusters Sc2 als im wesentlichen einstückiges Modul mit einer im Bereich zumindest eines der größeren Ritzel Z10 des weiteren Ritzelclusters Sc2 angeordneten Eingriffsprofil Pe zum Eingriff in das Mitnahmeprofil Pd der Antreibereinrichtung Dd erlaubt es auch, bzw. führt dazu, dass die Ritzelmittelebenen Pc11, Pc12 zumindest eines der kleinsten Ritzel Z11, Z12 outboardseitig beabstandet von der outboardseitigen Stirnfläche Fe der Antreibereinrichtung Dd positioniert sind, was in Fig. 8 dargestellt ist.

Neben dem Einsatz besonders kleiner Ritzel ermöglicht dies auch die effektive Nutzung des outboardseitig neben der outboardseitigen Stirnfläche Fe der Antreibereinrichtung Dd befindlichen Bauraums zwischen der Antreibereinrichtung Dd und einem (nicht dargestellten, dem Fachmann bekannten) Rahmen-Ausfallende des Fahrrads 1. Auf diese Weise lassen sich entweder Ritzelanordnungen Ap mit einer höheren Ritzel- bzw. Gangzahl verwirklichen, oder Ritzelanordnungen Ap können in Outboardrichtung weiter außen am Hinterrad Wr positioniert werden.

Der hierdurch inboardseitig der Ritzelanordnung Ap freiwerdende Bauraum kann beispielsweise zur Vergrößerung des Abstands der Speichenflansche einer Hinterradnabe des Fahrrads 1 genutzt werden, wodurch sich die Stabilität des Hinterrads Wr verbessert.

Fig. 8 zeigt weiterhin nochmals im Detail den Aufbau der Verschlussschraubeneinrichtung Sd mit deren Außengewinde Te, welches zum Eingriff in das Innengewinde Ti einer Standard-Antreibereinrichtung, wie der Antreibereinrichtung Dd gemäß Fig. 2 bis 9, eingerichtet ist.

Man erkennt insbesondere, dass die Verschlussschraubeneinrichtung Sd zur Aufnahme besonders kleiner Ritzel, vorliegend zur Aufnahme insbesondere des kleinsten, hier 10-zähnigen Ritzels Z12 einen Schaftdurchmesser Ds aufweist, der sowohl deutlich kleiner als der Fußkreisdurchmesser Dr des Ritzels Z12 ist, als auch kleiner als der Gewindedurchmesser Dt des Innengewindes Ti des Standardantreibers Dd.

Aufgrund dieser Gestaltung der Verschlussschraubeneinrichtung Sd sowie aufgrund der Ausführung der Verschlussschraubeneinrichtung Sd mit dem genannten kleinen Schaftdurchmesser und mit einem im outboardseitigen Bereich am Schaft der Verschlussschraubeneinrichtung Sd in einer umlaufenden Nut angeordneten Sprengring Rs lässt sich die Verschlussschraubeneinrichtung Sd (bei entferntem Sprengring Rs) von der Inboardseite, bezogen auf Fig. 8 also von links, in das Ritzelcluster Sc2 einführen.

Anschließend wird der Sprengring Rs in der umlaufenden Nut der Verschlussschraubeneinrichtung Sd angeordnet, wodurch beim späteren Einschrauben der Verschlussschraubeneinrichtung Sd in das Innengewinde Ti der Antreibereinrichtung Dd der im Wesentlichen axiale Kraftfluss Ff durch die Ritzelanordnung Ap und die Antreibereinrichtung Dd hergestellt wird, welcher die Ritzelanordnung Ap auf der Antreibereinrichtung Dd fixiert, wie weiter oben im Hinblick auf Fig. 4 dargelegt. Auf diese Weise lassen sich mit minimaler Teileanzahl und minimalem konstruktivem Aufwand sehr kleine Ritzel mit Zähnezahl von 10 oder darunter zusammen mit einer Standard-Antreibereinrichtung Dd einsetzen.

In Fig. 8 ist außerdem schematisch dargestellt, auf welche Weise das weitere Ritzelcluster Sc2 als im Wesentlichen einstückiges Modul aus Einzelritzeln Z9 - Z12 zusammengesetzt wird. Bevorzugt erfolgt dies durch Laserschweißen, wobei die Richtungen beispielhafter Schweiß-Laserstrahlen in Fig. 8 durch Blockpfeile Bl angedeutet sind. Mit anderen Worten bedeutet dies, dass die Laserschweißung der Einzelritzel Z9 - Z12, aus denen sich das Ritzelcluster Sc2 bei der dargestellten Ausführungsform zusammensetzt, von schräg innen erfolgt, wodurch Kehlnähte Wf in den jeweils punktiert angedeuteten Bereichen gebildet werden. Auf diese Weise lassen sich die Einzelritzel Z9 - Z12 miteinander fest zu einem einstückigen Ritzelcluster Sc2 verbinden, wobei aufgrund der geometrisch guten Zugänglichkeit der Kehlnähte Wf von radial innen eine optimale Schweißnaht erzeugt werden kann.

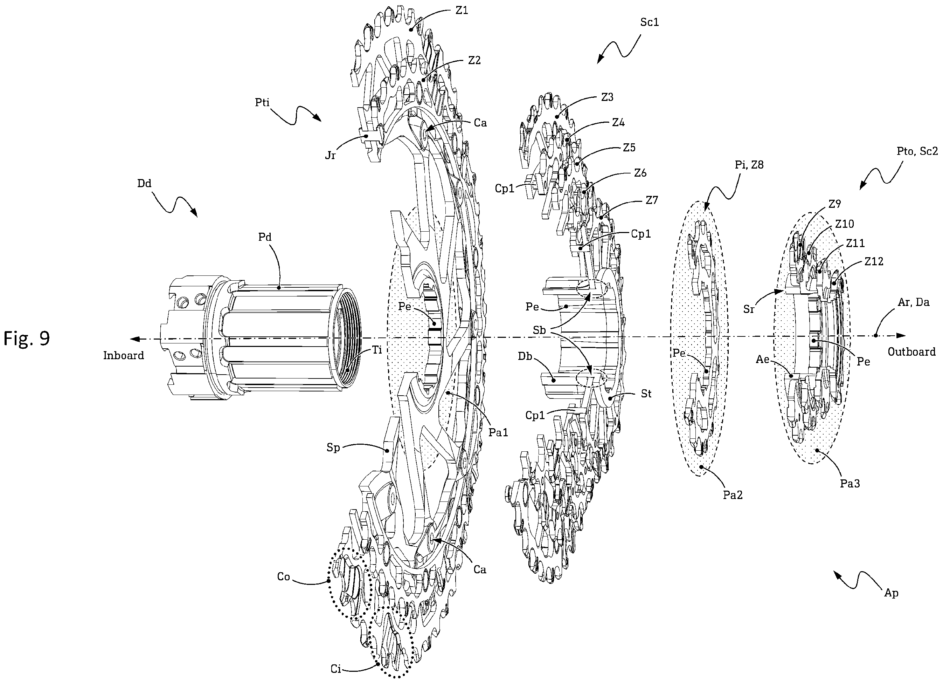

Fig. 9 zeigt eine weitere Ausführungsform einer Ritzelanordnung Ap. Auch hier ist zunächst wieder die weiter oben beschriebene, outboardseitig drehbare Lagerung Sb des ersten Ritzelclusters Sc1 erkennbar. Im Unterschied zu der weiter oben beschriebenen Ritzelanordnung beispielsweise gemäß Fig. 2, welche sich im Wesentlichen aus den Modulen "inboardseitige Abschlussritzeleinrichtung Pti" (z.B. Ritzelspider Sp mit daran befestigten Ringritzeln Z1, Z2), "erstes Ritzelcluster Sc1" und "outboardseitige Abschlussritzeleinrichtung Pto" (beispielsweise weiteres Ritzelcluster Sc2) zusammensetzt, weist die Ritzelanordnung Ap gemäß Fig. 9 eine hier als Einzelritzel Z8 ausgebildete, zusätzliche Ritzeleinrichtung Pi auf. Man erkennt, dass das Einzelritzel Z8 in Axialrichtung Da zwischen einem kragenförmigen Anschlag St der Lagereinrichtung Db und einem ringförmigen Anschlag Sr im Bereich des outboardseitigen Ritzelclusters Sc2 klemmend aufnehmbar ist.

Bei dem ringförmigen Anschlag Sr kann es sich beispielsweise um eine unmittelbar oder einstückig am outboardseitigen Ritzelcluster Sc2 angeordnete Anschlagsfläche handeln, oder um eine Anschlagsfläche Sr an einem separaten ringförmigen Abstandselement Ae, welches vorzugsweise aus Kunststoff besteht.

Der Vorteil der Anordnung eines Einzelritzels Z8 zwischen dem ersten Ritzelcluster Sc1 und dem zweiten bzw. outboardseitigen Ritzelcluster Sc2 besteht insbesondere darin, dass sich das Einzelritzel Z8 im Verschleißfall einfach und kostengünstig austauschen lässt. Dies ist im Fall des Einzelritzels Z8, welches bei der dargestellten Ritzelanordnung eine Zähnezahl von 18 Zähnen aufweist, auch dahingehend von Bedeutung, als es sich bei diesem Ritzel gemäß statistischer Untersuchungen der Anmelderin um eines der am häufigsten benutzten Ritzel handelt, welches somit besonders hohem Verschleiß unterliegt.

In besonderem Maße gilt dies für e-Bikes bzw. Pedelecs, bei denen die Belastung des Antriebsstrangs Td und insbesondere der Ritzel der Ritzelanordnung Ap höher ist als bei Fahrrädern ohne elektrischem Zusatzantrieb.

Die Anordnung eines Einzelritzels Z8 zwischen dem ersten Ritzelcluster Sc1 und dem zweiten bzw. outboardseitigen Ritzelcluster Sc2 führt bei dem in Fig. 9 dargestellten Ausführungsbeispiel auch dazu, dass die Ritzelanordnung Ap in drei in Axialrichtung Da voneinander beabstandeten axialen Bereichen Pa1, Pa2, Pa3 zur Übertragung des Antriebsdrehmoments auf die Antreibereinrichtung eingerichtet ist. Bei den Positionen Pa1, Pa2, Pa3 handelt es sich um den axialen Bereich Pa1 des am Ritzelspider Sp angeordneten Eingriffsprofils Pe, weiterhin um den axialen Bereich Pa2 des am outboardseitigen Ritzelcluster Sc2 angeordneten Eingriffsprofil Pe, und schließlich um den axialen Bereich Pa3 am Innenumfang des Einzelritzels Z8, welches hierzu ebenfalls ein Eingriffsprofil Pe zum drehmomentübertragenden Eingriff mit der Antreibereinrichtung Dd aufweist.

Fig. 10 zeigt eine Anzahl outboardseitiger Ritzel Z6 bis Z12 einer Ritzelanordnung Ap gemäß Fig. 2 bis 9 in perspektivischer, teilweise geschnittener Darstellung. In Klammern hinter den Bezugszeichen Z6 bis Z12 sind dabei die Zähnezahlen der Ritzel dieses Ausführungsbeispiels angegeben. Die Ritzel Z6 bis Z12 sind nicht in der tatsächlichen rotatorischen Relativposition zueinander dargestellt, sondern darstellungshalber so gegeneinander verdreht, dass die Gestaltung insbesondere der Dick-Dünn-Zähne ersichtlich wird.

Bei den geradzahligen Ritzeln Z6 und Z8 bis Z12 handelt es sich um weiter oben schon beschriebene Dick-Dünn-Ritzel, deren Zähne somit alternierend einer schmalen oder einer breiten Zahngruppe mit jeweils unterschiedlicher Zahnbreite zugeordnet sind. Dabei sind die Zähne der schmalen Zahngruppe schmale Zähne, die schmäler sind als der Innenlaschenzwischenraum Wci eines Innenlaschen-Kettenglieds Li einer der Ritzelanordnung zugeordneten Fahrradkette Cn, während die breite Zahngruppe zumindest einen breiten Zahn umfasst, der breiter ist als der Innenlaschenzwischenraum Wci des Innenlaschen-Kettenglieds, jedoch schmäler als der Außenlaschenzwischenraum Wco eines Außenlaschen-Kettenglieds Lo (vgl. Fahrradkette Cn in Fig. 11B).

Die Dick-Dünn-Ritzel sorgen für eine Stabilisierung des Kettenlaufs auf dem jeweils von der Kette Cn belegten Ritzel, solange kein Schaltvorgang stattfindet, und vermindern u.a. das unerwünschte Abheben der Kette von dem Ritzel beispielsweise bei starken Erschütterungen oder Kettenschlägen. Weiterhin sorgen die Dick-Dünn-Ritzel für eine Synchronisierung zwischen der Kette Cn und dem von der Kette Cn belegten Ritzel dergestalt, dass Innenlaschen-Kettenglieder Li spezifisch in Eingriff mit den zugehörigen schmalen Zähnen des Ritzels gelangen, während Außenlaschen-Kettenglieder Lo spezifisch in Eingriff mit den zugehörigen breiten Zähne des Ritzels gelangen. Dies ermöglicht eine spezifisch auf den Eingriff mit Außenlaschen-Kettengliedern Lo bzw. Innenlaschen-Kettengliedern Li hin optimierte Gestaltung der breiten und schmalen Zähne des Ritzels.

In Fig. 10 sind die im Vordergrund sichtbaren breiten Ritzelzähne Tw, die also zum Eingriff in Außenlaschen-Kettenglieder Lo vorgesehen sind, zur leichteren Erkennbarkeit mit kleinen Kreismarkierungen versehen. Ebenso sind die im Vordergrund sichtbaren schmalen Ritzelzähne Tn, die also zum Eingriff in Innenlaschen-Kettenglieder Li vorgesehen sind, zur leichteren Erkennbarkeit mit kleinen Quadratmarkierungen versehen.

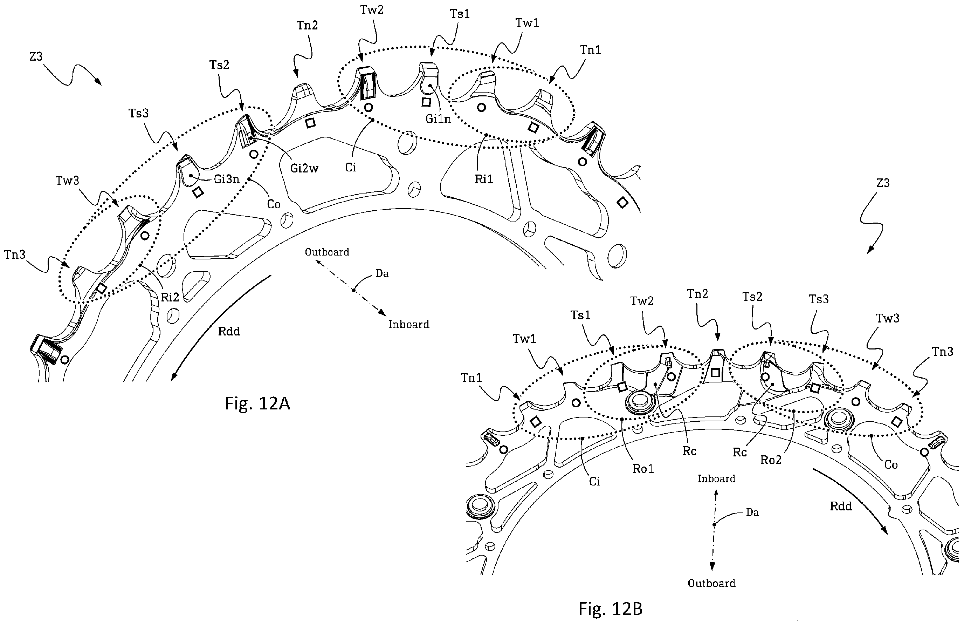

Es ist dabei zu beachten, dass nicht jeder zu der Gruppe der breiten Ritzelzähne Tw eines Dick-Dünn-Ritzels einer Mehrfach-Ritzelkassette gehörige Zahn Tw tatsächlich eine Breite aufweist, welche im Wesentlichen der lichten Weite Wco der Außenlaschen-Kettenglieder Lo eine zugehörigen Kette Cn gemäß Fig. 11B entspricht. Dies liegt daran, dass Dick-Dünn-Ritzel einer Mehrfach-Ritzelkassette an einer oder an beiden Stirnflächen im Bereich von Schaltgassen Ci, Co typischerweise Schaltausnehmungen Ri, Ro aufweisen. Im Bereich der Schaltgassen Ci, Co bzw. Schaltausnehmungen Ri, Ro ist die Breite der dort befindlichen Ritzelzähne, insbesondere die Breite der Zähne Tw aus der Gruppe der beiden Ritzelzähne Tw typischerweise reduziert (vgl. hierzu Fig. 11A und 12 sowie die zugehörige Beschreibung weiter unten).

Bei dem Ritzel Z7 gemäß Fig. 10, welches eine ungeradzahlige Zähnezahl von 21 Zähnen aufweist, sind zwar ebenfalls unterschiedlich breite Zähne vorhanden. Jedoch sind alle Zähne des Ritzels Z7 nicht breiter als die lichte Weite bzw. als der Innenlaschenzwischenraum Wci der Innenlaschen-Kettenglieder Li gemäß Fig. 11B. Dies liegt daran, dass bei einem ungeradzahligen Ritzel wie beim Ritzel Z7 die oben beschriebene Synchronisation mit der Kette Cn prinzipiell nicht stattfinden kann, da alle Ritzelzähne eines ungeradzahligen Ritzels bei jeder Umdrehung des Ritzels abwechselnd mit Innenlaschen-Kettengliedern Li und Außenlaschen-Kettengliedern Lo in Eingriff gelangen.

Bei den in Fig. 10 abgebildeten Ritzeln Z6 bis Z12 handelt es sich um Ritzel, welche in einem Stanz-Pressverfahren hergestellt sind. Man erkennt, dass die unterschiedliche Breite der Zähne, bei den geradzahligen Ritzeln insbesondere die unterschiedliche Breite der breiten Zähne Tw und der schmalen Zähne Tn dadurch erzeugt ist, dass typischerweise auf einer outboardseitigen Stirnfläche der Ritzel Einprägungen Di vorgenommen sind, welche beim Stanz-Pressen der Ritzel zu einer Materialverdrängung und zu entsprechenden Auswölbungen Dp auf der gegenüberliegenden, typischerweise also auf der inboardseitigen Stirnfläche des jeweiligen Ritzels führen.

Lediglich beim kleinsten Ritzel Z12 ist dies umgekehrt, da dort gepresste Einprägungen Di auf einer inboardseitigen Stirnfläche des Ritzels Z12 und entsprechende Auswölbungen Dp auf einer outboardseitigen Stirnfläche des Ritzels Z12 angeordnet sind.

Die Einprägungen Di und Auswölbungen Dp können an den Ritzelzähnen dabei im wesentlichen mittig, bezogen auf eine Umfangsrichtung des jeweiligen Ritzels angeordnet sein, wie dies beispielsweise bei den Ritzeln Z6, Z7 und Z8 gemäß Fig. 10 der Fall ist. Alternativ können die Einprägungen Di und Auswölbungen Dp an den Ritzelzähnen auch seitlich, bezogen auf eine Umfangsrichtung des jeweiligen Ritzels angeordnet sein, wie dies beispielsweise bei den Ritzeln Z9 bis Z12 der Fall ist. Die Anordnung der Einprägungen Di und Auswölbungen Dp seitlich an den Ritzelzähnen, im Beispielfall der Fig. 10 an einer jeweiligen Nichtlastflanke Fn des jeweiligen Ritzelzahns, hat Vorteile bezüglich der Herstellbarkeit der Einprägungen Di und Auswölbungen Dp mittels des Stanz-Pressverfahrens, und bezüglich der Belastbarkeit und Verschleißfestigkeit insbesondere der Lastflanken Fl der Ritzelzähne, die mit dieser Anordnung der Einprägungen Di und Auswölbungen Dp an der Nichtlastflanke Fn weniger geschwächt werden.

Fig. 11A zeigt höchst schematisiert einen Teil einer flachen Abwicklung des Umfangs eines geradzahligen Dick-Dünn-Ritzels Z3 der Ritzelanordnung Ap gemäß der vorliegenden Offenbarung, einschließlich einer auf dem Ritzel Z3 laufenden Fahrradkette Cn. Dabei ist der Lauf der Fahrradkette Cn auf dem Ritzel Z3 in Fig. 11A in Form von strichlierten Doppellinien symbolisiert, deren Verlauf näherungsweise dem Verlauf der Innenoberflächen der Außenlaschen-Kettenglieder Lo gemäß Fig. 11B entspricht.

Man erkennt in Fig. 11A zunächst im Hintergrund hell punktiert den Grundkörper Bm des Ritzels Z3, welcher eine Dicke Dm aufweist. Die Dicke Dm des Ritzelgrundkörpers Bm entspricht hier auch der Zahnbreite Ww der "normalen" breiten Zähne Tw0 in denjenigen Bereichen des Ritzels, in welchen sich keine Schaltgassen, also weder Inboard-Schaltgassen Ci noch Outboard-Schaltgassen Co befinden, vgl. Beispiele für Inboard-Schaltgassen Ci und Outboard-Schaltgassen Co in Fig. 2, Fig. 9 und Fig. 12 bis 14. Bei dem Ritzel Z3 in Fig. 11A kann es sich insbesondere um ein gefrästes Ritzel handeln, bei dem die Dicke Dm des Grundmaterials üblicherweise mit der Breite Ww der breiten Zähne übereinstimmt. Bei einem durch ein Stanz-Pressverfahren hergestellten Ritzel hingegen stimmt die Dicke des Grundmaterials häufig mit der Breite der schmalen Zähne überein, vgl. beispielsweise Fig. 10 und die zugehörige Beschreibung. Die in Bezug auf Fig. 11A und 11B angestellten geometrischen Überlegungen sind jedoch prinzipieller Art und damit sowohl auf gefräste Ritzel als auch auf gestanzte/gepresste Ritzel anwendbar.

Bereiche des Ritzels Z3 gemäß Fig. 11A ohne Schaltgassen Ci, Co befinden sich im linken und rechten Bereich der abgebildeten Ritzelabwicklung des Ritzels Z3, mit den in diesen Bereichen erkennbaren "normalen" breiten Zähnen Tw0 und "normalen" schmalen Zähnen Tn0.

Die "normalen" breiten Zähne Tw0 haben eine Zahnbreite, welche es diesen breiten Zähnen Tw erlaubt, jeweils in ein Außenlaschen-Kettenglied Lo einer Fahrradkette Cn gemäß Fig. 11B einzugreifen, wobei die Außenlaschen-Kettenglieder Lo eine lichte Weite bzw. einen Außenlaschenzwischenraum Wco besitzen.

Die "normalen" schmalen Zähne Tn0 haben eine Zahnbreite, welche es diesen schmalen Zähnen Tn erlaubt, jeweils in ein Innenlaschen-Kettenglied Li der Fahrradkette Cn einzugreifen. Die Innenlaschen-Kettenglieder Li gemäß Fig. 11B besitzen eine lichte Weite bzw. einen Innenlaschenzwischenraum Wci.

Im mittleren Bereich der in Fig. 11A abgebildeten Ritzelabwicklung weist das Ritzel Z3 zwei (für sich genommen zunächst bekannte) Schaltgassenbereiche auf, nämlich einen Inboard-Schaltgassenbereich Ci für den Wechsel der Kette Cn beim Schaltvorgang von einem kleineren, in Outboardrichtung benachbarten, in Fig. 11A nicht abgebildeten Ritzel auf das Ritzel Z3, sowie einen Outboard-Schaltgassenbereich Co für den Wechsel der Kette Cn beim Schaltvorgang von dem Ritzel Z3 zu dem nicht abgebildeten kleineren, in Outboardrichtung benachbarten Ritzel.

Beim Outboard-Schaltvorgang ist es wichtig, dass die Kette Cn tatsächlich nur im Outboard-Schaltgassenbereich Co über die dort befindlichen speziellen Ritzel-Schaltfeatures wie beispielsweise inboardseitige Ausnehmungen Ri und outboardseitige Ausnehmungen Ro sowie Fasen und Stützkanten der Zähne (s. auch Beispiele für Outboard-Schaltgassenbereiche Co in Fig. 2, Fig. 9 und Fig. 12 bis 14) auf das benachbarte, nächstkleinere Ritzel wechselt. Gelingt dies nicht, und die Kette wechselt in einem Bereich außerhalb einer Outboard-Schaltgasse Co auf das benachbarte, nächstkleinere Ritzel, so kann dies zu Störungen des Kettenlaufs, zu Geräuschen, zum Kettenspringen, und beim Schalten unter Last auch zu Beschädigungen von Kette und/oder Ritzeln führen.

Bei Dick-Dünn-Ritzeln, wie beispielsweise bei dem Ritzel Z3 gemäß Fig. 11A ist der Wechsel der Kette Cn zum jeweils benachbarten Ritzel ausschließlich in den Schaltgassenbereichen Co, Ci von noch größerer Bedeutung als bei Ritzeln ohne alternierende Dick-Dünn-Zähne Tw und Tn, da es bei einem Wechsel der Kette Cn außerhalb der Schaltgassenbereiche Co, Ci auch zu einer Desynchronisierung des Kettenlaufs auf dem jeweiligen Ritzel kommen kann. Hierbei würden Innenlaschen-Kettenglieder Li auf breiten Ritzelzähnen Tw zu liegen kommen, wobei die breiten Ritzelzähne Tw aufgrund deren Breite Dm nicht in die Innenlaschen-Kettenglieder Li mit deren lichten Weite Wci eintreten könnten. In solchen Fällen kann es zum Durchrutschen der Kette Cn auf dem Dick-Dünn-Ritzel Z3 kommen, mit entsprechend nachteiligen bzw. schädigenden, oder sogar gefährlichen Folgen beim Betrieb des Fahrrads.

Mit diesem Hintergrund weist das Ritzel Z3 gemäß Fig. 11A Stabilisierungszähne Ts1, Ts2, Ts3 auf, die im Outboard-Schaltgassenbereich Co bzw. in dem dem Outboard-Schaltgassenbereich Co des Ritzels Z3 benachbarten Inboard-Schaltgassenbereich Ci angeordnet sind. Die Stabilisierungszähne Ts 1 und Ts3 gehören zur Zahngruppe der schmalen Zähne Tn des Dick-Dünn-Ritzels, also zu den schmalen Zähnen Tn, während der Stabilisierungszahn Ts2 zur breiten Zahngruppe der Zähne des Dick-Dünn-Ritzels, also zu den breiten Zähnen Tw gehört. In Fig. 11A sind die Zähne Tw der breiten Zahngruppe wieder durch kleine Kreismarkierungen, und die Zähne Tn der schmalen Zahngruppe wieder durch kleine Quadratmarkierungen gekennzeichnet.

Bei den beiden zu den schmalen Zähnen Tn gehörigen Stabilisierungszähnen Ts1 und Ts3 steht jeweils eine inboardseitige Kettenführungsfläche Giln und Gi3n gegenüber den inboardseitigen Kettenführungsflächen Gi0n der restlichen "normalen" schmalen Zähne Tn0 der schmalen Zahngruppe in Inboardrichtung über.

Hierdurch ergibt sich im dargestellten Ausführungsbeispiel bei den schmalen Stabilisierungszähnen Ts1 bzw. Ts3, jeweils zusammen mit dem nächsten benachbarten schmalen Zahn Tn1 bzw. Tn3, eine zahnübergreifende Kettenführungsabmessung Dcn1 bzw. Dcn3, welche gegenüber der in Bereichen ohne Schaltgassen Ci, Co zu findenden, "normalen" zahnübergreifenden Kettenführungsabmessung Dcn0 benachbarter schmaler Zähne Tn0 vergrößert und nach inboard verschoben ist, wie man in Fig. 11A erkennt.

Analog ergibt sich im dargestellten Ausführungsbeispiel bei dem breiten Stabilisierungszahn Ts2, hier ebenfalls zusammen mit dem Zahn Tn3, eine zahnübergreifende Kettenführungsabmessung Dcw1, welche gegenüber der in Bereichen ohne Schaltgassen Ci, Co zu findenden, "normalen" zahnübergreifenden Kettenführungsabmessung Dcw0 breiter Zähne Tw0 vergrößert und nach inboard verschoben ist.

Allgemein ist eine zahnübergreifende Kettenführungsabmessung (z.B. die zahnübergreifende Kettenführungsabmessung Dcn1) eine Kettenführungsabmessung bzw. effektive Kettenführungsbreite, die sich durch das Zusammenwirken beispielsweise einer inboardseitigen Kettenführungsfläche eines Ritzelzahns (z.B. inboardseitige Kettenführungsfläche Giln des Ritzelzahns Ts1) mit einer in Umfangsrichtung des Ritzels Z3 nächstliegend mit einer Innenfläche der Kette Cn in Kontakt stehenden outboardseitigen Kettenführungsfläche (z.B. outboardseitige Kettenführungsfläche Go1n des Ritzelzahns Tn1) ergibt.

Ein anderes Beispiel für eine zahnübergreifende Kettenführungsabmessung ist die effektive Kettenführungsbreite bzw. Kettenführungsabmessung Dcw1, die sich durch das Zusammenwirken der inboardseitigen Kettenführungsfläche Gi2w des Ritzelzahns Ts2 mit einer in Umfangsrichtung des Ritzels Z3 nächstliegend mit der Kette Cn in Kontakt stehenden outboardseitigen Kettenführungsfläche Go3n des Ritzelzahns Tn3 ergibt.

Diese zahnübergreifende Kettenführungsabmessung Dcw1 ergibt sich somit dadurch, dass die Kette mit einer Innenfläche eines Außenlaschen-Kettenglieds Lo an der inboardseitigen Kettenführungsfläche Gi2w des Ritzelzahns Ts2, und in einer Umfangsrichtung des Ritzels Z3 als nächstes mit einer Innenfläche eines Innenlaschen-Kettenglieds Li an der outboardseitigen Kettenführungsfläche Go3n des Ritzelzahns Tn3 anliegt.

Durch die solchermaßen inboardseitige (bei Gi2w) und nächstliegend outboardseitige Anlage (bei Go3n) der Kette Cn und durch die damit in diesem Bereich gebildete zahnübergreifende Kettenführungsabmessung Dcw 1 wird somit die Position der Kette Cn auf dem Ritzel Z3 in hinterachs-axialer Richtung Da im Bereich der Ritzelzähne Ts2 bis Tn3 festgelegt.

Eine zahnübergreifende Kettenführungsabmessung Dcn, Dcw legt also die Position der Kette Cn auf dem Ritzel Z3 in hinterachs-axialer Richtung Da in einem jeweils betrachteten Umfangsabschnitt des Ritzels Z3 fest.

Für weitere Erläuterungen zur zahnübergreifenden Kettenführungsabmessung und deren Einfluss auf den Kettenlauf wird auch auf die Ausführungen weiter oben in der Beschreibungseinleitung verwiesen.

Bei dem in Fig. 11A dargestellten Ritzel entspricht die in Bereichen ohne Schaltgassen Ci und Co vorzufindende "normale" zahnübergreifende Kettenführungsabmessung Dcn0 der schmalen Zähne Tn im Wesentlichen der Breite (in hinterachs-axialer Richtung Da betrachtet) der schmalen Zähne Tn.

Das vorstehend zu den beiden Stabilisierungszähnen Ts1 und Ts3 der Gruppe der schmalen Zähne Tn gesagte gilt analog für den Stabilisierungszahn Ts2, welcher zur Gruppe der breiten Zähne Tw gehört. Wie ebenfalls Fig. 11A zu entnehmen, steht auch bei dem breiten Stabilisierungszahn Ts2 eine inboardseitige Kettenführungsfläche Gi2w gegenüber den inboardseitigen Kettenführungsflächen Gi0w der anderen, "normalen" breiten Zähne Tw0 der breiten Zahngruppe in Inboardrichtung über.

Die dergestalt vergrößerten und nach inboard verschobenen zahnübergreifenden Kettenführungsabmessungen Dcn1, Dcw1 und Dcn3, bzw. die jeweils nach Inboard verschobenen inboardseitigen Kettenführungsflächen Giln, Gi2w und Gi3n der Stabilisierungszähne Ts1, Ts2 und Ts3 führen jeweils dazu, dass die Kette Cn im Bereich der Stabilisierungszähne Ts1, Ts2 bzw. Ts3 in hinterachs-axialer Richtung Da bei Cd geringfügig nach inboard verlagert wird, was in Fig. 11A durch den doppelt strichliert angedeuteten Verlauf der Kette Cn visualisiert ist.

Die auf diese Weise durch einen oder mehrere der Stabilisierungszähne Ts1, Ts2 und Ts3 bewirkte Auslenkung Cd der Kette Cn nach inboard beim normalen Kettenlauf stabilisiert den Lauf der Kette Cn auf dem Ritzel Z3 der Ritzelanordnung Ap, beispielsweise und insbesondere im Bereich einer Inboard-Schaltgasse Ci, vgl. Schaltgassen Ci in Fig. 2, Fig. 9, Fig. 12, Fig. 13 und Fig. 14A.

Mit anderen Worten erfährt die Kette Cn durch die Wirkung eines bzw. mehrerer der Stabilisierungszähne Ts1, Ts2 und Ts3 insbesondere im Bereich der Inboard-Schaltgasse Ci eine geringfügige Auslenkung Cd nach inboard. Hierdurch wird verhindert, dass die Kette Cn im Bereich der Inboard-Schaltgasse Ci, welche ebenso wie eine Outboard-Schaltgasse Co insbesondere outboardseitige Ausnehmungen Ro an den Ritzelzähnen aufweist, unerwünscht nach outboard schaltet. Eine derartige Fehlschaltung würde die Gleichmäßigkeit und Ruckfreiheit des Schaltvorgangs beeinträchtigen, den synchronen Lauf der Kette Cn auf den Dick-Dünn-Zähnen Tw, Tn der Ritzelanordnung Ap stören und kann, zumindest beim Schalten unter Last, auch zu Beschädigungen der Ritzelanordnung Ap und/oder der Kette Cn führen.

Das ordnungsgemäße Outboard-Schalten im Bereich der Outboard-Schaltgasse Co wird durch die Stabilisierungszähne Ts1, Ts2, Ts3 und durch die Auslenkung Cd der Kette Cn nicht beeinträchtigt, da Outboard-Schalten im Bereich der Outboard-Schaltgasse Co vom Schaltwerk Rd gemäß Fig. 1 bereits eingeleitet wird, bevor die Kette die Stabilisierungszähne Ts1, Ts2, Ts3 erreicht. Mit anderen Worten nimmt die Kette beim Outboard-Schalten bereits einen schrägen Kettenverlauf durch die Bereiche Ri2 und Ro2 der Outboard-Schaltgasse Co (vgl. Fig. 12B), und wird somit von den Stabilisierungszähnen Ts1, Ts2, Ts3 inboardseitig nicht mehr erfasst und damit auch nicht nach inboard ausgelenkt.

Ein weiterer Vorteil der nach inboard verschobenen inboardseitigen Kettenführungsfläche Giln, Gi2w und Gi3n des zumindest einen Stabilisierungszahns Ts1, Ts2, Ts3 besteht darin, dass der jeweilige Stabilisierungszahn Ts1, Ts2, Ts3 damit eine größere Zahnbreite erhält, welche die Verschleißbeständigkeit des Stabilisierungszahns Ts1, Ts2, Ts3 erhöht. Dies ist insbesondere dann von Vorteil, wenn sich der zumindest eine Stabilisierungszahn Ts1, Ts2, Ts3, was vorzugsweise der Fall ist, im Bereich einer Schaltgasse Ci, Co befindet und somit bei Ro eine outboardseitige Ausnehmung bzw. eine outboardseitig reduzierte Zahnbreite aufweist.

Es sei nochmals darauf hingewiesen, dass die Darstellung von Fig. 11A höchst schematisiert ist und insbesondere nicht maßstabsgerecht den tatsächlichen Verhältnissen an einem Ritzel Z3 entspricht. Auch die Kette Cn in Fig. 11B ist lediglich schematisch dargestellt, wobei insbesondere die Breite der Kette Cn gegenüber der Breite einer tatsächlichen Fahrradkette darstellungshalber vergrößert ist.

Fig. 12A und Fig. 12B zeigen das Ritzel Z3 mit den Stabilisierungszähnen Ts1, Ts2 und Ts3 gemäß Fig. 11A in zwei verschiedenen Ansichten. Das Ritzel Z3 ist in Fig. 12A schräg von der Rückseite, also von der Inboardseite her dargestellt, während das Ritzel Z3 in Fig. 12B mit Blick auf die Vorderseite, also auf die Outboardseite gezeigt ist. Die Pfeile Rdd zeigen jeweils die Antriebsdrehrichtung des Ritzels bei antreibender Belastung durch die Fahrradkette Cn gemäß Fig. 1.

Da es sich bei dem Ritzel Z3 um ein geradzahliges Dick-Dünn-Ritzel handelt, sind in Fig. 12A und Fig. 12B die zur Gruppe der breiten Zähne Tw gehörenden Ritzelzähne wiederum mit Kreismarkierungen, und die zur Gruppe der schmalen Zähne Tn gehörenden Ritzelzähne wiederum mit Quadratmarkierungen gekennzeichnet.

In dem mit Co bezeichneten Bereich befindet sich eine Outboard-Schaltgasse, und in dem mit Ci bezeichneten Bereich eine Inboard-Schaltgasse (vgl. Schaltgassen Ci und Co in Fig. 11A sowie die z.B. am Ritzel Z1 markierten Schaltgassenbereiche Co und Ci in Fig. 2, Fig. 9 und Fig. 13).

In den Schaltgassenbereichen Co und Ci sind gemäß Fig. 12A inboardseitig bei Ri1 bzw. Ri2 Ausnehmungen bzw. rückseitig verschmälerte Zähne Tw1, Tn1 bzw. Tw3, Tn3 vorhanden, vgl. auch Fig. 11A. Outboardseitig sind gemäß Fig. 12B bei Ro1 bzw. Ro2 Schaltgassenausnehmungen Rc und vorderseitig verschmälerte Zähne Ts1, Tw2 bzw. Ts2, Ts3 vorhanden, vgl. ebenfalls Fig. 11A.

Wie bereits vorstehend ausgeführt, ist es zur Aufrechterhaltung der Schaltperformance und zur Vermeidung von Fehlschaltungen erforderlich, dass die Kette Cn lediglich im Bereich einer Outboard-Schaltgasse Co auf das outboardseitig nächstkleinere Ritzel Z4 (nicht dargestellt in Fig. 12A und Fig. 12B, siehe z.B. Fig. 2) wechselt. Um zu vermeiden, dass die Kette Cn stattdessen im Bereich der Inboard-Schaltgasse Ci auf das outboardseitig nächstkleinere Ritzel Z4 wechselt, weist das Ritzel Z3 die Stabilisierungszähne Ts1, Ts2 und Ts3 auf. Die Stabilisierungszähne Ts1, Ts2 und Ts3 verlagern den Kettenlauf im Bereich der Stabilisierungszähne Ts1, Ts2 und Ts3 um ein geringes Maß im Bereich von bevorzugt Zehntelmillimetern, beispielsweise um ca. 0,25 mm nach Inboard, wie in Fig. 11A bei Cd anhand des doppelt strichliert dargestellten Laufs der Kette Cn symbolisiert.

Durch diese aufgrund der Stabilisierungszähne Ts1, Ts2 und Ts3 verstärkte Geradführung der Kette Cn wird vermieden, dass die Kette Cn, insbesondere nachdem diese bei der Rotation des Ritzels Z3 die Outboard-Schaltgasse Co passiert hat, ohne dass dort auf das nächstkleinere Ritzel Z4 geschaltet worden wäre, unerwünscht im Bereich der Inboard-Schaltgasse Ci nach Outboard schaltet, insbesondere im Bereich Ri1 mit den dortigen rückseitig verschmälerten Zähnen Tn1 und Tw1, durch welche die Geradführung der Kette auf dem Ritzel Z3 vermindert ist.

Deutlich erkennbar in Fig. 12A ist die rückseitige bzw. inboardseitige Aufdickung der zur Gruppe der schmalen Zähne Tn gehörenden Stabilisierungszähne Ts1 und Ts3 und die damit verbundene Verlagerung der inboardseitigen Kettenführungsflächen Gi1n und Gi3n nach inboard, vgl. Fig. 11A. Auch beim Stabilisierungszahn Ts2, welcher zur Gruppe der breiten Zähne Tw gehört, ist eine rückseitige bzw. inboardseitige Aufdickung vorhanden, mit welcher eine Verlagerung der inboardseitigen Kettenführungsfläche Gi2w des Stabilisierungszahns Ts2 nach inboard, und eine entsprechend verstärkte Geradführung der Kette Cn in diesem Bereich verbunden ist.

Die Wirkung der Stabilisierungszähne Ts1, Ts2 und Ts3, vorliegend insbesondere des "breiten" Stabilisierungszahns Ts2 ist auch von Bedeutung beim Rückwärtstreten. Wenn der Antriebsstrang Td des Fahrrads 1 (vgl. Fig. 1) rückwärts bewegt wird, indem der Fahrer mit den Pedalkurbeln Dc rückwärts tritt, besteht insbesondere mit der Kette auf einen der größeren Ritzel wie beispielsweise Z1 bis Z3 das Risiko, dass die Kette aufgrund des in diesem Fall starken Kettenschräglaufs von dem jeweiligen Ritzel nach Inboard herunterfällt, was zu Beschädigungen am Antriebsstrang, insbesondere am Schaltwerk Rd führen kann.

Dieses Risiko besteht besonders im Bereich der Schaltgassen Ci und Co, in denen rückseitig, also inboardseitig, verschmälerte Zähne Tn1, Tw 1 und Tw3, Tn3 vorhanden sind, siehe die Bereiche Ri1 und Ri2 in Fig. 11 und Fig. 12A mit den dortigen, rückseitig verschmälerten Zähnen Tn1, Tw1, Tw3, Tn3. Auch in diesem Fall des Rückwärtstretens wird durch die rückseitig aufgedickten Stabilisierungszähne Ts1, Ts2 und Ts3 die Geradführung der Kette Cn verstärkt, und somit die Tendenz zum Abspringen beim Rückwärtstreten verringert. Dies gilt insbesondere für die beiden rückseitig verschmälerten Schaltgassenzähne Tw3 und Tn3 im Bereich Ri2, die zudem vorderseitig mit einer schrägen Fase versehen sind (s. Fig. 12B), was das unerwünschte Abspringen der Kette beim Rückwärtstreten besonders begünstigen würde, wenn nicht insbesondere der rückseitig aufgedickte Stabilisierungszahn Ts2 dem entgegenwirken würde.

Stabilisierungszähne Ts1, Ts2 und Ts3 können auch an anderen Ritzeln der Ritzelanordnung Ap als am Ritzel Z3 angeordnet werden. Ferner können die Stabilisierungszähne Ts1, Ts2 und Ts3 auch unabhängig voneinander eingesetzt werden, es kann also beispielsweise nur einer oder zwei der Stabilisierungszähne Ts1, Ts2 und Ts3 an einem Ritzel angeordnet werden.

Die Anwendung der Stabilisierungszähne Ts1, Ts2 und Ts3 ist auch nicht auf Dick-Dünn-Ritzel beschränkt. Vielmehr können Stabilisierungszähne wie beispielsweise die Stabilisierungszähne Ts1, Ts2 und/oder Ts3 auch bei standardmäßigen Ritzeln ohne Dick-Dünn-Technologie eingesetzt werden, also bei Ritzeln, bei denen im wesentlichen alle Zähne dünne Ritzelzähne sind, die also in den Innenlaschenzwischenraum der Innenlaschen-Kettenglieder der Fahrradkette eingreifen können.

Ferner ist die Anwendung von Stabilisierungszähnen auch nicht auf die vorstehend beschriebene Verhinderung des Outboard-Schaltens an unerwünschter Stelle an einem Ritzel beschränkt. Außer den vorstehend beschriebenen Stabilisierungszähnen mit nach inboard verschobener inboardseitiger Kettenführungsfläche, bzw. mit entsprechend vergrößerter und nach inboard verschobener zahnübergreifender Kettenführungsabmessung, zur Verhinderung des Outboard-Schaltens an unerwünschter Stelle können Stabilisierungszähne auch mit nach outboard verschobener outboardseitiger Kettenführungsfläche, bzw. mit entsprechend vergrößerter und nach outboard verschobener zahnübergreifender Kettenführungsabmessung ausgeführt und zur Verhinderung des Inboard-Schaltens an unerwünschter Stelle an einem Ritzel einer Mehrfach-Ritzelkassette Ap eingesetzt werden.

Die Anwendung von Stabilisierungszähnen ist auch nicht auf Ritzelkassetten bzw. Hinterrad-Ritzelanordnungen Ap beschränkt, sondern kann auch bei Mehrfach-Kettenrädern Cr eines Fahrrad-Antriebsstrangs Td gemäß Fig. 1 erfolgen.

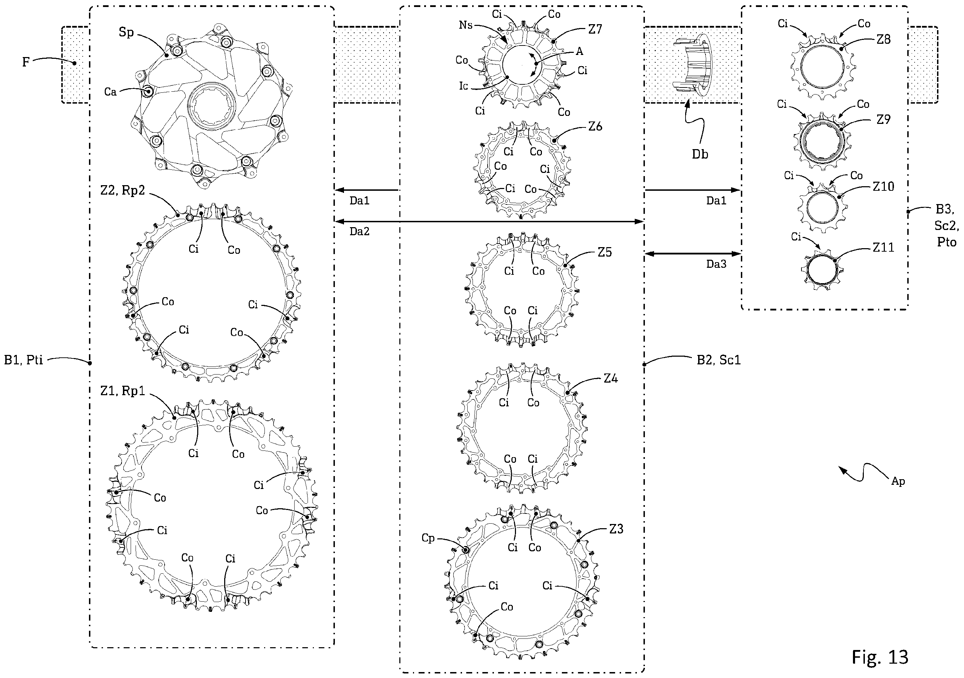

Fig. 13 visualisiert beispielhaft ein modulares Baukastensystem zur Erzeugung von Mehrfach-Ritzelanordnungen, welches sich anhand der Ritzelanordnung gemäß der vorliegenden Offenbarung realisieren lässt.

Man erkennt drei in Fig. 13 durch vertikale Flächenbereiche abgegrenzte, modulare Baugruppen B1, B2 und B3 der Ritzelanordnung, wobei die Baugruppe B1 beim gezeigten Ausführungsbeispiel durch eine inboardseitige Abschlussritzeleinrichtung Pti, die Baugruppe B2 durch ein erstes Ritzelcluster Sc1 und die Baugruppe B3 durch eine ein weiteres Ritzelcluster Sc2 gebildet ist.

Die Baugruppe B1, die beim gezeigten Ausführungsbeispiel durch die inboardseitige Abschlussritzeleinrichtung Pti gebildet ist, liegt bei dieser Ausführungsform als Ritzelspider Sp mit zwei an dem Ritzelspider Sp befestigbaren, beispielsweise mit dem Ritzelspider verschraubbaren, vernietbaren oder verpinnbaren Ritzelringen Z1/Rp1 und Z2/Rp2 vor, vgl. Fig. 2, Fig. 3 und Fig. 9 mit der dort jeweils dargestellten Einheit aus Ritzelspider Sp und mit dem Ritzelspider Sp vernieteten Ritzelringen Z1/Rp1 und Z2/Rp2.

Die Baugruppe B2, die hier durch das erste Ritzelcluster Sc1 gebildet ist, besteht bei dieser Ausführungsform des Baukastensystems aus fünf Einzelritzeln Z3 - Z7, vgl. Fig. 2, Fig. 5, Fig. 6 und Fig. 9.

Die Baugruppe B3, die hier in Form eines weiteren Ritzelclusters Sc2 vorliegt, umfasst bei dieser Ausführungsform des Baukastensystems die Ritzel Z8 bis Z11, und entspricht damit beispielsweise dem weiteren Ritzelcluster Sc2 gemäß Fig. 8.

Weiterhin umfasst das gezeigte Baukastensystem die Abstandseinheit Db, die als übergreifendes Bindeglied zwischen den Baugruppen B1, B2 und B3 fungiert, und die hierzu eine vorteilhafte Mehrfachfunktion übernimmt. In Fig. 13 ist die Abstandseinheit Db ähnlich wie in Fig. 2 und Fig. 9 in einem Viertelschnitt dargestellt. Die Funktion als übergreifendes Bindeglied sowie die nachstehend näher beschriebene Mehrfachfunktion der Abstandseinheit Db soll in Fig. 13 durch den horizontalen Flächenbereich F symbolisiert sein.

Die Abstandseinheit Db dient dabei, wie weiter oben insbesondere in Bezug auf Fig. 2 bis Fig. 5 beschrieben, zunächst als rotatorische Lagereinrichtung, mittels der das erste Ritzelcluster Sc1 im Bereich seiner Outboardseite gegenüber der Antreibereinrichtung drehbar gelagert ist.

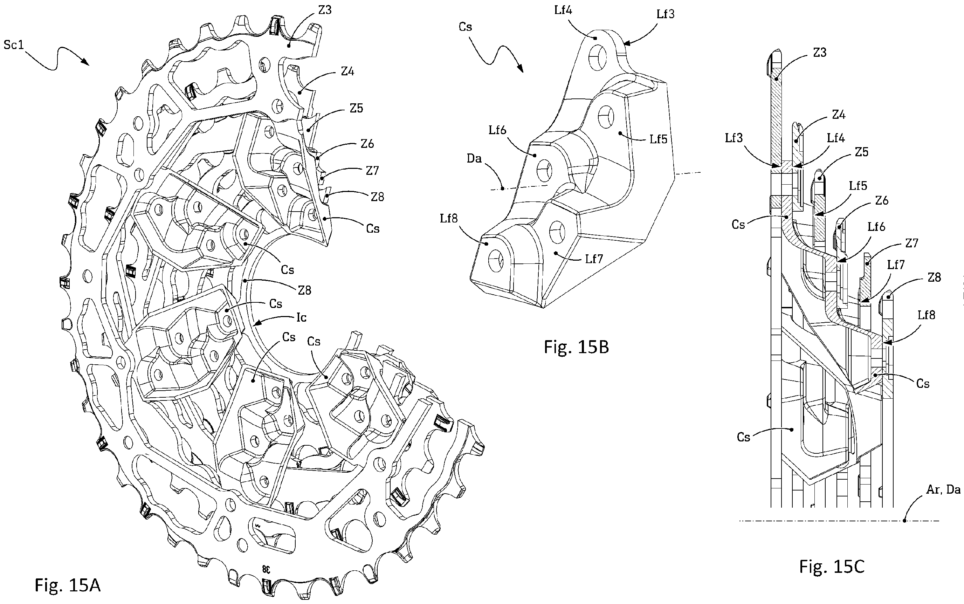

Die zur drehbaren Lagerung auf dem Lagerungsbereich Sb der Lagereinrichtung Db (vgl. Fig. 2 bis 6 und 9) eingerichtete Outboardseite des ersten Ritzelclusters Sc1 ist hier durch das outboardseitige Abschlussritzel Z7 gebildet, welches hierzu an seinem Innenumfang eine zu dem Lagerungsbereich Sb der Lagereinrichtung Db formkorrespondierend ausgebildeten, also im wesentlichen ebenfalls zylinderoberflächenförmig ausgebildeten Innenumfangsbereich Ic aufweist (vgl. Innenumfangsbereich Ic in Fig. 10 und Fig. 15A). Die drehbare Lagerung des ersten Ritzelclusters Sc1 am Innenumfangsbereich Ic dessen outboardseitigen Abschlussritzels Z7 ist in Fig. 13 durch den Doppelpfeil A symbolisiert.

Es versteht sich, dass sich das outboardseitige Abschlussritzel Z7 im Betrieb nie um einen derart großen Winkelbereich drehen wird, wie dieser durch den Doppelpfeil A angedeutet ist. Vielmehr wird sich outboardseitige Abschlussritzel Z7 typischerweise lediglich um Bruchteile von Winkelgraden drehen, aufgrund der elastischen rotatorischen Verformung des ersten Ritzelclusters Sc1, die beim Aufbringen von Antriebsdrehmoment insbesondere auf die outboardseitigen Ritzel des ersten Ritzelclusters Cp1auftritt, beispielsweise beim Aufbringen von Antriebsdrehmoment auf die Ritzel Z6 oder Z7.

Im Gegensatz hierzu ist das erste Ritzelcluster Sc1 beim Stand der Technik outboardseitig typischerweise in einem in Hinterachs-axialer Richtung verlaufenden Kraftfluss der Ritzelanordnung klemmend aufgenommen, und damit nicht wie bei der vorliegenden Ritzelanordnung Ap drehbar gelagert. Damit verbundene Losbrech-Effekte führen beim Stand der Technik zu den in der Beschreibungseinleitung dargestellten Nachteilen, beispielsweise zu unerwünschten Geräuschen wie Knacken und Quietschen bei insbesondere outboardseitiger Drehmomentbeaufschlagung des ersten Ritzelclusters. Aufgrund des unkontrollierten Auftretens der Losbrech-Effekte beim Stand der Technik und aufgrund der damit verbundenen schlagartigen Änderungen des Kraftflusses im ersten Ritzelcluster und sowie aufgrund der dabei auftretenden starken Vibrationen kann dies auch die Dauerfestigkeit des ersten Ritzelclusters beeinträchtigen.

Dank der outboardseitig auf der rotatorischen Lagereinrichtung Db drehbaren Lagerung des ersten Ritzelclusters Sc1 werden diese unerwünschten Effekte vermieden. Die outboardseitig drehbare Lagerung des ersten Ritzelclusters Sc1 führt bei antreibender Drehmomentbeaufschlagung der Ritzel des ersten Ritzelclusters Sc1, insbesondere der outboardseitigen Ritzel des ersten Ritzelclusters Sc1 wie beispielsweise Z6 und Z7, dazu, dass sich das erste Ritzelcluster Sc1 outboardseitig kontrolliert um geringe Winkelbeträge drehen und elastisch in sich verformen kann, ohne dass hierbei starke Losbrecheffekte oder Schwingungen im ersten Ritzelcluster Sc1 entstehen. Dies verbessert die Dauerfestigkeit des ersten Ritzelclusters Sc1 und verhindert unerwünschte Geräuschentwicklung wie Knacken und Quietschen. Aufgrund der damit verbesserten Dauerfestigkeit kann das erste Ritzelcluster Sc1 tendenziell auch dünnwandiger und damit leichter ausgeführt werden.

In vorteilhafter Funktionsvereinigung dient die Abstandseinheit Db, zusätzlich zur vorstehend beschriebenen outboardseitig rotatorischen Lagerung des weiteren Ritzelclusters Sc1, weiterhin zur Festlegung des Relativabstands Da1 zwischen dem Ritzelspider Sp und dem weiteren Ritzelcluster Sc2. Dies ist deutlich z.B. in Fig. 3 zu erkennen und in der zugehörigen Figurenbeschreibung weiter oben erläutert. In Fig. 13 ist der Relativabstand Da1 zwischen dem Ritzelspider Sp und dem weiteren Ritzelcluster Sc2 symbolisch durch einen entsprechenden Abstandspfeil Da1 zwischen den beiden vertikalen Flächenbereichen B1/Pti und B3/Sc2 visualisiert.

In weiter vorteilhafter Funktionsvereinigung dient die Abstandseinheit Db nicht nur zur outboardseitig rotatorischen Lagerung des ersten Ritzelclusters Sc1 und zur Festlegung und Aufrechterhaltung des Relativabstands Da1 zwischen dem Ritzelspider Sp und dem weiteren Ritzelcluster Sc2, sondern auch zur Festlegung und Aufrechterhaltung des Relativabstands Da2 zwischen dem Ritzelspider Sp und dem outboardseitigen Abschlussritzel Z7 des ersten Ritzelclusters Sc1. Dies ist deutlich insbesondere in Fig. 5 zu erkennen und in der zugehörigen Figurenbeschreibung erläutert. In Fig. 13 ist der Relativabstand Da2 zwischen dem Ritzelspider Sp und dem outboardseitigen Abschlussritzel Z7 des ersten Ritzelclusters Sc1 symbolisch durch einen entsprechenden Abstandspfeil Da2 zwischen entsprechenden Begrenzungen der beiden vertikalen Flächenbereiche B1/Pti und B2/Sc1 visualisiert.

Dies bedeutet, dass die Abstandseinheit Db in vorteilhafter Funktionsvereinigung auch die Aufgabe der Festlegung und Aufrechterhaltung der Breite Da2 des ersten Ritzelclusters Sc1 übernimmt (vgl. Fig. 5).

Weiterhin übernimmt die Abstandseinheit Db die Aufgabe der Festlegung und Aufrechterhaltung des Relativabstands Da3 zwischen der Outboardseite des ersten Ritzelclusters Sc1 und der Inboardseite des zweiten Ritzelclusters Sc2. Dies ist in Fig. 2 bis 4 sowie besonders deutlich in Fig. 5 zu erkennen und in der zugehörigen Figurenbeschreibung weiter oben erläutert. In Fig. 13 ist der Relativabstand Da3 zwischen der Outboardseite des ersten Ritzelclusters Sc1 und der Inboardseite des zweiten Ritzelclusters Sc2 symbolisch durch einen entsprechenden Abstandspfeil Da1 zwischen den beiden vertikalen Flächenbereichen B1/Pti und B3/Pto visualisiert.

Wie weiter oben bei der Beschreibung zu Fig. 4 ausgeführt, erfüllt die Abstandseinheit Db, zusätzlich zu den vorgenannten Funktionen der outboardseitig drehbaren Lagerung Sb des ersten Ritzelclusters Sc1 und der Einstellung und Aufrechterhaltung der Relativabstände Da1, Da2, Da3 zwischen Ritzelspider Sp, erstem Ritzelcluster Sc1 und zweitem Ritzelcluster Sc2 zusätzlich auch noch die Funktion eines axialen Spannelements zur Montage der Ritzelanordnung Ap auf der Antreibereinrichtung Dd.

Insbesondere dient die Abstandseinheit Db zur Übertragung einer Montagespannkraft in hinterachs-axialer Richtung Da zwischen dem Ritzelspider Sp und dem weiteren Ritzelcluster Sc2. Die Montagespannkraft ist in einem auf der Antreibereinrichtung Dd montierten Zustand der Ritzelanordnung Ap Teil eines geschlossenen, im Wesentlichen hinterachs-parallel verlaufenden Befestigungs-Kraftflusses Ff durch die Antreibereinrichtung Dd und die Ritzelanordnung Ap, vgl. Fig. 4 sowie die zugehörige Figurenbeschreibung.

Im Unterschied zu dem eingangs genannten Stand der Technik wird dabei das outboardseitige Abschlussritzel Z7 des ersten Ritzelclusters Sc1 nicht in dem axialen Kraftfluss Ff geklemmt, was beim Stand der Technik zu den eingangs beschriebenen Nachteilen insbesondere hinsichtlich Geräuschentwicklung und Dauerfestigkeit der Ritzelanordnung führt, sondern bleibt gegenüber der Antreibereinrichtung Dd mit im Vergleich zum Stand der Technik sehr geringer und von der axialen Vorspannung Ff unabhängiger Reibung drehbar. Dies ist insbesondere dann gegeben, wenn, was vorzugsweise der Fall ist, die Abstandseinheit Db aus Kunststoff besteht.

Zusammenfassend ist die Abstandseinheit Db in einer vorteilhaften Mehrfachfunktion sowohl als outboardseitig rotatorische Lagerung des ersten Ritzelclusters Sc1 als auch zur Festlegung aller Relativabstände Da1, Da2 und Da3, und zudem zur Übertragung aller hinterachs-axialen Spannkräfte zwischen dem Ritzelspider Sp, dem outboardseitigen Abschlussritzel Z7 des ersten Ritzelclusters Sc1 und dem zweiten Ritzelcluster Sc2 ausgebildet.

Aufgrund dieser Mehrfachfunktionen spielt die Abstandseinheit Db auch bei der gemäß Fig. 13 als Baukastensystem ausgebildeten Ritzelanordnung Ap somit eine wesentliche Rolle für die dauerhafte Zuverlässigkeit der Ritzelanordnung Ap und für die Genauigkeit beim Gangwechsel mittels des Schaltwerks Rd, und ist überdies zentrales Bindeglied für die modular austauschbaren Baugruppen B1, B2 und B3 des Baukastensystems.

Zu dem Baukastensystem gemäß Fig. 13 wird noch angemerkt, dass es sich bei der in Fig. 13 dargestellten Ausführungsform um eine Ritzelanordnung Ap handelt, der bei der sämtliche Ritzel Z1 - Z11 Dick-Dünn-Ritzel sind. Mit dem Baukastensystem gemäß Fig. 13 wird es also möglich, die aktuellste Ritzeltechnologie der Dick-Dünn-Ritzel mit der seit Jahrzehnten bekannten Standard-Antreibereinrichtung Dd bzw. mit entsprechenden Standard-Kassettennaben zu kombinieren, und somit auf nahezu jedes Fahrrad bzw. hinteres Laufrad zu adaptieren, welches eine derartige Standard-Antreibereinrichtung Dd bzw. eine entsprechende Standard-Kassettennabe aufweist. Dies gilt analog auch für die Ritzelanordnungen Ap gemäß Fig. 2 bis 12B und Fig. 14A bis 15C.

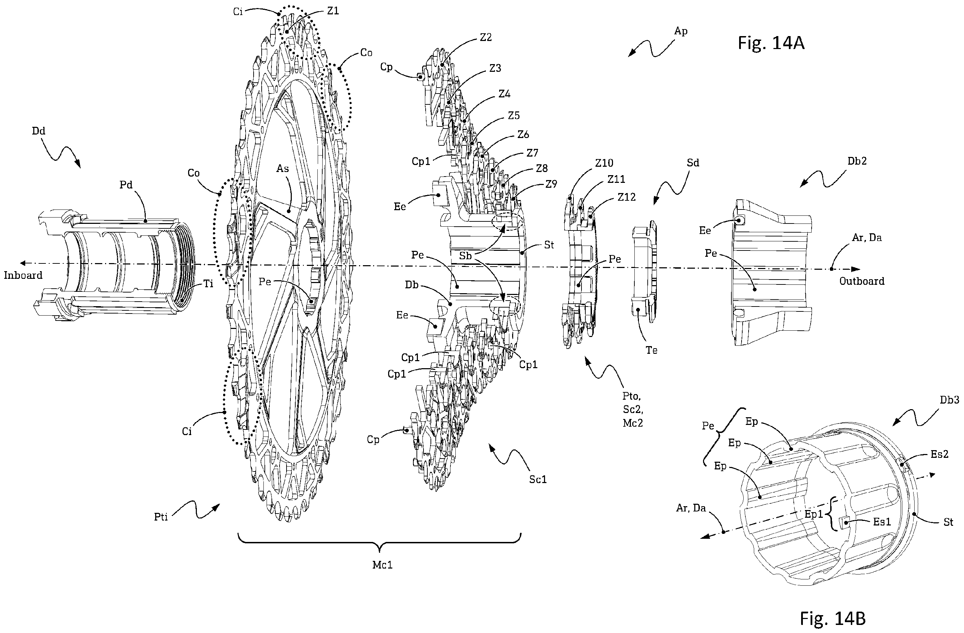

Fig. 14A zeigt eine weitere Ausführungsform einer Mehrfach-Ritzelanordnung Ap mit einer Abstandseinheit Db für die outboardseitig drehbare Lagerung Sb des ersten Ritzelclusters Sc1.

Man erkennt zunächst wieder eine Standard-Antreibereinrichtung Dd mit Mitnahmeprofil Pd. Die Ritzelanordnung Ap umfasst wieder eine inboardseitige Abschlussritzeleinrichtung Pti, die hier in Form eines Abschlussritzels Z1 vorliegt, welches in der Branche auch als Spiderritzel bezeichnet wird, da es sowohl die Funktion eines Ritzels als auch die Funktion eines tragenden Spiders übernimmt. Vorliegend trägt das Spiderritzel sowohl die eigene Verzahnung Z1 als auch das inboardseitige Abschlussritzel Z2 des selbsttragenden, ersten Ritzelclusters Sc1.

Weiterhin umfasst die Ritzelanordnung Ap ein erstes Ritzelcluster Sc1 und eine outboardseitigen Abschlussritzeleinrichtung Pto, die hier wieder in Form eines weiteren Ritzelclusters Sc2 vorliegt, welches in der Branche auch als Minicluster bezeichnet wird insbesondere dann, wenn es sich um ein einstückiges, beispielsweise aus Einzelritzeln verschweißtes Ritzelcluster handelt.

Zur Befestigung der Ritzelanordnung Ap auf der Antreibereinrichtung Dd dient eine Verschlussschraubeneinrichtung Sd, die in der Branche auch als Lockring bezeichnet wird. Die Verschlussschraubeneinrichtung Sd weist ein hier nicht eigens gezeigtes Außengewinde Te auf, welches sich in das Innengewinde Ti der Antreibereinrichtung Dd einschrauben lässt.

Hierdurch ergibt sich ein geschlossener, im Wesentlichen hinterachs-parallel verlaufender Befestigungs-Kraftfluss Ff durch die Antreibereinrichtung Dd und die Ritzelanordnung Ap ähnlich wie in Fig. 4 dargestellt. Der Befestigungs-Kraftfluss Ff hält sowohl die einzelnen Bestandteile bzw. Module der Ritzelanordnung Ap zusammen und sorgt zugleich für die Befestigung der Ritzelanordnung Ap auf der Antreibereinrichtung Dd, ähnlich wie weiter oben in der Figurenbeschreibung zu Fig. 4 ausgeführt.

Das erste Ritzelcluster Sc1 ist auch bei dieser Ausführungsform outboardseitig gegenüber der Antreibereinrichtung Dd drehbar gelagert, wozu die Abstandseinheit Db einen vorzugsweise im wesentlichen zylinderoberflächenförmig ausgebildeten Lagerungsbereich Sb aufweist.

Zur outboardseitig drehbaren Lagerung des ersten Ritzelclusters Sc1 weist das outboardseitige Ritzel Z9 des ersten Ritzelclusters Sc1 an seinem Innenumfang eine zu dem Lagerungsbereich Sb der Lagereinrichtung Db formkorrespondierend ausgebildeten, also im wesentlichen ebenfalls zylinderoberflächenförmig ausgebildeten Innenumfangsbereich Ic auf (vgl. Fig. 10, Fig. 13 und Fig. 15A).

Im Unterschied zu der Ausführungsform gemäß Fig. 1 bis 13, bei der die Abstandseinheit Db einstückig sowohl einen im Wesentlichen zylindrischen Bereich als auch einen kragenförmigen Anschlag St umfasst, ist die Abstandseinheit Db bei der Ausführungsform gemäß Fig. 14A im Wesentlichen zweiteilig ausgebildet insofern, als der kragenförmige Anschlag St hier durch ein separates Ringelement gebildet wird.

Die Abstandseinheit Db weist bei der Ausführungsform gemäß Fig. 14A insbesondere die weitere Zusatzfunktion der Schwingungsdämpfung bzw. Schalldämpfung auf. Hierzu ist die Abstandseinheit Db mit Aufnahmevertiefungen versehen, in welchen schwingungsdämpfende Kunststoffelemente Ee, beispielsweise Blöcke aus Elastomer oder schwingungsabsorbierendem Schaumstoff angeordnet sind.

Bei der Montage der Ritzelanordnung Ap auf der Antreibereinrichtung Dd kommenden die schwingungsdämpfenden Kunststoffelemente Ee auf den Armen As des Spiderritzels Pti/Z1 zur Anlage und werden zwischen den Armen As und der Abstandseinheit Db eingeklemmt. Auf diese Weise lassen sich unerwünschte Schwingungen über die Ritzelarme As in die schwingungsdämpfenden Kunststoffelemente Ee einleiten und dort in Wärme umwandeln.

Derartige unerwünschte Schwingungen insbesondere im hörbaren Schallbereich treten bei Ritzelanordnungen Ap, wie diese Gegenstand der vorliegenden Offenbarung sind, aufgrund der großen Zahl von Ritzeln, aufgrund des großen Durchmessers solcher Ritzelanordnungen Ap, und insbesondere aufgrund der Leichtbauweise solcher Ritzelanordnungen mit selbsttragenden Ritzelclustern Sc1 häufig auf und werden beim Betrieb des Fahrrads häufig als störend empfunden.

Derartige selbsttragend ausgebildete erste Ritzelcluster Sc1 sind in den Ausführungsformen von Ritzelanordnungen Ap gemäß Fig. 2, Fig. 3, Fig. 5, Fig. 6, Fig. 9, Fig. 13, Fig. 14A und Fig. 15A dargestellt. Die dort gezeigten selbsttragenden Ritzelcluster Sc1 setzen sich bei diesen Ausführungsformen aus Einzelritzeln Z3 bis Z7 (Fig. 2, Fig. 3, Fig. 5, Fig. 6, Fig. 9, Fig. 13) bzw. aus Einzelritzeln Z2 bis Z9 (Fig. 14A) zusammen, wobei diese Einzelritzel durch Pins (bzw. in Fig. 15 mittels zusätzlicher Konsolen) miteinander verbunden sind.

Derartige selbsttragende Ritzelcluster Sc1, die beispielsweise auch als einstückiges Frästeil ausgebildet sein können, haben die Eigenschaft, dass solche Ritzelcluster lediglich im Bereich ihrer beiden inboardseitigen bzw. outboardseitigen Abschlussritzel mit anderen Teilen bzw. Modulen der Ritzelanordnung verbunden sind, beispielsweise inboardseitig mit einem Spiderritzel Pti/Z1 wie z.B. in Fig. 14A oder mit einem Ritzelspider Sp wie z.B. in Fig. 2 bis 6 und Fig. 9 und 13. Die zwischen den inboardseitigen und outboardseitigen Abschlussritzel befindlichen Ritzel derartiger selbsttragenden Ritzelcluster sind jeweils lediglich mit dem benachbarten Ritzel verbunden, wodurch sich die selbsttragende, kegel- oder kegelstumpfförmige Struktur des Ritzelclusters ergibt.

Eine gegenüber der Abstandseinheit Db alternative Ausführungsform einer Abstandseinheit ist die Abstandseinheit Db2 im rechten Bereich von Fig. 14. Auch diese Abstandseinheit Db2 weist ein schwingungsdämpfendes Kunststoffelement Ee auf, welches bei dieser Ausführungsform als O-Ring ausgebildet ist. Dieses ringförmige Kunststoffelement Ee kommt bei der Montage der Ritzelanordnung Ap auf der Antreibereinrichtung Dd in einem ringförmigen radial innenliegenden Anlagebereich des Spiderritzels Pti/Z1 zur Anlage, und kann auf diese Weise zur Dämpfung unerwünschter Schallschwingungen der Ritzelanordnung Ap beitragen.

Fig. 14 B zeigt eine weitere Ausführungsform einer Abstandseinheit Db3. Diese Abstandseinheit Db3 ist wieder einstückig ausgebildet, ähnlich wie die Abstandseinheit Db gemäß Fig. 2 bis 5 sowie Fig. 9 bis 13. Man erkennt, dass die Abstandseinheit Db3 zwei Synchronisationsfortsätze Es1, Es2 aufweist.

Der erste Synchronisationsfortsatz Es1 bildet eine in Axialrichtung Da nach inboard weisende Verlängerung der radial inneren Verzahnungsstruktur der Abstandseinheit Db3, welche formkorrespondierend mit dem Verzahnungs-Mitnahmeprofil Pd der Antreibereinrichtung Dd ausgebildet ist.

In der Branche seit Jahrzehnten bekannte und verwendete Standard-Antreibereinrichtungen wie die Antreibereinrichtung Dd gemäß Fig. 2 bis 9 und Fig. 14A weisen ein Verzahnungs-Mitnahmeprofil Pd mit einer rotatorischen Kodierung auf. Die rotatorische Kodierung besteht darin, dass eine der in Axialrichtung Da entlang der Antreibereinrichtung Dd verlaufenden und am Außenumfang der Antreibereinrichtung Dd verteilt angeordneten Mitnahmevertiefungen, welche zusammen das Verzahnungs-Mitnahmeprofil Pd bilden, eine größere Breite aufweist als die restlichen Mitnahmevertiefungen. Auf diese Weise können Ritzel mit entsprechend formkorrespondierend rotatorisch codiertem Innen-Verzahnungsprofil Pe nur noch in einer bestimmten rotatorischen Relativwinkelstellung auf die Antreibereinrichtung Dd aufgesteckt werden.

Dies dient dazu, die an den Ritzeln angeordneten Schaltgassen Ci und Co (vgl. Schaltgassen Ci und Co in Fig. 2, Fig. 9, Fig. 12A/B und Fig. 13) beim Zusammenbau der Ritzelanordnung zum Zweck des kontrollierten Überlaufs der Kette beim Gangwechsel in rotatorisch korrekter Relativposition zueinander anzuordnen und somit Fehlmontagen zu vermeiden.

Das Spiderritzel Pti/Z1 der Ritzelanordnung Ap gemäß Fig. 14A weist jedoch ein Innen-Verzahnungsprofil Pe auf, welches keine derartige rotatorische Kodierung besitzt, da dieser Ritzelspider Pti/Z1 außer bei der dargestellten Ritzelanordnung Ap weitestgehend unverändert auch für einstückige Ritzelanordnungen bzw. Ritzelkassetten verwendet wird. Bei einstückigen Ritzelanordnungen bzw. Ritzelkassetten spielt die rotatorische Positionierung der Ritzelkassette auf der Antreibereinrichtung Dd keine Rolle, da sämtliche Schaltgassen sämtlicher Ritzel bereits aufgrund der Einstückigkeit der Ritzelkassette die korrekte rotatorische Relativposition zu allen anderen Ritzeln besitzen. Da die rotatorische Positionierung gegenüber der Antreibereinrichtung Dd bei derartigen einstückigen Ritzelkassetten keine Rolle spielt, besitzen solche einstückigen Ritzelkassetten üblicherweise ein Innen-Verzahnungsprofil Pe ohne rotatorische Kodierung, und können somit in beliebiger rotatorischer Positionierung auf eine Antreibereinrichtung Dd aufgeschoben werden, auch wenn diese, wie vorstehend beschrieben, ein rotatorisch codiertes Verzahnungs-Mitnahmeprofil Pd besitzt.

Die Ritzelanordnung Ap gemäß Fig. 14A besteht vor der Montage auf der Antreibereinrichtung Dd aus zumindest zwei separaten Kassettenmodulen Mc1 und Mc2, welche aufgrund der an beiden Kassettenmodulen Mc1 und Mc2 vorhandenen Schaltgassen (vgl. z.B. Schaltgassen Ci und Co in Fig. 2, Fig. 9, Fig. 12A/B und Fig. 13) in einer spezifischen rotatorischen Relativwinkelstellung auf die Antreibereinrichtung Dd aufgesteckt werden müssen. Dies wäre bei dem Kassettenmodul Mc1 jedoch beim anfänglichen Aufstecken auf die Antreibereinrichtung Dd nicht gewährleistet, da das Innen-Verzahnungsprofil Pe des Spiderritzels Pti/Z1 des Kassettenmoduls Mc1, wie vorstehend beschrieben, keine rotatorische Kodierung besitzt.

Aus diesem Grund weist die Abstandseinheit Db3 den Synchronisationsfortsatz Es1 auf. Der Synchronisationsfortsatz Es1 bildet eine axiale Verlängerung des rotatorisch codierten Innen-Verzahnungsprofils Pe der Abstandseinheit Db3, welches sich aus in Axialrichtung Da verlaufenden und am Innenumfang der Abstandseinheit Db3 verteilt angeordneten Eingriffserhebungen Ep zusammensetzt. Spezifisch bildet der Synchronisationsfortsatz Es1 eine axiale Verlängerung derjenigen Eingriffserhebung Ep1 des rotatorisch codierten Innen-Verzahnungsprofils Pe, welche eine größere Breite aufweist als die restlichen Mitnahmeerhebungen Ep des Innen-Verzahnungsprofils Pe der Abstandseinheit Db3, und welche somit zum Eingriff in diejenige Mitnahmevertiefung des Verzahnungs-Mitnahmeprofils Pd der Antreibereinrichtung Dd vorgesehen ist, welche entsprechend eine größere Breite aufweist als die restlichen Mitnahmevertiefungen des Mitnahmeprofils Pd der Antreibereinrichtung Dd.

Im montierten Zustand der Abstandseinheit Db3 beispielsweise an dem Kassettenmodul Mc1 der Ritzelanordnung Ap gemäß Fig. 14A durchgreift der Synchronisationsfortsatz Es1 das rotatorisch nicht codierte Innen-Verzahnungsprofil Pe des Spiderritzels Pti/Z1 des Kassettenmoduls Mc1, und wandelt somit das rotatorisch nicht codierte Innen-Verzahnungsprofil Pe des Spiderritzels Pti/Z1 in eine rotatorisch codiertes Innen-Verzahnungsprofil Pe um. Der Synchronisationsfortsatz Es1 der Abstandseinheit Db3 sorgt somit dafür, dass das Kassettenmodul Mc1 bereits zu Beginn des Aufschiebens auf die Antreibereinrichtung Dd lediglich in der bestimmten, vorgesehenen rotatorischen Relativposition auf die Antreibereinrichtung Dd aufgeschoben werden kann.

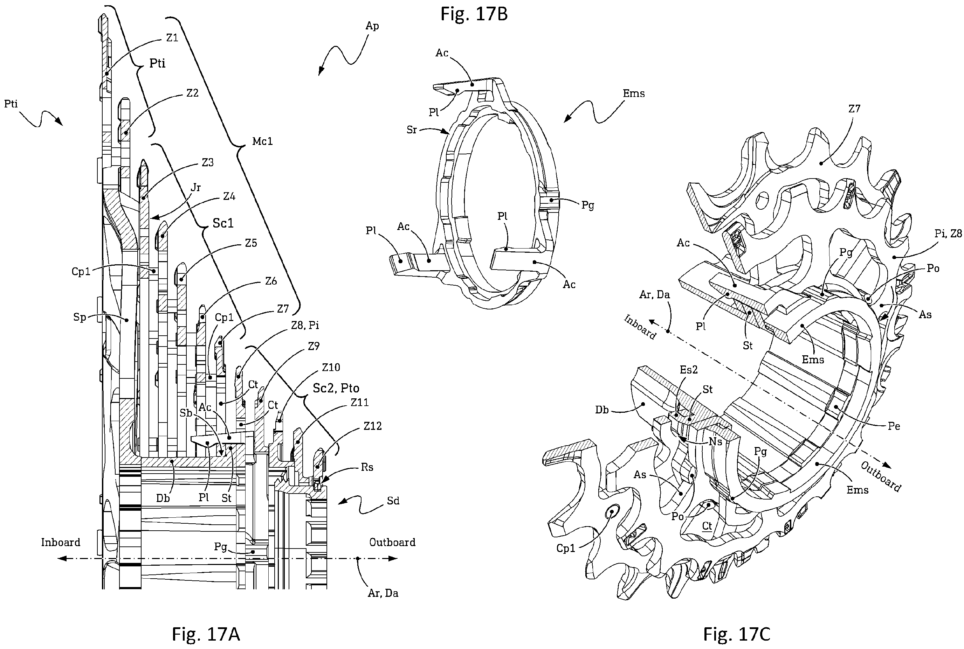

Der zweite Synchronisationsfortsatz Es2 ragt in Axialrichtung Da nach inboard von dem kragenförmigen Anschlag St der Abstandseinheit Db3 ab. Im montierten Zustand der Abstandseinheit Db3 beispielsweise an dem Kassettenmodul Mc1 der Ritzelanordnung Ap gemäß Fig. 14A greift der zweite Synchronisationsfortsatz Es2 in eine an der outboardseitigen Stirnseite des Kassettenmoduls Mc1, beispielsweise an der outboardseitigen Stirnseite des outboardseitigen Abschlussritzels Z7 des Ritzelclusters Sc1, angeordnete Synchronisationsausnehmung Ns ein. Beispiele für Synchronisationsausnehmungen Ns an einer outboardseitigen Stirnseite eines outboardseitigen Abschlussritzels Z7 eines Ritzelclusters Sc1 sind in Fig. 13 und Fig. 17C erkennbar.

Der zweite Synchronisationsfortsatz Es2 sorgt auf diese Weise für eine korrekte rotatorische Relativposition zwischen dem Ritzelcluster Sc1 und der Abstandseinheit Db3 mit ihrem rotatorisch codierten Innen-Verzahnungsprofil Pe, insbesondere bei der Produktion der Ritzelanordnung, nämlich beim Zusammenfügen von Ritzelcluster Sc1 und Spiderritzel Pti/Z1 über die Verbindungspins Cp. Bei diesem Produktionsschritt muss die korrekte rotatorische Relativposition der Schaltgassen Ci und Co (vgl. Schaltgassen Ci und Co in Fig. 2, Fig. 9, Fig. 12A/B und Fig. 13) des Ritzelclusters Sc1 und des Spiderritzels Pti/Z1 gewährleistet werden, bevor Ritzelcluster Sc1 und Spiderritzel Pti/Z1 mittels der Verbindungspins Cp miteinander verbunden werden.

Fig. 15A zeigt eine alternative Ausführungsform eines selbsttragenden Ritzelclusters Sc1. Bei dem selbsttragenden Ritzelcluster Sc1 gemäß Fig. 15A sind die Einzelritzel Z3 - Z8 nicht lediglich durch Verbindungspins Cp 1 miteinander verbunden wie bei den Ausführungsformen gemäß Fig. 2, Fig. 5, Fig. 6, Fig. 9 und Fig. 14A. Zusätzlich zu den oder anstelle der Verbindungspins Cp1 sind die Einzelritzel Z3 - Z8 bei der Ausführungsform gemäß Fig. 15A über eine Mehrzahl von Spider-Konsolen Cs miteinander verbunden.

Die Verbindung der Einzelritzel Z3 - Z8 mit den Spider-Konsolen Cs kann dabei über beliebige Verbindungselemente wie beispielsweise Schrauben, Niete oder Pins erfolgen, welche in Fig. 15A bis 15C nicht eigens dargestellt sind. Alternativ oder zusätzlich zu derartigen Verbindungselementen können die Einzelritzel Z3 - Z8 mit den Spider-Konsolen Cs auch durch Verklebungen verbunden sein. Die Spider-Konsolen Cs können dabei aus Metall, oder alternativ aus nichtmetallischen Werkstoffen, insbesondere aus einem faserverstärkten Kunststoff bestehen.

Insbesondere in der outboardseitigen Ansicht Fig. 15B ist die dreidimensional räumlich abgestufte räumliche Struktur der Spider-Konsolen Cs erkennbar, durch welche, entlang einer parallel zur Hinterachse Ar verlaufenden Richtung Da betrachtet, bei diesem Ausführungsbeispiel sechs axial voneinander beabstandete Befestigungsstufen Lf3 - Lf8 gebildet werden, an welchen die sechs Einzelritzel Z3 - Z8 zur Anlage kommen und befestigt werden.

Auf diese Weise wird ein selbsttragendes Ritzelcluster Sc1 erhalten, das hohe Torsions- und Biegesteifigkeiten bei gleichzeitig geringer Masse aufweist.

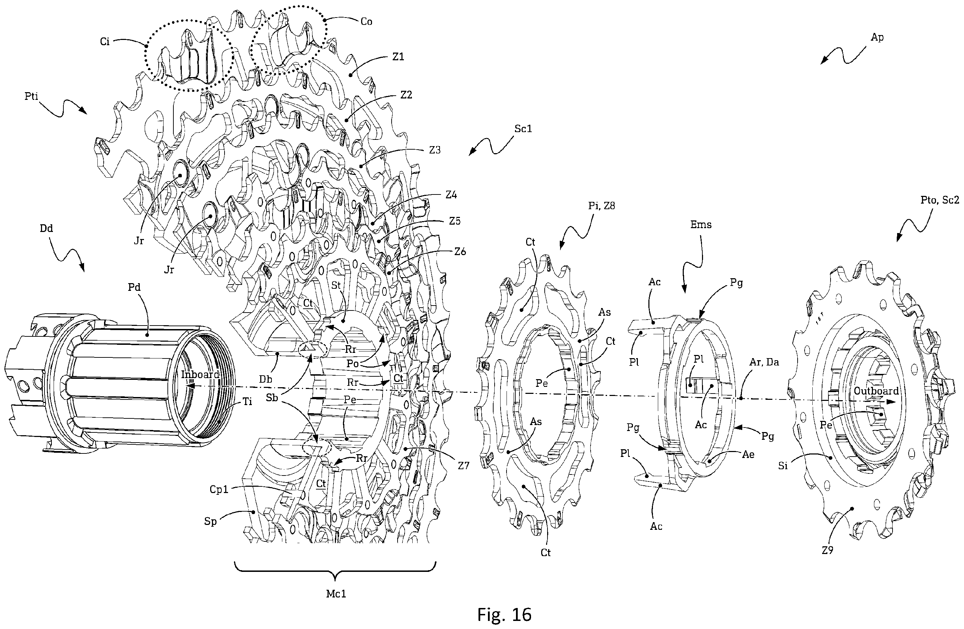

Fig. 16 zeigt eine weitere Ausführungsform einer Ritzelanordnung Ap in einer teilweise geschnittenen Explosionsdarstellung ähnlich Fig. 9. Ebenso wie in Fig. 9 ist die Ritzelanordnung Ap wieder zusammen mit einer Hinterrad-Antreibereinrichtung Dd dargestellt, auf welche die Ritzelanordnung Ap drehmomentübertragend montiert werden kann.

Mit Fig. 9 übereinstimmende Elemente und Baugruppen sind in Fig. 16 mit denselben Bezugszeichen wie in Fig. 9 versehen und in der Figurenbeschreibung zu Fig. 9 näher erläutert.

Der wesentliche Unterschied der Ausführungsform gemäß Fig. 16 zu der Ausführungsform gemäß Fig. 9, wobei letztere im wesentlichen auch mit der Ausführungsform gemäß Fig. 2 bis 8 übereinstimmt, besteht einerseits in einem gegenüber Fig. 9 unterschiedlich ausgeführten Einzelritzel Z8 als zusätzlicher Ritzeleinrichtung Pi, und andererseits im Vorhandensein eines multifunktionalen Abstandselements Ems.

Das Einzelritzel Z8 gemäß Fig. 16 unterscheidet sich von dem Einzelritzel Z8 gemäß Fig. 2 bis 7 und 9 insofern, als das Einzelritzel Z8 gemäß Fig. 16 an seinem Innenumfang ein Eingriffsprofil Pe aufweist, welches in Form eines beispielsweise durch Stanzen bzw. Tiefziehen erzeugten Durchzugs ausgebildet ist. Auf diese Weise lässt sich die Breite der Kontaktfläche des Eingriffsprofils Pe mit der Antreibereinrichtung Dd wesentlich verbreitern bzw. vergrößern, was die Flächenpressung zwischen dem Eingriffsprofil Pe und dem am Außenumfang der Antreibereinrichtung Dd angeordneten Verzahnungs-Mitnahmeprofil Pd verringert. Dies ermöglicht eine bessere Übertragung von hohen Drehmomenten zwischen dem Einzelritzel Z8 und der Antreibereinrichtung Dd, insbesondere wenn Einzelritzel Z8 und/oder Antreibereinrichtung Dd aus verhältnismäßig weichen Leichtmetallen anstatt aus Stahl bestehen.

Das multifunktionale Abstandselement Ems vereint in sich einerseits die Funktion des ringförmigen Abstandselements Ae zwischen Einzelritzel Z8 und weiterem Ritzelcluster Sc2 (vgl. Fig. 9), und andererseits die zusätzliche Funktion, sämtliche Baugruppen der Ritzelanordnung Ap zu einer einstückig handhabbaren Einheit zu verbinden, solange die Ritzelanordnung Ap nicht auf einer Antreibereinrichtung Dd, also beispielsweise an einem Fahrrad-Hinterrad Wr gemäß Fig. 1 montiert ist.

Wie eine Zusammenschau von Fig. 16 und 17A-C ergibt, greift das multifunktionale Abstandselement Ems mittels seiner hier drei federnden Klemmarme Ac durch Durchbruchsausnehmungen Ct des Einzelritzels Z8 über die Breite des Einzelritzels Z8 sowie über die Breite des hier einstückig an der Lagereinrichtung Db angeformten kragenförmigen Anschlags St hinweg.

Die drei federnden Klemmarme Ac des multifunktionalen Abstandselements Ems greifen zudem auch noch über die Breite des outboardseitigen Abschlussritzels Z7 des ersten Ritzelclusters Sc1 hinweg, indem die federnden Klemmarme Ac entsprechende Durchbruchsausnehmungen Ct des outboardseitigen Abschlussritzels Z7 durchragen.

Am inboardseitigen Ende der federnden Klemmarme Ac angeordnete Rastvorsprünge Pl hintergreifen die Durchbruchsausnehmungen Ct des outboardseitigen Abschlussritzels Z7 dergestalt, dass durch die federnde Rastwirkung der Klemmarme Ac des multifunktionalen Abstandselements Ems bereits sämtliche Baugruppen der Ritzelanordnung Ap zusammengehalten werden, außer der outboardseitigen Abschlussritzeleinrichtung Pto, die hier als weiteres Ritzelcluster Sc2 vorliegt.

Mit anderen Worten, das multifunktionale Abstandselement Ems hält das outboardseitige Abschlussritzel Z7 des ersten Ritzelclusters Sc1 (welches aufgrund der Verstiftung Cp1 und der Vernietung Jr mit sämtlichen anderen Ritzeln Z1-Z6 des ersten Ritzelclusters Sc1 sowie mit dem Ritzelspider Sp zu einer festen Einheit Sc1 + Pti = Mc1 verbunden ist) mit dem Einzelritzel Z8 sowie mit der rotatorischen Lagereinrichtung Db dergestalt zusammen, dass diese Bauteile bzw. Baugruppen, zusammen mit dem multifunktionalen Abstandselement Ems, eine einstückig handhabbare Einheit bilden.

Zur zusätzlichen Aufnahme auch der outboardseitigen Abschlussritzeleinrichtung Pto, welche hier in Form des weiteren Ritzelclusters Sc2 vorliegt, in die vorgenannte einstückig handhabbare Einheit besitzt das multifunktionale Abstandselement Ems an einem Außenumfang eine Mehrzahl von vorzugsweise mindestens drei Klemmvorsprüngen Pg. Die Klemmvorsprünge Pg definieren zusammen einen Außendurchmesser, welcher ein gewisses Übermaß gegenüber einem an einem Innenumfang des weiteren Ritzelclusters Sc2 angeordneten, vorzugsweise zylinderförmigen Innenabsatz Si aufweist, s. Fig. 16.

Hierdurch kann das weitere Ritzelcluster Sc2 auf die Klemmvorsprünge Pg des multifunktionalen Abstandselements Ems aufgepresst oder aufgedrückt und so mit dem multifunktionalen Abstandselement Ems verbunden werden.

Auf diese Weise hält somit das multifunktionale Abstandselement Ems die inboardseitige Abschlussritzeleinrichtung Pti, das erste Ritzelcluster Sc1, die weitere Ritzeleinrichtung Pi (hier in Form des Zwischenritzels Z8) sowie die outboardseitige Abschlussritzeleinrichtung Pto (hier in Form des weiteren Ritzelclusters Sc2) sowie die Lagereinrichtung Db in Form einer einstückig handhabbaren Einheit zusammen, s. insbesondere Fig. 17A.

Dies ist vorteilhaft für die meisten Handhabungsschritte der Ritzelanordnung Ap, die auf deren Produktion folgen, wie beispielsweise Verpackung, Transport und Logistik, Entnahme aus der Verpackung beim Kunden und kundenseitige Montage der Ritzelanordnung Ap auf der Antreibereinrichtung Dd eines Fahrrad-Hinterrads Wr.

Nicht nur wird auf diese Weise die Handhabung der Ritzelanordnung Ap vereinfacht, sondern es werden auch Fehlmontagen vermieden. Diese könnten andernfalls dadurch auftreten, dass eines oder mehrere der Module bzw. Baugruppen "Kassettenmodul Mc1 = inboardseitige Abschlussritzeleinrichtung Pti + erstes Ritzelcluster Sc1", "weitere Ritzeleinrichtung Pi", "Lagereinrichtung Db" und "outboardseitige Abschlussritzeleinrichtung Pto" hersteller- oder kundenseitig etwa in einer falschen rotatorischen Relativposition zu den anderen Modulen bzw. Baugruppen der Ritzelanordnung Ap zusammenmontiert werden. Hierdurch könnte die Leistung, Schaltperformance und Lebensdauer der Ritzelanordnung erheblich beeinträchtigt, oder eine Montierbarkeit der Ritzelanordnung AP auf der Antreibereinrichtung Dd verunmöglicht werden.

Die rotatorische Kodierung bzw. die Festlegung der rotatorischen Relativposition von Zwischenritzel Z8 bzw. weiterer Ritzeleinrichtung Pi relativ zum outboardseitigen Ritzel Z7 des ersten Ritzelclusters Sc1 sowie relativ zur Lagereinrichtung Db durch das multifunktionale Abstandselement Ems geht aus einer Zusammenschau von Fig. 17A und 17C hervor und wird nachfolgend beschrieben. Aufgrund der Verstiftung Cp1 des Zwischenritzels Z8 und der Vernietung Jr mit sämtlichen anderen Ritzeln Z1-Z6 des ersten Ritzelclusters Sc1 sowie mit dem Ritzelspider Sp, gilt diese Festlegung der rotatorischen Kodierung auch für die gesamte Einheit Sc1 + Pti = Mc1.

Fig. 17C zeigt, wie ein Synchronisationsfortsatz Es2 der Lagereinrichtung Db, welcher in Axialrichtung Da nach inboard von dem kragenförmigen Anschlag St (vgl. Fig. 2 bis 7 und 17A) der Lagereinrichtung Db abragt (vgl. auch Fig. 14B), in eine an der outboardseitigen Stirnseite des Kassettenmoduls Mc1, beispielsweise an der outboardseitigen Stirnseite des outboardseitigen Abschlussritzels Z7 des Ritzelclusters Sc1, angeordnete Synchronisationsausnehmung Ns eingreift, und so die rotatorische Relativposition von Lagereinrichtung Db und Kassettenmodul Mc1 festlegt.

Fig. 17C liegt eine stark perspektivische Ansicht zugrunde, um alle wesentlichen Elemente gut erkennen zu können. Die scheinbare Verjüngung insbesondere der Lagereinrichtung Db in Richtung inboard ist ein Effekt dieser perspektivischen Darstellung. Tatsächlich ist die Lagereinrichtung Db im wesentlichen zylindrisch, was auch den meisten anderen Figuren ebenso wie beispielsweise Fig. 17A entnommen werden kann.

Gleichzeitig wird durch das multifunktionale Abstandselement Ems die rotatorische Relativposition von Lagereinrichtung Db und Zwischenritzel Z8 bzw. weiterer Ritzeleinrichtung Pi festgelegt, indem Paare von Orientierungsvorsprüngen Po, welche in Axialrichtung Da nach outboard von dem kragenförmigen Anschlag St (vgl. Fig. 2 bis 7 und 17A) der Lagereinrichtung Db abragen, korrespondierende Ritzelarme As des Zwischenritzels Z8 umgreifen (s. Fig. 17C und Fig. 16).

Der Umgriff der Orientierungsvorsprünge Po der Lagereinrichtung Db um die Ritzelarme As des Zwischenritzels Z8 sorgt dabei gleichzeitig für eine Zentrierung des Zwischenritzels Z8 relativ zu den restlichen Baugruppen der Ritzelanordnung Ap, zur Antreibereinrichtung Dd und damit zur späteren Hinterachse Da des Hinterrads Wr des Fahrrads 1, und erleichtert somit die Montage der Ritzelanordnung Ap auf der Antreibereinrichtung Dd.

Die Lagereinrichtung Db übernimmt auch die Aufgabe der Zentrierung des outboardseitigen Abschlussritzels Z7 des Ritzelclusters Sc1 und damit der Outboardseite des gesamten Kassettenmoduls Mc1, bestehend aus inboardseitiger Abschlussritzeleinrichtung Pti und erstem Ritzelcluster Sc1 (vgl. Fig. 2, 5, 6, 9, 14A, 16 und 17A), relativ zur Antreibereinrichtung Dd. Zu diesem Zweck stellt die Lagereinrichtung Db den im wesentlichen zylinderoberflächenförmig ausgebildeten Lagerungsbereich Sb bereit, auf welchem der Innendurchmesser des outboardseitigen Abschlussritzels Z7 des Ritzelclusters Sc1 zur Anlage kommt, vgl. Fig. 2 bis 7 sowie Fig. 9, 14A, 16 und 17A.

Schließlich sorgen formkorrespondierend zu den federnden Klemmarmen Ac des multifunktionalen Abstandselements Ems ausgebildete radiale Vertiefungen Rr an dem kragenförmigen Anschlag St der Lagereinrichtung Db für eine Festlegung der rotatorischen Relativposition zwischen dem multifunktionalen Abstandselement Ems und der Lagereinrichtung Db, s. Fig. 16.

Durch das Zusammenwirken des multifunktionalen Abstandselement Ems und insbesondere der Elemente Es2, Ns, Ac, Rr, Po, As und Db wird somit die korrekte rotatorische Relativposition und koaxiale Zentrierung sämtlicher Module bzw. Baugruppen "Kassettenmodul Mc1 = inboardseitige Abschlussritzeleinrichtung Pti + erstes Ritzelcluster Sc1", "weitere Ritzeleinrichtung Pi" bzw. "Zwischenritzel Z8", "Lagereinrichtung Db" und "outboardseitige Abschlussritzeleinrichtung Pto" der Ritzelanordnung Ap gewährleistet. Dies führt zu den bereits weiter oben genannten Vorteilen hinsichtlich Transport und fehlerfreier Montage der Ritzelanordnung Ap auf der Antreibereinrichtung Dd des Fahrrad-Hinterrads Wr.

Die Lagereinrichtung Db der Ausführungsform der Ritzelanordnung Ap gemäß Fig. 16 und 17 kann außer dem vorstehend beschriebenen, outboardseitigen Synchronisationsfortsatz Es2 auch einen inboardseitigen Synchronisationsfortsatz Es1 aufweisen, der das rotatorisch korrekte Aufschieben der Ritzelanordnung Ap auf die Antreibereinrichtung Dd unter bestimmten Randbedingungen erleichtert. Dies ist ausführlich weiter oben bei der Beschreibung zu Fig. 14B erläutert.

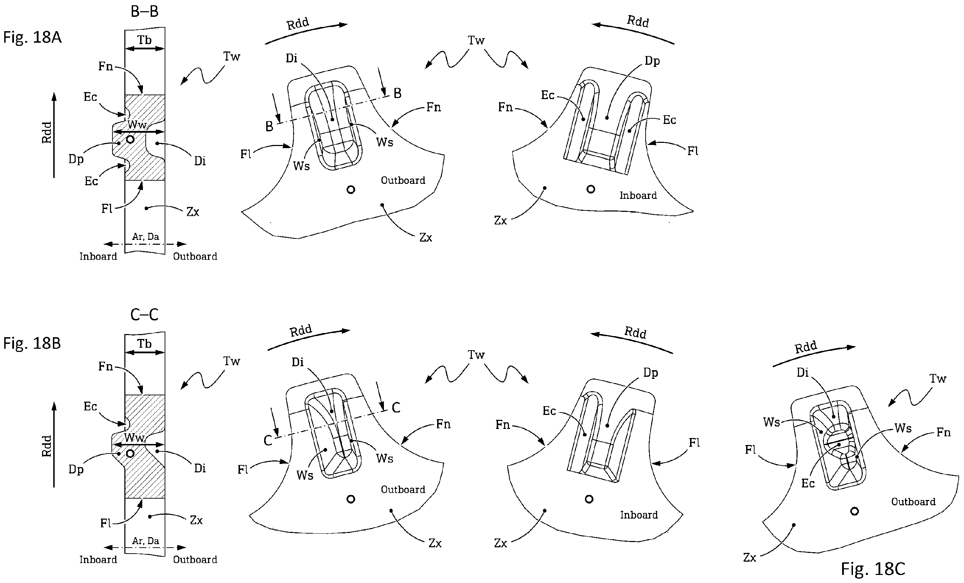

Fig. 18 bis 21 zeigen schematische Schnitt- bzw. Detailansichten besonders von breiten Ritzelzähnen Tw einer Ritzelanordnung Ap gemäß Fig. 2 bis 17, wobei die Pfeile Rdd jeweils die Antriebsdrehrichtung des Ritzels bei antreibender Belastung durch die Fahrradkette Cn bezeichnet, s. Fig. 1. Bei den in Fig. 18 bis 21 gezeigten Schnitt- bzw. Detailansichten von Ritzelzähnen kann es sich insbesondere um breite Ritzelzähne Tw kleinerer Ritzel Z6 - Z12 der Ritzelanordnung Ap handeln, wie diese beispielsweise in Fig. 10 gezeigt sind. Die breiten Ritzelzähne Tw gemäß Fig. 18 bis 21 können im wesentlichen in gleicher Form jedoch prinzipiell an jedem der Ritzel Zx einer Ritzelanordnung Ap gemäß Fig. 1 bis 17C verwirklicht werden.

Bei den in Fig. 18 bis 21 gezeigten breiten Ritzelzähnen Tw handelt es sich bevorzugt um breite Ritzelzähne Tw von Ritzeln, die in einem Stanz-Pressverfahren hergestellt sind.

Die Form des in Fig. 18A gezeigten breiten Ritzelzahns Tw entspricht im Wesentlichen der Form des in Fig. 10 erkennbaren breiten Ritzelzahns Tw des Ritzels Z6. In Übereinstimmung mit den sonstigen Figuren, welche breite Zähne Tw und/oder schmale Zähne Tn zeigen, sind in Fig. 18 bis 21 entsprechend die breiten Zähne Tw wieder durch kleine Kreismarkierungen, und die schmalen Zähne Tn wieder durch kleine Quadratmarkierungen gekennzeichnet.

Ähnlich wie in Fig. 10 wird auch in Fig. 18A erkennbar, dass die gegenüber der Dicke Tb des Ritzel-Grundmaterials (welche vorzugsweise mit der Breite der schmalen Zähne Tn übereinstimmt, vgl. Fig. 10, auch erkennbar in Fig. 4 bis 7) vergrößerte Breite Ww der breiten Zähne Tw dadurch erzeugt ist, dass typischerweise auf einer outboardseitigen Stirnfläche des Ritzels Zx Einprägungen Di vorgenommen sind. Die Einprägungen Di führen beim Stanz-Pressen der Ritzel zu einer Materialverdrängung und zu entsprechenden Auswölbungen Dp auf der gegenüberliegenden, typischerweise also auf der inboardseitigen Stirnfläche des jeweiligen Ritzels.

Dies ist auch bei dem breiten Ritzelzahn Tw gemäß Fig. 18B der Fall, welcher beispielsweise mit dem in Fig. 10 erkennbaren breiten Ritzelzahn Tw des Ritzels Z8 im Wesentlichen übereinstimmt. Der wesentliche Unterschied des breiten Ritzelzahns Tw gemäß Fig. 18B gegenüber dem breiten Ritzelzahn Tw gemäß Fig. 18A besteht darin, dass die outboardseitige Einprägung Di, ebenso wie die inboardseitige Auswölbung Dp, bei dem breiten Ritzelzahn Tw gemäß Fig. 18B entlang der Umfangsrichtung bzw. Drehrichtung Rdd des Ritzels Zx asymmetrisch ausgebildet ist. Diese Ausbildung besitzt den Vorteil, dass der Ritzelzahn Tw gemäß Fig. 18B auf seiner Lastflankenseite Fl (vgl. auch Fig. 10) weniger geschwächt ist und dort mehr lastaufnehmendes Material aufweist.

Dies hängt mit der asymmetrischen Gestaltung von Einprägung Di und Auswölbung Dp bei dem breiten Ritzelzahn Tw gemäß Fig. 18B sowie mit dem damit ermöglichten Verzicht auf die lastflankenseitige Gegenprägung Ec zusammen, welche bei dem breiten Ritzelzahn Tw gemäß Fig. 18A noch notwendig ist, um die gewünschte Materialverdrängung Di, Dp von der Outboardseite zur Inboardseite erzeugen zu können.

Fig. 18C zeigt eine Variante des breiten Ritzelzahns Tw gemäß Fig. 18B. Bei dem breiten Ritzelzahn Tw gemäß Fig. 18C ist eine relativ zu einer bezogen auf das Ritzel radial verlaufenden Längsachse des Ritzelzahns quer verlaufende Gegenprägung Ec so eingebracht, dass diese die beiden Seitenwände Ws der Einprägung Di in Umfangsrichtung des Ritzels Zx gegenüber der antreibenden Last der Fahrradkette Cn (vgl. Fig. 1) gegeneinander abstützt. Auf diese Weise wird gemäß Fig. 18C ein gegenüber der Kettenlast besonders widerstandsfähiger Ritzelzahn Tw erhalten.

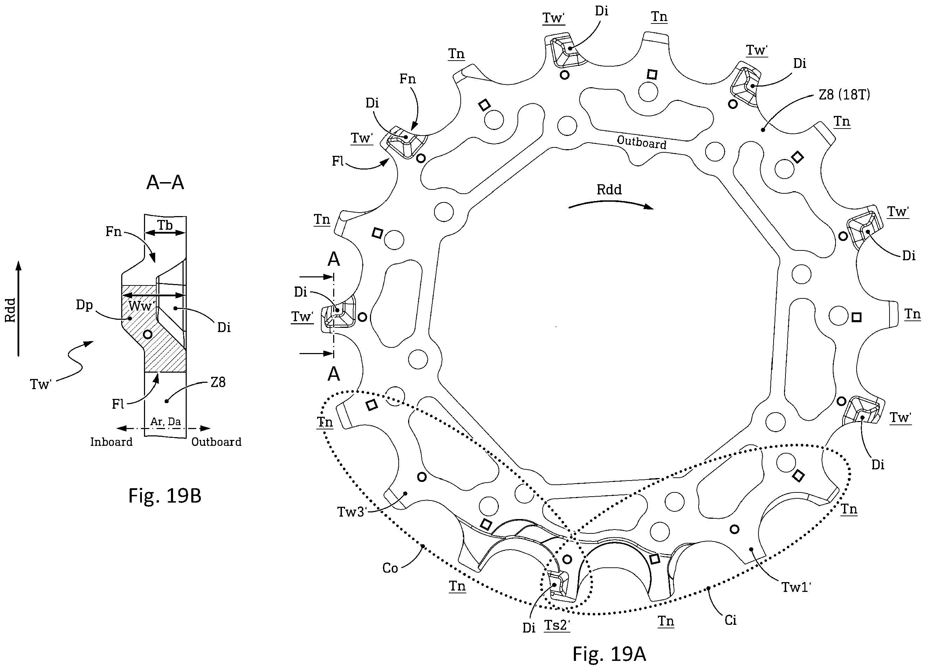

Fig. 19A zeigt ein Ritzel Z8 einer weiteren Ausführungsform einer Ritzelanordnung gemäß Fig. 2 bis 17, mit Blickrichtung auf die outboardseitige Stirnseite des Ritzels Z8, also aus der gleichen Blickrichtung wie beispielsweise in Fig. 1. Bei dem Ritzel Z8 handelt es sich wieder um ein Ritzel mit Dick-Dünn-Zähnen, also mit schmalen Zähnen Tn, die sowohl in Außenlaschenzwischenräume Wco als auch in Innenlaschenzwischenräume Wci der Fahrradkette eintreten können (vgl. Fig. 11B), sowie mit breiten Zähnen Tw', die nur in Außenlaschenzwischenräume Wco, nicht aber in Innenlaschenzwischenräume Wci der Fahrradkette eintreten können. Auf diese Weise werden, wie weiter oben bei Fig. 10 ausführlich beschrieben, Vorteile insbesondere bei der Stabilisierung des Kettenlaufs und beim Schaltverhalten erreicht.

Der Zahn Tw3' des Ritzels Z8 weist keine outboardseitige Einprägung Di auf, da es sich bei diesem Zahn um einen zwar nominell "breiten" Zahn Tw handelt, der sich jedoch im Bereich einer Outboard-Schaltgasse Co befindet, vgl. die ebenfalls nur nominell "breiten" Zähne Tw1, Tw3 gemäß Fig. 11A und Fig. 12A+B, welche sich ebenfalls im Bereich von Schaltgassen Co, Ci befinden.

Derartige nominell zwar "breite", jedoch im Bereich von Schaltgassen Co, Ci angeordnete Zähne Tw1, Tw3, Tw1', Tw3' weisen typischerweise keine outboardseitige Einprägung Di und dementsprechend auch keine inboardseitige Auswölbung Dp auf, da eine inboardseitige Auswölbung Dp zumindest in den inboardseitigen Bereichen Ri1, Ri2 der Schaltgassen Co, Ci (vgl. Fig. 11-12) unerwünscht ist und den Übergang der Kette auf das benachbarte Ritzel beim Schaltvorgang stören würde, vgl. Fig. 11A und Fig. 12A. Dasselbe gilt analog auch für den ebenfalls nur nominell "breiten" Zahn Tw1' des Ritzels Z8, welcher sich im Bereich einer Inboard-Schaltgasse Ci befindet.

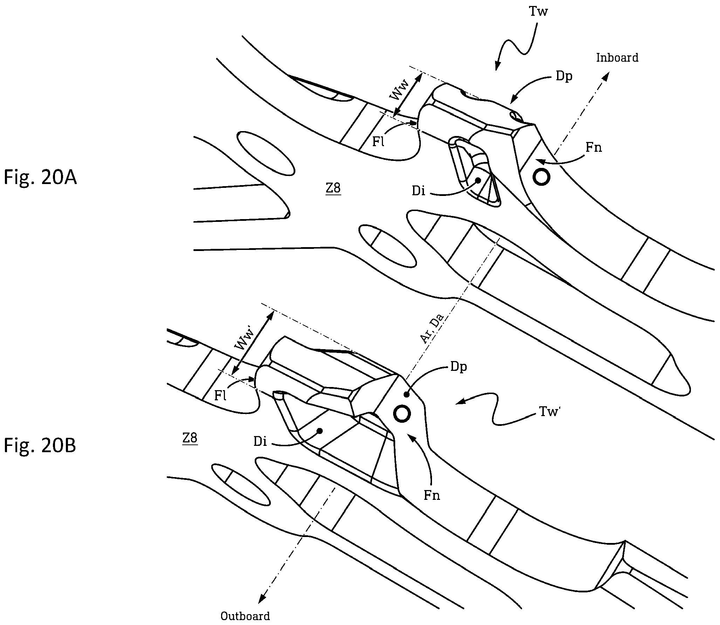

Fig. 19B zeigt einen breiten Ritzelzahn Tw' des Ritzels Z8 aus Fig. 19A in einer Schnittdarstellung gemäß dem in Fig. 19A angegebenen Schnittverlauf A-A. Fig. 20B zeigt den breiten Ritzelzahn Tw' des Ritzels Z8 aus Fig. 19A in einer Schrägansicht. Das mit dem breiten Ritzelzahn Tw' gemäß Fig. 19A+B und Fig. 20 verfolgte Prinzip und eine entsprechende Zahngeometrie findet sich auch an dem breiten Ritzelzahn Tw des kleinsten Ritzels Z12 in Fig. 10. Bei dem dortigen breiten Ritzelzahn Tw des Ritzels Z12 sind lediglich die Inboard/Outboard-Richtungen spiegelverkehrt vertauscht. Mit anderen Worten, bei dem dortigen breiten Ritzelzahn Tw des kleinsten Ritzels Z12 befindet sich die Einprägung Di auf der InboardSeite und die Auswölbung Dp auf der Outboard-Seite, was der Optimierung des Kettenlaufs speziell auf dem kleinsten Ritzel dient.

Auch bei dem Ritzel Z8 gemäß Fig. 19A, 19B und 20B stimmt die Dicke Tb des Ritzel-Grundmaterials wieder mit der Breite der schmalen Zähne Tn überein, während die Breite Ww' der breiten Zähne Tw' wieder durch Verformung beim Stanz-Pressen des Ritzels Z8 durch Materialverdrängung Di, Dp von der outboardseitigen Stirnfläche des Ritzels Z8 zur inboardseitigen Stirnfläche des Ritzels Z8 erzeugt ist.

Ein Vergleich der Zahnform des breiten Zahns Tw gemäß Fig. 20A (vgl. auch Fig. 18A-C) mit der Zahnform des breiten Zahns Tw' gemäß Fig. 20B (vgl. auch Fig. 19A+B) zeigt die unterschiedliche Anordnung und Formgebung insbesondere der outboardseitigen Einprägung Di, die zu einer entsprechend unterschiedlichen Form der inboardseitigen Auswölbung Dp an dem jeweiligen breiten Zahn Tw bzw. Tw' führt. Dies führt bei dem breiten Zahn Tw' gemäß Fig. 20B (vgl. auch Fig. 19A+B) insbesondere zu einer Breite Ww' des breiten Zahns Tw', welche erheblich größer ist als die Breite Ww des breiten Zahns Tw gemäß Fig. 20A (vgl. auch Fig. 18A-C).

Dies hängt damit zusammen, dass der breite Ritzelzahn Tw' gemäß Fig. 20B, welcher im Wesentlichen den breiten Ritzelzähnen Tw' gemäß Fig. 19A+B entspricht, eine erheblich großvolumigere und tiefere outboardseitige Einprägung Di aufweist als der breite Ritzelzahn Tw gemäß Fig. 20A, welcher im Wesentlichen dem breiten Ritzelzahn Tw gemäß Fig. 18A entspricht. Dementsprechend ist auch die inboardseitige Auswölbung Dp bei dem breiten Ritzelzahn Tw' gemäß Fig. 20B und gemäß Fig. 19A+B erheblich großvolumiger und breiter ausgebildet als bei dem breiten Ritzelzahn Tw gemäß Fig. 20A und Fig. 18A. Dasselbe ist erkennbar bei einem Vergleich zwischen dem breiten Ritzelzahn Tw' gemäß Fig. 20B, Fig. 19A+B mit den weiter oben beschriebenen breiten Ritzelzähnen Tw gemäß Fig. 18B, 18C.

Die vergleichsweise großvolumige und breite inboardseitige Auswölbung Dp wird bei dem breiten Ritzelzahn Tw' gemäß Fig. 19A+B und Fig. 20B durch die besondere Formgebung von Einprägung Di und Auswölbung Dp erreicht, die deutlich anhand einer Zusammenschau von Fig. 19A+B und Fig. 20B ersichtlich wird. Man erkennt, dass Einprägung Di und Auswölbung Dp bei dem breiten Ritzelzahn Tw' gemäß Fig. 19A+B und Fig. 20B die Nichtlastflanke Fn des jeweiligen Ritzelzahns fast vollständig in den Bereich der Materialverdrängung von Outboard nach inboard einschließen.

Hingegen befindet sich die Nichtlastflanke Fn bei den breiten Ritzelzähnen Tw gemäß Fig. 18A-C (ähnlich wie die Lastflanke Fl) entlang der hinterachs-axialen Richtung Da an einer unveränderten Grundposition innerhalb der Dicke Tb des Ritzel-Grundmaterials. Dies führt dazu, dass bei der Ausführungsform gemäß Fig. 19A+B und Fig. 20B nur eine deutlich kleinräumiger ausgebildete Verformung des Ritzel-Grundmaterials möglich ist.

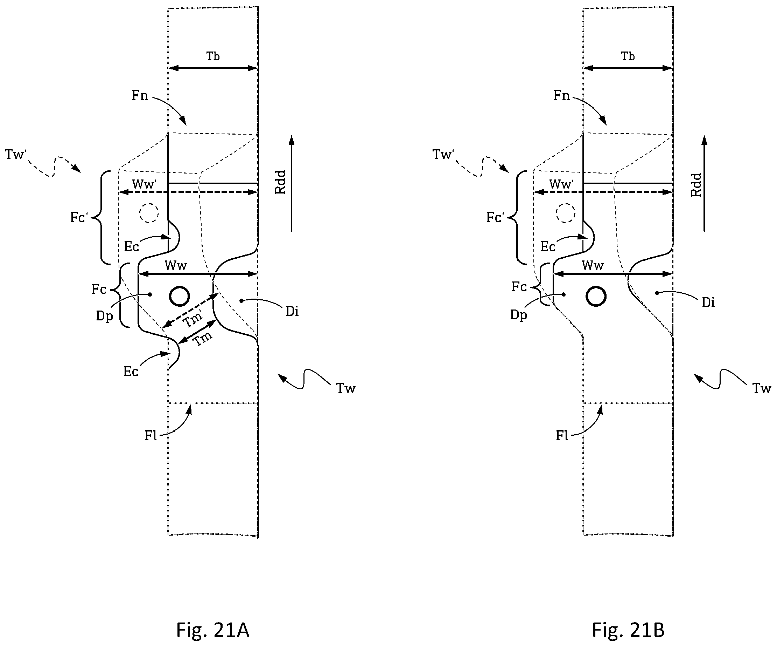

Letzteres geht auch nochmals aus Fig. 21A und Fig. 21B hervor. Fig. 21A zeigt eine grafische Überlagerung des breiten Zahns Tw gemäß Fig. 18A und Fig. 20A mit dem breiten Zahn Tw' gemäß Fig. 19A+B und Fig. 20B. Fig. 21B zeigt eine grafische Überlagerung des breiten Zahns Tw gemäß Fig. 18B mit dem breiten Zahn Tw' gemäß Fig. 19A+B und Fig. 20B.

Anhand Fig. 21A und Fig. 21B wird erkennbar, dass der breite Zahn Tw' gemäß Fig. 19A+B und Fig. 20B (in Fig. 21A und Fig. 21B jeweils strichliert gezeichnet) aufgrund der insbesondere in Fig. 20B gezeigten und in der zugehörigen Figurenbeschreibung weiter oben beschriebenen besonderen Gestaltung unter Einbezug der Nichtlastflanke Fn in die Einprägung Di eine erheblich größere Breite Ww' aufweist, bezogen auf die Dicke Tb des Ritzel-Grundmaterials, als dies bei den breiten Zähnen Tw gemäß Fig. 18A-C der Fall ist.

Gegenüber dem in Fig. 21A mit durchgezogener Linie gezeichneten breiten Zahn Tw (vgl. Fig. 18A) mit dessen Zahnbreite Ww weist der mit strichlierter Linie gezeichnete breite Zahn Tw' (vgl. Fig. 19A+B und Fig. 20B) eine erkennbar deutlich größere Breite Ww' auf. Analog gilt dies ebenso für den in Fig. 21B mit durchgezogene Linie gezeichneten breiten Zahn Tw (vgl. Fig. 18B). Gegenüber dem breiten Zahn Tw in Fig. 21A (durchgezogene Linie, siehe auch Fig. 18A und Fig. 20A) weist der breite Zahn Tw' (strichlierte Linie in Fig. 21A) auf der Seite der Lastflanke Fl zudem eine größere Materialstärke Tm' auf, im Vergleich zu der Materialstärke Tm des breiten Zahns Tw.

Auf diese Weise lassen sich somit durch ein Ritzel Z8 bzw. Zx mit breiten Zähnen Tw' gemäß Fig. 21A+B (vgl. Fig. 19A+B und Fig. 20B) besonders gute Kettenführungseigenschaften der breiten Zähne Tw' erreichen. Wie weiter oben insbesondere bei Fig. 11A+B beschrieben, sind die breiten Zähne Tw' zum Eingriff ausschließlich in die Außenlaschenzwischenräume Wco der Außenlaschen-Kettenglieder Lo vorgesehen.

Dank der Gestaltung der breiten Zähne Tw' gemäß Fig. 21A+B bzw. Fig. 19A+B und Fig. 20B wird die Kette somit zusätzlich zu dem Eingriff der schmalen Ritzelzähne Tn in den Innenlaschenzwischenraum Wci der Innenlaschen-Kettenglieder Li (vgl. Fig. 11A+B) auch durch einen engen und damit besonders wirksamen Führungseingriff in die Außenlaschenzwischenräume Wco der Außenlaschen-Kettenglieder Lo entlang der Ketten-Bewegungsrichtung Dmc (vgl. Fig. 1) geführt.

Dies gilt auch und insbesondere für den in Fig. 19A zeichnungsbezogen unten positionierten breiten Zahn Ts2', welcher sich bei dem dort dargestellten Ritzel Z8 mit 18 Zähnen in einem Überlappungsbereich von Outboard-Schaltgasse Co und Inboard-Schaltgasse Ci befindet. Dem Zahn Ts2' kommt als Stabilisierungszahn für den Kettenlauf eine besonders wichtige Ketten-Führungsaufgabe zu, da die den Zahn Ts2' umgebenden Ritzelzähne aufgrund der dort befindlichen Schaltgassen Ci, Co verschmälert oder sogar stark verschmälert sind. Die entsprechenden Zusammenhänge sind ausführlich auch weiter oben bei der Beschreibung zu Fig. 11A erläutert.

Die besonders wichtige Führungsaufgabe des Zahns Ts2' im Bereich der Schaltgassen Ci, Co liegt unabhängig davon vor, ob an dem Zahn Ts2' eine vergrößerte zahnübergreifende Kettenführungsabmessung Dcw1 verwirklicht ist (vgl. insbesondere Fig. 11 und zugehörige Beschreibung), oder ob es sich bei dem Zahn Ts2' um einen "normalen" breiten Zahn Tw bzw. Tw' handelt, dessen Breite Ww bzw. Ww' also mit der Breite Ww bzw. Ww' der anderen breiten Zähne Tw bzw. Tw' des Ritzels Z8 bzw. Zx übereinstimmt.

Neben der mit der Formgebung der breiten Zähne Tw' gemäß Fig. 19A+B, Fig. 20B und Fig. 21A+B (strichliert) verbundenen größeren Zahnbreite Ww' ist bei diesen breiten Zähnen Tw' auch die ebene Kontaktfläche Fc' erheblich größer als die ebene Kontaktfläche Fc bei den breiten Ritzelzähnen Tw gemäß Fig. 18A-C, Fig. 20A und Fig. 21A+B (durchgezogene Linien). Hierdurch wird der Werkzeugverschleiß bei der durch Stanzpressen erfolgenden Ritzelherstellung reduziert. Auch reduziert die bei den breiten Zähnen Tw' gemäß Fig. 19A+B, Fig. 20B und Fig. 21A+B (strichliert) nicht benötigte Umformung (vgl. Fig. 18A+B) der Nichtlastflankenseite Fn die Umformkräfte bei der Erzeugung der breiten Zähne Tw' mittels Einbringung der Einprägungen Di und dadurch Ausbildung der Auswölbungen Dp.

Um die seitliche Steifigkeit der breiten Zähne Tw' gemäß Fig. 19A+B, Fig. 20B und Fig. 21A+B (strichliert) im Lastfall weiter zu erhöhen, können in der Einprägung Di Versteifungsrippen beispielsweise in Form von Gegenprägungen Ec eingebracht werden, ähnlich wie weiter oben bezogen auf Fig. 18C beschrieben.

## Patentansprüche

1. Mehrfach-Ritzelanordnung (Ap) zur in Bezug auf eine Fahrrad-Hinterachse (Ar) drehmomentübertragenden Montage auf einer Fahrrad-Hinterrad-Antreibereinrichtung (Dd) mit einem am Außenumfang der Antreibereinrichtung (Dd) angeordneten Verzahnungs-Mitnahmeprofil (Pd), die Ritzelanordnung (Ap) umfassend eine Mehrzahl von Ritzeleinrichtungen mit jeweils zumindest einem Ritzel, darunter eine inboardseitige Abschlussritzeleinrichtung (Pti), ein in einem Verbindungsbereich (Ca) der inboardseitigen Abschlussritzeleinrichtung (Pti) mit der inboardseitigen Abschlussritzeleinrichtung (Pti) verbindbares erstes Ritzelcluster (Sc1) und eine outboardseitige Abschlussritzeleinrichtung (Pto),
**gekennzeichnet durch**
eine rotatorische Lagereinrichtung (Db) zur outboardseitig gegenüber der Antreibereinrichtung (Dd) drehbaren Lagerung des ersten Ritzelclusters (Sc1).

2. Ritzelanordnung (Ap) nach Anspruch 1,
**dadurch gekennzeichnet,**
**dass** die Lagereinrichtung (Db) durch eine Abstandseinheit gebildet ist, welche in einem auf der Antreibereinrichtung (Dd) montierten Zustand der Ritzelanordnung (Ap) zur Festlegung eines Relativabstands (Dal, Da2, Da3) in hinterachs-axialer Richtung (Da) zwischen zumindest zwei Ritzeleinrichtungen der Ritzelanordnung (Ap) eingerichtet ist.

3. Ritzelanordnung (Ap) nach Anspruch 1 oder 2,
**dadurch gekennzeichnet,**
**dass** die Lagereinrichtung (Db) zur Übertragung einer Montagespannkraft in hinterachs-axialer Richtung (Da) zwischen zumindest zwei Ritzeleinrichtungen der Ritzelanordnung (Ap) ausgebildet ist, wobei die Montagespannkraft in einem auf der Antreibereinrichtung (Dd) montierten Zustand der Ritzelanordnung (Ap) Teil eines geschlossenen, im Wesentlichen hinterachs-parallel verlaufenden Kraftflusses (Ff) durch die Antreibereinrichtung (Dd) und die Ritzelanordnung (Ap) ist.

4. Ritzelanordnung (Ap) nach Anspruch 3,
**dadurch gekennzeichnet,**
**dass** die Lagereinrichtung (Db) zur Festlegung eines Relativabstands (Da1) in hinterachs-axialer Richtung (Da) zwischen der inboardseitigen Abschlussritzeleinrichtung (Pti) und der outboardseitigen Abschlussritzeleinrichtung (Pto) sowie zur Übertragung der Montagespannkraft zwischen der inboardseitigen Abschlussritzeleinrichtung (Pti) und der outboardseitigen Abschlussritzeleinrichtung (Pto) ausgebildet ist.

5. Ritzelanordnung (Ap) nach einem der Ansprüche 2 bis 4,
**dadurch gekennzeichnet,**
**dass** die Lagereinrichtung (Db) zur Festlegung eines Relativabstands (Da2) in hinterachs-axialer Richtung (Da) zwischen der inboardseitigen Abschlussritzeleinrichtung (Pti) und einem outboardseitigen Ritzel (Z7, Z9) des ersten Ritzelclusters (Sc1) ausgebildet ist.

6. Ritzelanordnung (Ap) nach Anspruch 5,
**dadurch gekennzeichnet,**
**dass** die Lagereinrichtung (Db) zur Festlegung der Relativabstände (Dal, Da2, Da3) in hinterachs-axialer Richtung (Da) und zur Übertragung der Montagespannkräfte in hinterachs-axialer Richtung (Da) zwischen der inboardseitigen Abschlussritzeleinrichtung (Pti), der outboardseitigen Abschlussritzeleinrichtung (Pto) und dem outboardseitigen Ritzel (Z7, Z9) des ersten Ritzelclusters (Sc1) ausgebildet ist.

7. Ritzelanordnung (Ap) nach einem der Ansprüche 1 bis 6,
**dadurch gekennzeichnet,**
**dass** die Lagereinrichtung (Db) aus einem nichtmetallischen Werkstoff besteht.

8. Ritzelanordnung (Ap) nach einem der Ansprüche 1 bis 7,
**dadurch gekennzeichnet,**
**dass** die outboardseitige Abschlussritzeleinrichtung (Pto) ein weiteres Ritzelcluster (Sc2) umfasst.

9. Ritzelanordnung (Ap) nach Anspruch 8,
**dadurch gekennzeichnet,**
**dass** das weitere Ritzelcluster (Sc2) als im Wesentlichen einstückiges Modul ausgebildet ist.

10. Ritzelanordnung (Ap) nach Anspruch 8 oder 9,
**dadurch gekennzeichnet,**
**dass** das weitere Ritzelcluster (Sc2) an einem Innenumfang ein Eingriffsprofil (Pe) zum formschlüssig drehmomentübertragenden Eingriff in das Mitnahmeprofil (Pd) der Antreibereinrichtung (Dd) aufweist.

11. Ritzelanordnung (Ap) nach einem der Ansprüche 8 bis 10,
**gekennzeichnet durch**
eine zum Eingriff in ein outboardseitiges Innengewinde (Ti) der Antreibereinrichtung (Dd) eingerichtete Verschlussschraubeneinrichtung (Sd), wobei die Verschlussschraubeneinrichtung (Sd) zum Aufpressen des weiteren Ritzelclusters (Sc2) entlang einer hinterachs-axialen Richtung (Da) gegenüber der Lagereinrichtung (Db) auf die Antreibereinrichtung (Dd) eingerichtet ist dergestalt, dass zur Verbindung der Ritzelanordnung (Ap) und der Antreibereinrichtung (Dd) ein geschlossener, im Wesentlichen hinterachs-parallel verlaufender Kraftfluss (Ff) **durch** Antreibereinrichtung (Dd) und Ritzelanordnung (Ap) herstellbar ist.

12. Ritzelanordnung (Ap) nach einem der Ansprüche 8 bis 11,
**dadurch gekennzeichnet,**
**dass** das weitere Ritzelcluster (Sc2) zumindest ein Ritzel (Z12) umfasst, dessen Fußkreisdurchmesser (Dt) kleiner ist als der Außendurchmesser (Do) der Antreibereinrichtung (Dd) im Bereich des Mitnahmeprofils (Pd).

13. Ritzelanordnung (Ap) nach einem der Ansprüche 8 bis 12,
**dadurch gekennzeichnet,**
**dass** das weitere Ritzelcluster (Sc2) zumindest ein Ritzel (Z11, Z12) umfasst, dessen Ritzelmittelebene (Pc11, Pc12) in einem auf der Antreibereinrichtung (Dd) montierten Zustand der Ritzelanordnung (Ap) outboardseitig außerhalb einer axialen Endstirnfläche (Fe) der Antreibereinrichtung (Dd) verläuft.

14. Ritzelanordnung (Ap) nach einem der Ansprüche 1 bis 13,
**dadurch gekennzeichnet,**
**dass** die Ritzelanordnung (Ap) in einem auf der Antreibereinrichtung (Dd) montierten Zustand drei in hinterachs-axialer Richtung (Da) voneinander beabstandete axiale Abschnitte (Pa1, Pa2, Pa3) aufweist, die jeweils an einem Innenumfang ein Eingriffsprofil (Pe) zum formschlüssig drehmomentübertragenden Eingriff in das Mitnahmeprofil (Pd) der Antreibereinrichtung (Dd) aufweisen.

15. Ritzelanordnung (Ap) nach Anspruch 14,
**dadurch gekennzeichnet,**
**dass** in hinterachs-axialer Richtung (Da) zwischen dem ersten Ritzelcluster (Sc1) und dem weiteren Ritzelcluster (Sc2) eine weitere Ritzeleinrichtung (Pi) angeordnet ist, welche an einem Innenumfang ein Eingriffsprofil (Pe) zum formschlüssig drehmomentübertragenden Eingriff in das Mitnahmeprofil (Pd) der Antreibereinrichtung (Dd) aufweist.

16. Ritzelanordnung (Ap) nach dem Oberbegriff von Anspruch 1 oder nach einem der Ansprüche 1 bis 15,
**dadurch gekennzeichnet,**
**dass** die Zähne zumindest eines geradzahligen Ritzels (Z3) der Ritzelanordnung (Ap) in Umfangsrichtung alternierend einer schmalen Zahngruppe (Gtn) oder einer breiten Zahngruppe (Gtw) zugeordnet sind, wobei die Zähne der schmalen Zahngruppe schmale Zähne (Tn) sind, die schmäler sind als ein Innenlaschenzwischenraum (Wci) eines Innenlaschen-Kettenglieds (Li) einer der Ritzelanordnung (Ap) zugeordneten Fahrradkette (Cn), und wobei die breite Zahngruppe zumindest einen breiten Zahn (Tw) umfasst, der breiter ist als der Innenlaschenzwischenraum (Wci) des Innenlaschen-Kettenglieds (Li) und schmäler als ein Außenlaschenzwischenraum (Wco) eines Außenlaschen-Kettenglieds (Lo) der Fahrradkette (Cn).

17. Ritzelanordnung (Ap) nach Anspruch 16,
**dadurch gekennzeichnet,**
**dass** zumindest ein Ritzel (Z3) der Ritzelanordnung (Ap) im Bereich zumindest einer Outboard-Schaltgasse (Co) und/oder in einem der zumindest einen Outboard-Schaltgasse (Co) benachbarten Bereich, vorzugsweise in einem Bereich einer der Outboard-Schaltgasse (Co) benachbarten Inboard-Schaltgasse (Ci), zumindest einen der schmalen Zahngruppe (Gtn) zugeordneten Stabilisierungszahn (Ts1, Ts3) und/oder zumindest einen der breiten Zahngruppe (Gtw) zugeordneten Stabilisierungszahn (Ts2) aufweist, dessen inboardseitige Kettenführungsfläche (Giln, Gi2w, Gi3n) gegenüber der inboardseitigen Kettenführungsfläche (Gi0n, Gi0w) eines breitesten Zahns (Tn0, Tw0) derselben Zahngruppe (Gtn, Gtw) in Inboardrichtung übersteht dergestalt, dass die Kette (Cn) beim Lauf auf dem Ritzel (Z3) durch die inboardseitig überstehende inboardseitige Kettenführungsfläche (Giln, Gi2w, Gi3n) des zumindest einen Stabilisierungszahns (Ts1, Ts3) nach inboard ausgelenkt wird.

18. Baukastensystem zur Erzeugung von Mehrfach-Ritzelanordnungen (Ap) nach einem der Ansprüche 1 bis 17,
das Baukastensystem umfassend die zumindest drei modular austauschbaren Baugruppen "inboardseitige Abschlussritzeleinrichtung" (B1, Pti), "erstes Ritzelcluster" (B2, Sc1) und "outboardseitige Abschlussritzeleinrichtung" (B3, Pto), wobei zumindest eine Baugruppe einer Baugruppenfamilie mit zumindest zwei Mitgliedern zuordenbar ist und, unter Beibehaltung der übrigen Baugruppen, gegen ein anderes Mitglied der Baugruppenfamilie z.B. aus anderem Material oder von anderer Fertigungsqualität austauschbar ist,
**gekennzeichnet durch**
eine rotatorische Lagereinrichtung (Db) zur outboardseitig gegenüber der Antreibereinrichtung (Dd) drehbaren Lagerung des ersten Ritzelclusters (Sc1), wobei die Lagereinrichtung (Db) **durch** eine Abstandseinheit gebildet ist, welche in einem auf der Antreibereinrichtung (Dd) montierten Zustand der Mehrfach-Ritzelanordnung (Ap) zur Festlegung der Relativabstände (Dal, Da2, Da3) in hinterachs-axialer Richtung (Da) und zur Übertragung der Montagespannkräfte in hinterachs-axialer Richtung (Da) zwischen den Baugruppen (B1, B2, B3) eingerichtet ist.

19. Baukastensystem nach Anspruch 18,
**gekennzeichnet durch**
die Merkmale der Ritzelanordnung (Ap) nach einem der Ansprüche 1 bis 17.
